# EUROPEAN PATENT APPLICATION

(11) **EP 4 700 098 A1**
(43) Date of publication of application: **25.02.2026**
(21) Application number: 24196100.2
(22) Date of filing: 23.08.2024
(51) Int. Cl.: C09D 191/00, C08L 83/10

(54) **HIGH-SOLIDS TRIGLYCERIDE OIL BASED WOOD COATING COMPOSITIONS**

(71) Applicant: SPSV B.V., 6041LE Roermond (NL)
(72) Inventor:
(74) Representative: Gevers Patents

(57) **Abstract**

The present invention relates to an improved high-solids wood coating composition wherein said high-solids wood coating composition comprises, relative to the total weight of said high-solids wood coating composition, from 60.00 to 99.00 weight percentage of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 30.00 to 85.00 wt. % of at least one fatty acid residue having at least three conjugated double bonds; from 0.01 to 2.00 weight percentage of at least one metal-based drying agent; and from 0.75 to 30.00 weight percentage of at least one aminosilane compound [compound (S), herein after] according to general Formula (I) or according to general Formula (II), wherein said high-solids wood coating composition has a total solids content equal to or greater than 85.00 wt. %, relative to the total weight of said high-solids wood coating composition, and wherein the total solids content of said high-solids wood coating composition is measured according to the standard ASTM D2369 - 20.

## Description

### FIELD OF THE INVENTION

The present invention relates to high-solids triglyceride oil based wood coating compositions for the preservation and the protection of wood products, said high-solids triglyceride oil based wood coating compositions providing a high dirt pickup resistance (DPUR), in particular after 24 hours, while at least maintaining good film formation properties, i.e. without jeopardizing film formation, and mechanical properties in terms of hardness, of the resulting coated layers when wood products are treated with the wood coating compositions, and which do not require the combinatorial use of one or more isocyanate-based accelerators. The invention further relates to methods for manufacturing of the same, to methods for treating wood products wherein said wood products are treated with the high-solids triglyceride oil based wood coating compositions, to coated layers obtained by said methods for treating wood products wherein said wood products are treated with the high-solids triglyceride oil based wood coating compositions, and to a kit of parts comprising at least two complementary parts which are configured to be mixed so as to formulate the high-solids triglyceride oil based wood coating compositions.

### BACKGROUND OF THE INVENTION

Wood, as a natural hybrid composite material made of biopolymers such as cellulose, lignin and hemicelluloses, represents a versatile and widely exploited renewable resource for indoor and outdoor applications such as building, construction, and living. It has been used by mankind since thousands of years. Even today wooden furniture, floorings and articles of daily use experience great popularity. Wood provides high versatility and stability in combination with excellent workability, but, on the other hand, wood is sensitive to external influences such as dirt pickup, abrasion, humidity, temperature variations, or germs. For instance, solid hardwood flooring and engineered wood flooring have long been a highly desirable house feature in the sense of warmth, tradition, and durability. However, hardwood floors are particularly prone to damage from accumulated foot traffic, wear and tear, and moisture. Therefore, for many years, wood coating compositions are applied to hardwood floors in order to preserve and protect the wood from deterioration, scratches, spills and stains, moisture, and the wear and tear caused by foot traffic, while maximizing, when desired, the appearance of the hardwood floors. Nowadays, many different wood coating compositions for solid hardwood floorings and engineered wood floorings exist, each of those wood coating compositions thereby demonstrating one or more of the properties such as dirt pickup resistance (DPUR), water repellency, abrasion resistance, scratch resistance, matting, antiblocking, and slip resistance. Whereupon each wood coating has to meet individual requirements depending on the use of the wood product. This confronts wood coating formulators consistently with new challenges.

A wide range of wood coating compositions are currently available on the market under a variety of names including varnish, lacquer, wood oil, hardwax oil, wood stain, Danish oil, trim paint, wood finish, etc. In general, these wood coating compositions are typically categorized into three different types of wood coating compositions based on the presence or the type of solvent used to formulate said wood coating compositions. In this context, a distinction can be made between i) waterborne wood coating compositions, ii) organic solvent based wood coating compositions, and iii) high-solids wood coating compositions that are essentially free of volatile content, i.e. these latter wood coating compositions are essentially free of water and one or more organic solvents.

Waterborne wood coating compositions are aqueous emulsions or aqueous dispersions of one or more of, for example, acrylic polymers, polyurethanes, alkyd resins, drying oils, etc. These waterborne wood coating compositions may contain more than 30 % by weight of water, and often as much as 70 % by weight of water. In this respect, reference can be made to the two-component coating composition system as disclosed in WO 2019/004922 A1, said coating composition system containing a second coating composition comprising a waterborne dispersion comprising polyurethanes, polyacrylates, and polyurethane-acrylate hybrids. Reference may also be made to the disclosure of WO 2006/109432 A1, which relates to a two-component curable aqueous composition comprising an aqueous emulsion of a polyurethane alkyd resin. Depending on the chemical formulation, waterborne wood coating compositions are characterized by a wide range of different technical properties, in particular technical properties such as appearance, feel, mechanical and/or chemical resistance, etc. However, due to the presence of significant amounts of water, the application of waterborne coating compositions to water-sensitive wood types or wood species may result in undesirable grain raising (water popping or grain-popping). Grain raising, i.e. the lifting of wood fibers individually or in bundles when water is applied to wood surfaces, is one reason why some companies are (more) reluctant to finish wood products with waterborne coatings. Indeed, wood grain raising is an important issue associated with the use of water-based stains. When a waterborne wood coating composition is used to coat wood surfaces, fibers may stick up or protrude from the wood, causing a dull appearance and a rough surface of the paint finish. It is mainly caused by the swelling of the wood fibers due to the absorption of water. Therefore, after applying a waterborne wood coating composition to a wood surface, additional processing steps such as sanding are often required to achieve a smooth wood surface after coating. Oak, a popular choice for solid hardwood flooring, is particularly susceptible or prone to grain raising when being coated with waterborne wood coating compositions.

Organic solvent based wood coating compositions contain binder resins, such as alkyd resins. These organic solvent based wood coating compositions contain at least 10 % by weight of one or more organic solvents, and often as much as 40 % by weight of one or more organic solvents. As organic solvent based wood coating compositions do not contain water, they do not cause grain raising when applied to wood products to coat wood surfaces. Although organic solvent based wood coating compositions are still widely used today, they are under increasing pressure due to health, safety, and environmental issues and perspectives associated with the use of significant amounts of organic solvents. Indeed, organic solvent evaporation makes a large contribution to the emission of volatile organic compounds (VOC) during the physical drying of organic solvent based coatings.

High-solids wood coating compositions are essentially free of volatile content, i.e. these wood coating compositions are essentially free of water and one or more organic solvents, such as often less than 5 % by weight and typically less than 0.5% by weight of volatile content. The emission of volatile organic compounds (VOC) as a source of urban air pollution can be greatly decreased by using solvent-free polymerizable resins. As there is no physical evaporation of water or organic solvents when applied to wood surfaces, the final mechanical properties of the resulting coatings depend solely on the occurrence of chemical crosslinking at room temperature after application. In addition, as there is no dilution through the presence of water or organic solvents, the reactive components of these high-solids wood coating compositions must be of sufficiently low viscosity to allow application. Well-known and one of the oldest examples of such high-solids wood coating compositions are naturally occurring unsaturated triglyceride drying oils, such as linseed oil or tung oil, which have been used for coating applications since prehistoric times. These unsaturated triglyceride drying oils are known to chemically crosslink in the presence of and by reaction with atmospheric oxygen to form a solid coated layer. Triglyceride drying oils such as linseed oil, tung oil, or poppy seed oil, are highly unsaturated and polymerize when exposed to molecular oxygen through a free-radical chain mechanism known as autoxidation. Autoxidation follows a free radical chain mechanism, which includes lipid radical formation (initiation) and propagation through their reaction with oxygen to form lipid peroxyl radicals which can abstract hydrogen atoms from lipids, regenerating a lipid radical. Ultimately, termination of the process occurs through radial-radical reactions resulting in crosslinking. At room temperature, the autoxidation reaction of drying oils often occurs in the presence of one or more added metal-based drying agents which increase the reaction rate by reducing the activation energy. Therefore, the degree of unsaturation in the fatty acid residues of triglyceride seed oil based wood compositions is critical to the autoxidative drying or crosslinking process.

Although these triglyceride seed oil based wood coating compositions have thus been used for centuries for application to wood products, particularly as protective coatings or finishes for hardwood floorings, with the rise of modern chemistry they have been largely replaced as the primary means of wood protection by organic solvent based alkyd resins due to their superior mechanical properties (such as hardness), faster drying or curing, and better dirt pickup resistance (DPUR). As alkyd resins are generally characterized by viscosities that are too high to be applied to wood products by conventional coating methods such as a polishing machine, roller or brush, significant amounts of one or more organic solvents are required to achieve a workable viscosity. Although organic solvent based wood coating compositions containing alkyd resins are still popular today for coating wood products, particularly hardwood floorings, there has been a significant move away from solvent based wood coating compositions over the last two decades due to health, safety, and environmental concerns. Some manufacturers then turned their attention to waterborne wood coating compositions containing aqueous emulsions or aqueous dispersions of one or more synthetic resins. Although these waterborne wood coating compositions can be tuned for good mechanical properties when applied to wood products, the resulting waterborne finishes suffer from grain raising, as described above, and short open time and sensitivity to overlap, making them more difficult to apply than organic solvent based wood coating compositions.

In recent decades, triglyceride seed oil based wood coating compositions have regained popularity due to their biobased and renewable properties to counteract the above-described negative aspects associated with organic solvent based wood coating compositions and the specific disadvantages and difficulties of waterborne wood coating compositions. However, when looking at the current market of wood coating compositions, one will notice that most triglyceride seed oil based products are aimed at the wood protection of furniture, cutting board, artwork, etc., i.e. applications where the property of dirt pickup resistance (DPUR) due to foot traffic is less or not at all relevant. Then, for coating hardwood floorings two-component triglyceride seed oil based wood coating compositions have been developed. These two-component triglyceride seed oil based wood coating compositions remain by far the most popular hardwood floor coating that is formatted with triglyceride drying oils as the main component on the market today. They consist of a first A component based on a triglyceride drying seed oil and a second B component based on an aliphatic polyisocyanate, such as trimers of hexamethylene diisocyanate. Mixing the A and B components prior to application to wood products significantly reduces curing times and improves dirt pickup resistance (DPUR), thereby resulting in a durable wood coating that can often be applied to wood surfaces, in particular hardwood floorings, in a single layer. Although the combinatorial use of isocyanate-based accelerators in the application of wood coating compositions is still widely used today, it is expected that the use of isocyanates will no longer be the way to go in the (near) future due to the health, safety, and environmental issues and perspectives and increasing regulatory pressure associated with the use of isocyanates.

Indeed, in addition to the challenges associated with crosslinking/curing speed of triglyceride seed oil based wood coating compositions, such as the naturally occurring unsaturated triglyceride drying oils linseed oil and tung oil, the aspect of dirt pickup resistance (DPUR) remains an important but often ignored and unexplored property of these drying oils. Recent developments in wood coating compositions have indeed heightened the need for superior or improved dirt resistant coatings for flooring applications. Improved dirt pickup resistant coatings can be achieved by a variety of measures as reported in various literature and patent publications, such as including one or more additional surface treatments of the coatings, an increase in the glass transition temperature (T_{g}) of the coating, an increase in the crosslink density of the coating, a decrease in the surface energy of the coating, surface roughness of the coating, etc. Indeed, the fouling of coating surfaces by dirt is no simple matter. The process is complex, dynamic, and varies in length and time. It also includes a range of confounding particle transport, attachment, and release mechanisms. The factors that influence the tendency of coatings to pick up dirt are varied and complex and are based on different aspects of particle and surface adhesion science. While the process is thus complicated and influenced by many variables, strategic, multiscale testing and analysis combined with particle and surface science fundamentals can be used to isolate the dominant mechanisms, as described by Brown. S. C. et al. CoatingsTech 2020 (June), Vol. 17, No. 6, entitled 'Towards a Comprehensive Understanding of Dirt Pickup Resistance*'.*

While the exact mechanism of dirt pickup resistance (DPUR) of triglyceride seed oil based wood coating compositions, such as the naturally occurring unsaturated triglyceride drying oils linseed oil and tung oil, thus remains largely unknown, simple experiments have already demonstrated the inferior or poor performance in terms of dirt pickup resistance (DPUR) of these triglyceride seed oil based wood coating compositions compared to organic solvent based alkyd resins and to the two-component combination systems of drying oils and isocyanate-based accelerators (i.e. A and B components). Indeed, while on the one hand a significant amount of dirt adheres to wood surfaces treated with triglyceride seed oil based wood coating compositions, on the other hand organic solvent based alkyd resins and the two-component combination systems of drying oils and isocyanate-based accelerators (i.e. A and B components) generally show better dirt pickup resistance (DPUR). However, as explained above, the latter either contain significant amounts of organic solvents for viscosity reasons, which contribute to unwanted VOC emissions, or require the use of isocyanates, which raise health, safety, and environmental concerns and are under increasing regulatory pressure.

Therefore, it is expected that there will be a strong market demand for high-solids triglyceride seed oil based wood coating compositions, such as the naturally occurring unsaturated triglyceride drying oils linseed oil and tung oil, with improved dirt pickup resistance (DPUR) and which do not require the combinatorial use of one or more isocyanate-based accelerators.

In view of all the above, there remains a continuous need for improved high-solids triglyceride oil based wood coating compositions for the preservation and the protection of wood products, said improved coating compositions having a high dirt pickup resistance (DPUR), in particular after 24 hours, while at least maintaining good film formation properties, i.e. without jeopardizing film formation, and mechanical properties in terms of hardness upon application of said improved coating compositions to wood products and thereby resulting in coated layers of said improved coating compositions on said wood products, and which do not require the combinatorial use of one or more isocyanate-based accelerators.

### SUMMARY OF THE INVENTION

The inventors have now surprisingly found that it is possible to provide an improved high-solids wood coating composition fulfilling the above-mentioned needs.

Thus, there is now provided a high-solids wood coating composition [composition (C), herein after] comprising, relative to the total weight of the composition (C):
- from 60.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 30.00 to 85.00 wt. % of at least one fatty acid residue having at least three conjugated double bonds;
- from 0.01 to 2.00 wt. % of at least one metal-based drying agent; and
- from 0.75 to 30.00 wt. % of at least one aminosilane compound [compound (S), herein after] according to general Formula (I) 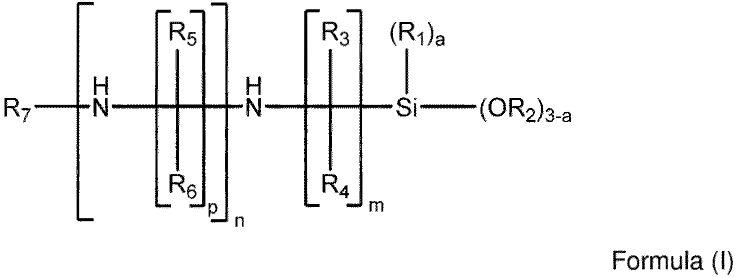 or according to general Formula (II) 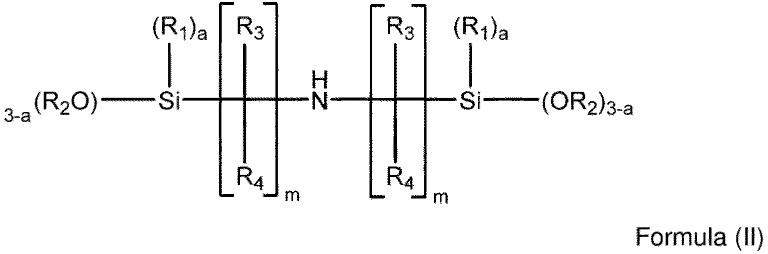 wherein
   - each of a is 0, 1, or 2;
   - each of m is 1, 2, 3, 4, 5, or 6;
   - each of n is 0, 1, 2, 3, or 4;
   - each of p is 1, 2, 3, 4, 5, or 6;
   - each of R₁ is independently selected from the group consisting of C₁₋₆ alkyl, C₂₋₆ alkenyl, C₃₋₆ cycloalkyl, and C₆₋₁₀ aryl, and wherein said C₁₋₆ alkyl, C₂₋₆ alkenyl, C₃₋₆ cycloalkyl, and C₆₋₁₀ aryl are optionally substituted with one or more substituents independently selected from halo, or CF₃;
   - each of R₂ is independently selected from the group consisting of hydrogen, C₁₋₆ alkyl, C₁₋₆ alkoxyalkyl, C₂₋₆ alkenyl, C₂₋₆ alkenyloxyalkyl, C₃₋₆ cycloalkyl, C₃₋₆ heterocyclyl, C₆₋₁₀ aryl, aralkyl, -CORs, -N=CR₉R₁₀, and -N=CR₁₁, and wherein each of R₈, R₉, and R₁₀, equal to or different from each other and at each occurrence, is independently C₁₋₄ alkyl, and wherein each of R₁₁ is a bivalent C₂₋₅ alkyl radical such that -N=CR₁₁ is a cycloalkyl; and wherein said C₁₋₆ alkyl, C₁₋₆ alkoxyalkyl, C₂₋₆ alkenyl, C₂₋₆ alkenyloxyalkyl, C₃₋₆ cycloalkyl, C₃₋₆ heterocyclyl, C₆₋₁₀ aryl, and aralkyl are optionally substituted with one or more substituents independently selected from halo, or CF₃;
   - each of Rs, R₄, R₅, and R₆, equal to or different from each other and at each occurrence, is independently selected from hydrogen, or C₁₋₄ alkyl, and wherein said C₁₋₄ alkyl is optionally substituted with one or more substituents independently selected from halo, or CF₃;
   - each of R₇ is independently selected from the group consisting of hydrogen, C₁₋₆ alkyl, C₁₋₆ alkoxyalkyl, C₂₋₆ alkenyl, C₂₋₆ alkenyloxyalkyl, C₃₋₆ cycloalkyl, C₃₋₆ heterocyclyl, C₆₋₁₀ aryl, and aralkyl, and wherein said C₁₋₆ alkyl, C₁₋₆ alkoxyalkyl, C₂₋₆ alkenyl, C₂₋₆ alkenyloxyalkyl, C₃₋₆ cycloalkyl, C₃₋₆ heterocyclyl, C₆₋₁₀ aryl, and aralkyl are optionally substituted with one or more substituents independently selected from halo, or CF₃,
   wherein the composition (C) has a total solids content equal to or greater than 85.00 wt. %, relative to the total weight of the composition (C), and wherein the total solids content of the composition (C) is measured according to the standard ASTM D2369 - 20.

In another aspect, the present invention further provides a method for the manufacturing of the composition (C), as detailed above.

In another aspect, the present invention further provides a method for the treatment of a surface or at least part of a surface of a wood product wherein said wood product is treated with the composition (C), as detailed above.

In another aspect, the present invention further provides a coated layer obtained by the method for the treatment of the surface or at least part of the surface of the wood product wherein said wood product is treated with the composition (C), as detailed above.

In another aspect, the present invention further provides a kit of parts comprising at least two complementary parts, said at least two complementary parts being a first complementary part and a second complementary part and optionally one or more further complementary parts, wherein said at least two complementary parts are configured to be mixed so as to formulate the composition (C), as detailed above, and wherein the constituent components of the composition (C) are divided over said at least two complementary parts.

### DETAILED DESCRIPTION

Within the context of the present invention, the term "comprising" should not be interpreted as being restricted to the means listed thereafter; it does not exclude other components, elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

As used herein, the terms "optional" or "optionally" means that a subsequently described event or circumstance can or cannot occur, and that the description includes instances where said event or circumstance occurs and instances where it does not.

The inventors have surprisingly found that by using in a composition (C) of the present invention a defined amount of a triglyceride oil composition, as detailed above, wherein the triglyceride oil composition comprises a defined amount of at least one fatty acid residue having at least three conjugated double bonds, as detailed above, in combination with a defined amount of at least one metal-based drying agent, as detailed above, and a defined amount of at least one aminosilane compound, as detailed above, the defined amount of the triglyceride oil composition, in particular the defined amount of the at least one fatty acid residue having at least three conjugated double bonds comprised in said triglyceride oil composition, now synergistically interacts with the defined amount of the at least one aminosilane compound, thereby resulting in a composition (C) having a high dirt pickup resistance (DPUR) after 24 hours, while at least maintaining good film formation properties, i.e. without jeopardizing film formation, and mechanical properties in terms of hardness upon application of said composition (C) to wood products and thereby resulting in coated layers of said composition (C) on said wood products, as demonstrated in the experimental section. In particular, in combination with a high dirt pickup resistance (DPUR) after 24 hours and good film formation properties, the inventors have surprisingly found that when the composition (C) of the present invention is applied to wood products and thereby resulting in coated layers of said composition (C) on said wood products, a sufficiently high hardness can be readily obtained within a few days of application, or even after 24 hours of application, and without any further need or use of one or more isocyanate-based accelerators which are known to those skilled in the art of wood coating compositions to further improve the drying properties and kinetics of wood coating compositions (i.e. thereby obtaining a reduced drying time or an accelerated drying in presence of such one or more isocyanate-based accelerators).

Within the context of the present invention, the term "triglyceride oil composition" is intended to refer to a liquid unsaturated triglyceride fatty oil product from vegetable or animal origin or a combination of both, natural or synthetic, which will be oxidatively cross-linked and hardened/solidified by reaction with atmospheric oxygen.

In particular, the term "triglyceride oil composition" is intended to refer to the combination of all of triglycerides, diglycerides, and monoglycerides present in the composition (C) of the present invention. The triglyceride oil composition, as comprised in the composition (C), as detailed above, may comprise monoglycerides and/or diglycerides, but these, when present, will typically be present in substantially lower amounts or smaller quantities than the triglycerides. While the triglyceride oil composition is essentially consisting of glycerides, i.e. the combination of all of triglycerides, diglycerides, and monoglycerides, the triglyceride oil composition may possibly also comprise other components, such as free fatty acids, phospholipids, unsaponifiable matter, and glycerin.

The terms triglycerides, diglycerides, and monoglycerides are known terms to a person skilled in the art. Within the context of the present invention, the terms "triglycerides", "diglycerides", and "monoglycerides" respectively denote fatty acid esters of glycerol (i.e. 1 ,2,3-propanetriol), wherein three, two, or one hydroxyl groups of glycerol are esterified with three, two, or one fatty acids, while the remaining hydroxyl groups, if any, remain unsubstituted. In other words, the terms "triglycerides", "diglycerides", and "monoglycerides" respectively denote fatty acid esters of glycerol (i.e. 1 ,2,3-propanetriol), wherein three, two, or one hydroxyl groups of glycerol are replaced by three, two, or one fatty acid residues via esterification, while the remaining hydroxyl groups, if any, remain unsubstituted.

Within the context of the present invention, it is further understood that the term "triglyceride oil composition" as used herein excludes the use of one or more alkyd resins. Alkyd resins are known to those skilled in the art of wood coating compositions and denote polyesters obtained by subjecting a raw material composition to one or more polycondensation reactions (esterification and/or transesterification reactions), said raw material composition comprising i) at least one polycarboxylic acid component, such as orthophthalic acid or isophthalic acid or adipic acid, or the corresponding cyclic carboxylic anhydride of said at least one polycarboxylic acid component, such as phthalic anhydride; ii) at least one polyhydric alcohol or polyol component, such as glycerol, ethylene glycol, trimethylolpropane, sorbitol, or pentaerythritol; and iii) at least one monocarboxylic fatty acid component or the corresponding triglyceride of said monocarboxylic fatty acid component.

In certain embodiments of the composition (C) of the present invention, the triglyceride oil composition, as detailed above, comprises a total amount of monoglycerides and diglycerides of less than 15.00 wt. %, preferably less than 10.00 wt. %, more preferably less than 7.00 wt. %, even more preferably less than 5.00 wt. %, relative to the total weight of the triglyceride oil composition. Method ISO 18395:2005 is a suitable method for the quantitative determination of each of the glyceride types.

In certain embodiments of the composition (C) of the present invention, the triglyceride oil composition, as detailed above, comprises a total amount of free fatty acids of less than 5.00 wt. %, preferably less than 3.00 wt. %, more preferably less than 2.00 wt. %, even more preferably less than 1.50 wt. %, relative to the total weight of the triglyceride oil composition. Method ISO 18395:2005 is a suitable method for the quantitative determination of each of the glyceride types.

In certain embodiments of the composition (C) of the present invention, the triglyceride oil composition, as detailed above, comprises a total amount of triglycerides of greater than 80.00 wt. %, preferably greater than 87.00 wt. %, more preferably greater than 91.00 wt. %, even more preferably greater than 93.50 wt. %, relative to the total weight of the triglyceride oil composition. Method ISO 18395:2005 is a suitable method for the quantitative determination of each of the glyceride types.

As said, according to the present invention, the triglyceride oil composition, as detailed above and as comprised in the composition (C), comprises, relative to the total weight of all fatty acid residues in the triglyceride oil composition, from 30.00 to 85.00 wt. % of at least one fatty acid residue having at least three conjugated double bonds (wherein the three conjugated double bonds have the simplified formula -C=C-C=C-C=C-).

Preferably, the at least one fatty acid residue having at least three conjugated double bonds is further characterized by having from 16 to 24 carbon atoms. More preferably, the at least one fatty acid residue having at least three conjugated double bonds is further characterized by having from 16 to 20 carbon atoms.

Within the context of the present invention, the term "conjugated" in connection with a multiple unsaturation is known to a person skilled in the art of organic chemistry. The term refers to the presence of two or more carbon-carbon double bonds (i.e. C=C bonds) that are covalently linked to each other via a single carbon-carbon bond. In other words, both carbon atoms of a single covalent carbon-carbon bond are covalently attached to a further carbon atom through a double bond. A conjugated system, in its simplest form, can be depicted as -C=C-C=C-.

Within the context of the present invention, the expression "at least one fatty acid residue having at least three conjugated double bonds" is intended to denote one or more than one fatty acid residue having at least three conjugated double bonds. Mixtures of fatty acid residues having at least three conjugated double bonds can also be used for the purpose of the invention.

In the rest of the text, the expression "at least one fatty acid residue having at least three conjugated double bonds" is understood, for the purposes of the present invention, both in the plural and the singular form, that is to say the triglyceride oil composition, and hence the composition (C) of the present invention comprising said triglyceride oil composition, as detailed above, may comprise one or more than one fatty acid residue having at least three conjugated double bonds.

Within the context of the present invention, the expression "wherein the triglyceride oil composition comprises, relative to the total weight of all fatty acid residues in the triglyceride oil composition, from 30.00 to 85.00 wt. % of at least one fatty acid residue having at least three conjugated double bonds" refers either to the amount of fatty acid residue having at least three conjugated double bonds when the triglyceride oil composition comprises only one fatty acid residue having at least three conjugated double bonds, or to the sum of the amounts of fatty acid residues having at least three conjugated double bonds when the triglyceride oil composition comprises more than one fatty acid residue having at least three conjugated double bonds. This being said, it means that it is necessary that, when more than one fatty acid residue having at least three conjugated double bonds is present in the triglyceride oil composition, and hence in the composition (C) of the present invention comprising said triglyceride oil composition, as detailed above, then it is the sum of the amounts of each of said fatty acid residue having at least three conjugated double bonds that ranges from 30.00 to 85.00 wt. %, relative to the total weight of all fatty acid residues in the triglyceride oil composition.

Fatty acid residues, such as fatty acid residues having from 16 to 24 carbon atoms, or from 16 to 20 carbon atoms, having at least three conjugated double bonds are known in the art. Non-limiting examples of suitable fatty acid residues having at least three conjugated double bonds notably include fatty acid residues of α-eleostearic acid ((9*Z*,11*E*,13*E*)-octadeca-9,11,13-trienoic acid); β-eleostearic acid ((9*E*,11*E*,13*E*)-octadeca-9,11,13-trienoic acid); α-calendic acid ((8*E*,10*E*,12*Z*)-octadeca-8,10,12-trienoic acid); β-calendic acid ((8*E*,10*E*,12*E*)-octadeca-8,10,12-trienoic acid); punicic acid ((9*Z*,11*E*,13*Z*)-octadeca-9,11,13-trienoic acid); α-licanic acid (4-oxo-(9*Z*,11*E*,13*E*)-octadeca-9,11,13-trienoic acid or 4-oxo-α-eleostearic acid); jacaric acid ((8*Z*,10*E*,12*Z*)-octadeca-8,10,12-trienoic acid); catalpic acid ((9*E*,11*E*,13*Z*)-octadeca-9,11,13-trienoic acid); α-parinaric acid (9*Z*,11*E*,13*E*,15*Z*-octadeca-9,11,13,15-tetraenoic acid); and β-parinaric acid (9*E*,11*E*,13*E*,15*E*-octadeca-9,11,13,15-tetraenoic acid).

According to a preferred embodiment of the composition (C) of the present invention, the at least one fatty acid residue as comprised in the triglyceride oil composition, as detailed above, said at least one fatty acid residue having at least three conjugated double bonds, is a conjugated triene fatty acid residue, also known in the art, see for instance the introduction section of Takuji Tanaka et al. Int. J. Mol. Sci. 2011, 12, 7495 - 7509, via the synonymous designation conjugated trienoic fatty acid residue.

Conjugated triene fatty acid residues, or synonymously conjugated trienoic fatty acid residues, are known in the art. Non-limiting examples of suitable conjugated triene fatty acid residues for use in the triglyceride oil composition, as detailed above, notably include fatty acid residues of α-eleostearic acid ((9*Z*,11*E*,13*E*)-octadeca-9,11,13-trienoic acid); β-eleostearic acid ((9*E*,11*E*,13*E*)-octadeca-9,11,13-trienoic acid); α-calendic acid ((8*E*,10*E*,12*Z*)-octadeca-8,10,12-trienoic acid); β-calendic acid ((8*E*,10*E*,12*E*)-octadeca-8,10,12-trienoic acid); punicic acid ((9*Z*,11*E*,13*Z*)-octadeca-9,11,13-trienoic acid); α-licanic acid (4-oxo-(9*Z*,11*E*,13*E*)-octadeca-9,11,13-trienoic acid or 4-oxo-α-eleostearic acid); jacaric acid ((8*Z*,10*E*,12*Z*)-octadeca-8,10,12-trienoic acid); and catalpic acid ((9*E*,11*E*,13*Z*)-octadeca-9,11,13-trienoic acid).

According to a more preferred embodiment of the composition (C) of the present invention, the at least one fatty acid residue as comprised in the triglyceride oil composition, as detailed above, said at least one fatty acid residue having at least three conjugated double bonds, is a conjugated triene fatty acid residue selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9,11,13-trienoic acid), α-licanic acid (4-oxo-(9*Z*,11*E*,13*E*)-octadeca-9,11,13-trienoic acid or 4-oxo-α-eleostearic acid), jacaric acid ((8*Z*,10*E*,12*Z*)-octadeca-8,10,12-trienoic acid), and catalpic acid ((9*E*,11*E*,13*Z*)-octadeca-9,11,13-trienoic acid); preferably selected from the group consisting of fatty acid residues of α-eleostearic acid ((9*Z*,1*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9,11,13-trienoic acid), and α-licanic acid (4-oxo-(9*Z*,11*E*,13*E*)-octadeca-9,11,13-trienoic acid or 4-oxo-α-eleostearic acid); more preferably selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), and β-calendic acid ((8*E*,10*E*,12*E*)-octadeca-8,10,12-trienoic acid); most preferably selected from fatty acid residues of α-eleostearic acid ((9*Z*,11*E*,13*E*)-octadeca-9,11,13-trienoic acid) or β-eleostearic acid ((9*E*,11*E*,13*E*)-octadeca-9,11,13-trienoic acid).

As said above, according to the present invention, in the composition (C), as detailed above, the amount of the at least one fatty acid residue having at least three conjugated double bonds as comprised in the triglyceride oil composition, as detailed above, is from 30.00 to 85.00 wt. %, relative to the total weight of all fatty acid residues in the triglyceride oil composition.

Advantageously, in the composition (C), as detailed above, the amount of the at least one fatty acid residue having at least three conjugated double bonds as comprised in the triglyceride oil composition, as detailed above, relative to the total weight of all fatty acid residues in the triglyceride oil composition, is equal to or greater than 40.00 wt. %, preferably equal to or greater than 45.00 wt. %, more preferably equal to or greater than 50.00 wt. %, even more preferably equal to or greater than 55.00 wt. %, yet even more preferably equal to or greater than 60.00 wt. %.

It is further understood that, in the composition (C), as detailed above, the upper limit of the amount of the at least one fatty acid residue having at least three conjugated double bonds as comprised in the triglyceride oil composition, as detailed above, relative to the total weight of all fatty acid residues in the triglyceride oil composition, is equal to or less than 80.00 wt. %, preferably equal to or less than 75.00 wt. %, more preferably equal to or less than 70.00 wt. %.

In a preferred embodiment of the composition (C) of the present invention, the at least one fatty acid residue having at least three conjugated double bonds, as detailed above, is present in the triglyceride oil composition, as detailed above and relative to the total weight of all fatty acid residues in the triglyceride oil composition, in an amount from 40.00 to 85.00 wt. %, preferably in an amount from 45.00 to 85.00 wt. %, more preferably in an amount from 50.00 to 85.00 wt. %, more preferably in an amount from 55.00 to 85.00 wt. %, more preferably in an amount from 60.00 to 85.00 wt. %, even more preferably in an amount from 60.00 to 80.00 wt. %, yet even more preferably in an amount from 60.00 to 75.00 wt. %, most preferably in an amount from 60.00 to 70.00 wt. %.

As said, according to the present invention, the triglyceride oil composition, as detailed above and as comprised in the composition (C), further comprises, relative to the total weight of all fatty acid residues in the triglyceride oil composition, equal to or less than 15.00 wt. % of saturated fatty acid residues (SAFA), such as saturated fatty acid residues having from 6 to 24 carbon atoms, in particular said upper limit serving the purpose of providing the composition (C) of the present invention with sufficiently high drying properties and hardness upon application of said composition (C) to wood products and thereby resulting in coated layers of said composition (C) on said wood products, as demonstrated in the experimental section.

Saturated fatty acid residues, such as saturated fatty acid residues having from 6 to 24 carbon atoms, are known in the art. Non-limiting examples of saturated fatty acids having from 6 to 24 carbon atoms are hexadecanoic acid or its synonym palmitic acid, and octadecanoic acid or its synonym stearic acid.

In a preferred embodiment of the composition (C) of the present invention, the triglyceride oil composition, as detailed above and as comprised in the composition (C), further comprises, relative to the total weight of all fatty acid residues in the triglyceride oil composition, equal to or less than 12.50 wt. % of saturated fatty acid residues (SAFA), preferably equal to or less than 10.00 wt. % of saturated fatty acid residues (SAFA), more preferably equal to or less than 8.50 wt. % of saturated fatty acid residues (SAFA).

According to a preferred embodiment of the composition (C) of the present invention, the triglyceride oil composition, said triglyceride oil composition comprising at least one fatty acid residue having at least three conjugated double bonds, as detailed above, comprises at least one first drying oil, said at least one first drying oil comprising the at least one fatty acid residue having at least three conjugated double bonds, as detailed above, and wherein the at least one first drying oil is selected from the group consisting of tung oil, calendula seed oil, bitter gourd seed oil, pomegranate seed oil, and oiticica oil. Preferably, the at least one first drying oil is selected from the group consisting of tung oil, calendula seed oil, pomegranate seed oil, and oiticica oil. More preferably, the at least one first drying oil is selected from tung oil, or calendula seed oil. Most preferably, the at least one first drying oil is tung oil.

Within the context of the present invention, the expression "at least one first drying oil" is intended to denote one or more than one first drying oil. Mixtures of first drying oils, as detailed above, can also be used for the purpose of the invention.

In the rest of the text, the expression "at least one first drying oil" is understood, for the purposes of the present invention, both in the plural and the singular form, that is to say the triglyceride oil composition, and hence the composition (C) of the present invention comprising said triglyceride oil composition, as detailed above, may comprise one or more than one first drying oil, as detailed above.

Within the context of the present invention, it is understood that the person skilled in the art can determine and select according to standard practice in the art a suitable amount of the at least one first drying oil, as detailed above, in such a way that the requirements for the triglyceride oil composition, as comprised in the composition (C) and as detailed above, in terms of the amount of the at least one fatty acid residue having at least three conjugated double bonds and in terms of the (upper limit) amount of the saturated fatty acid residues (SAFA), as detailed above and relative to the total weight of all fatty acid residues in the triglyceride oil composition, are complied with. For this purpose, it is submitted that it is according to the common general knowledge of the person skilled in the art that the at least one first drying oil, as detailed above, and furthermore depending on the nature and the origin of the at least one first drying oil, comprises, relative to the total weight of all fatty acid residues in the at least one first drying oil, a certain weight range of the at least one fatty acid residue having at least three conjugated double bonds and a certain weight range of saturated fatty acid residues (SAFA), as detailed above.

For instance, with reference to the at least one fatty acid residue having at least three conjugated double bonds, it is notably described in various literature (review) publications that tung oil as the at least one first drying oil may comprise, relative to the total weight of all fatty acid residues in tung oil, over 60 wt. % of the fatty acid residue of α-eleostearic acid ((9*Z*,11*E*,13*E*)-octadeca-9,11,13-trienoic acid), such as from 65 to 85 wt. % of the fatty acid residue of α-eleostearic acid. Likewise, bitter gourd seed oil as the at least one first drying oil may comprise, relative to the total weight of all fatty acid residues in bitter gourd seed oil, and next to the presence of a minor amount of the fatty acid residue of β-eleostearic acid ((9*E*,11*E*,13*E*)-octadeca-9,11,13-trienoic acid), from 50 to 60 wt. % of the fatty acid residue of α-eleostearic acid ((9*Z*,11*E*,13*E*)-octadeca-9,11,13-trienoic acid). Furthermore, calendula seed oil as the at least one first drying oil may comprise, relative to the total weight of all fatty acid residues in calendula seed oil, and next to the presence of a minor amount of the fatty acid residue of β-calendic acid ((8E,10E,12E)-octadeca-8,10,12-trienoic acid), up to 65 wt. % of the fatty acid residue of α-calendic acid ((8*E*,10*E*,12*Z*)-octadeca-8,10,12-trienoic acid), such as from 50 to 65 wt. % of the fatty acid residue of α-calendic acid. Pomegranate seed oil as the at least one first drying oil may comprise, relative to the total weight of all fatty acid residues in pomegranate seed oil, from 50 to 85 wt. % of the fatty acid residue of punicic acid ((9*Z*,11*E*,13*Z*)-octadeca-9,11,13-trienoic acid), such as about 65 wt. % of the fatty acid residue of punicic acid. Oiticica seed oil as the at least one first drying oil may comprise, relative to the total weight of all fatty acid residues in oiticica seed oil, from 45 to 85 wt. % of the fatty acid residue of α-licanic acid (4-oxo-(9*Z*,11*E*,13*E*)-octadeca-9,11,13-trienoic acid or 4-oxo-α-eleostearic acid).

Within the context of the present invention, it is further understood that the person skilled in the art can determine using common general knowledge and according to standard practice in the art the fatty acid residue profile of a triglyceride oil composition and the corresponding weight percentages of the fatty acid residues comprised therein, relative to the total weight of all fatty acid residues in the triglyceride oil composition. In particular, it is further understood that the person skilled in the art can thus identify and select suitable triglyceride oil compositions for the purpose of the composition (C) of the present invention and determine using common general knowledge and according to standard practice in the art the presence and corresponding amount or weight percentage of the at least one fatty acid residue having at least three conjugated double bonds and the presence and corresponding amount or weight percentage of the saturated fatty acid residues (SAFA) in a triglyceride oil composition, as detailed above, relative to the total weight of all fatty acid residues in the triglyceride oil composition. Suitable methods for the quantitative determination of the fatty acid residues comprised in a triglyceride oil composition, relative to the total weight of all fatty acid residues in the triglyceride oil composition, are for instance ISO 12966-2:2017 or ISO 12966-3:2016 for the preparation of methyl esters of the fatty acid residues (FAMEs), followed by ISO 12966-4:2015 for capillary gas chromatography of the prepared methyl esters of the fatty acid residues (FAMEs).

It is further understood that all definitions and preferences as described above for the triglyceride oil composition equally apply for this embodiment and all further embodiments, as described below.

According to another embodiment of the composition (C) of the present invention, the triglyceride oil composition, as detailed above, further comprises, relative to the total weight of all fatty acid residues in the triglyceride oil composition, from 10.00 to 50.00 wt. % of at least one fatty acid residue having at least two non-conjugated double bonds, wherein the at least two non-conjugated double bonds are separated by a methylene CH₂ group (wherein the two non-conjugated double bonds separated by a methylene CH₂ group have the simplified formula -C=C-CH₂-C=C-).

Preferably, the at least one fatty acid residue having at least two non-conjugated double bonds, wherein the at least two non-conjugated double bonds are separated by a methylene CH₂ group, is further characterized by having from 16 to 24 carbon atoms. More preferably, the at least one fatty acid residue having at least two non-conjugated double bonds, wherein the at least two non-conjugated double bonds are separated by a methylene CH₂ group, is further characterized by having from 16 to 20 carbon atoms.

Within the context of the present invention, the expression "at least one fatty acid having at least two non-conjugated double bonds, wherein the at least two non-conjugated double bonds are separated by a methylene CH₂ group" is intended to denote one or more than one fatty acid having at least two non-conjugated double bonds, wherein the at least two non-conjugated double bonds are separated by a methylene CH₂ group. Mixtures of fatty acid residues having at least two non-conjugated double bonds, wherein the at least two non-conjugated double bonds are separated by a methylene CH₂ group, can also be used for the purpose of the invention.

In the rest of the text, the expression "at least one fatty acid having at least two non-conjugated double bonds, wherein the at least two non-conjugated double bonds are separated by a methylene CH₂ group" is understood, for the purposes of the present invention, both in the plural and the singular form, that is to say the triglyceride oil composition, and hence the composition (C) of the present invention comprising said triglyceride oil composition, as detailed above, may comprise one or more than one fatty acid having at least two non-conjugated double bonds, wherein the at least two non-conjugated double bonds are separated by a methylene CH₂ group.

Within the context of the present invention, the expression "the triglyceride oil composition further comprising, relative to the total weight of all fatty acid residues in the triglyceride oil composition, from 10.00 to 50.00 wt. % of at least one fatty acid residue having at least two non-conjugated double bonds, wherein the at least two non-conjugated double bonds are separated by a methylene CH₂ group" refers either to the amount of fatty acid residue having at least two non-conjugated double bonds, wherein the at least two non-conjugated double bonds are separated by a methylene CH₂ group, when the triglyceride oil composition comprises only one fatty acid residue having at least two non-conjugated double bonds, wherein the at least two non-conjugated double bonds are separated by a methylene CH₂ group, or to the sum of the amounts of fatty acid residues having at least two non-conjugated double bonds, wherein the at least two non-conjugated double bonds are separated by a methylene CH₂ group. This being said, it means that it is necessary that, when more than one fatty acid residue having at least two non-conjugated double bonds, wherein the at least two non-conjugated double bonds are separated by a methylene CH₂ group, is further present in the triglyceride oil composition, and hence in the composition (C) of the present invention comprising said triglyceride oil composition, as detailed above, then it is the sum of the amounts of each of said fatty acid residue having at least two non-conjugated double bonds, wherein the at least two non-conjugated double bonds are separated by a methylene CH₂ group, that ranges from 10.00 to 50.00 wt. %, relative to the total weight of all fatty acid residues in the triglyceride oil composition.

The inventors have surprisingly found that by using in the composition (C), as detailed above, the triglyceride oil composition, as detailed above, wherein the triglyceride oil composition further comprises a defined amount of at least one fatty acid residue having at least two non-conjugated double bonds, wherein the at least two non-conjugated double bonds are separated by a methylene CH₂ group, the defined amount of the at least one fatty acid residue having at least three conjugated double bonds as comprised in the triglyceride oil composition, as detailed above, now synergistically interacts with the defined amount of the at least one fatty acid residue having at least two non-conjugated double bonds as comprised in the triglyceride oil composition, wherein the at least two non-conjugated double bonds are separated by a methylene CH₂ group, thereby resulting in a composition (C) having improved film formation properties, i.e. a reduced film formation time and hence faster film formation, while at least maintaining a high dirt pickup resistance (DPUR) after 24 hours and good mechanical properties in terms of hardness upon application of said composition (C) to wood products and thereby resulting in coated layers of said composition (C) on said wood products, and which do not require the combinatorial use of one or more isocyanate-based accelerators, as demonstrated in the experimental section. Advantageously, such improved film formation properties resulting from the synergistic interaction or cooperation between these fatty acid residues have the further advantage that the composition (C), in particular the resulting coated layer of said composition (C) after application to wood products, has reduced chances of being rapidly contaminated by dirt, dust, insects, and the like, which may become trapped in the coated layer while said coated layer is not (yet) solidified and still liquid.

Fatty acid residues, such as fatty acid residues having from 16 to 24 carbon atoms, or from 16 to 20 carbon atoms, having at least two non-conjugated double bonds, wherein the at least two non-conjugated double bonds are separated by a methylene CH₂ group, are known in the art. Non-limiting examples of suitable fatty acid residues having at least two non-conjugated double bonds for use in the triglyceride oil composition, as detailed above, wherein the at least two non-conjugated double bonds are separated by a methylene CH₂ group, notably include fatty acid residues of (7Z,10Z,13Z)-hexadeca-7,10,13-trienoic acid; linoleic acid ((9Z,12Z)-octadeca-9,12-dienoic acid); α-linolenic acid ((9Z, 12Z, 15Z)-octadeca-9, 12, 15-trienoic acid); γ-linolenic acid ((6Z,9Z,12Z)-octadeca-6,9,12-trienoic acid); stearidonic acid ((6Z,9Z, 12Z, 15Z)-octadeca-6,9,12,15-tetraenoic acid); eicosadienoic acid ((11Z,14Z)-icosa-11,14-dienoic acid); (11*Z*,14*Z*,17*Z*)-icosa-11,14,17-trienoic acid; (8*Z*,11*Z*,14*Z*)-icosa-8,11,14-trienoic acid; (5*Z*,8*Z*,11*Z*)-icosa-5,8,11-trienoic acid; (5*Z*,11*Z*,14*Z*)-icosa-5,11,14-trienoic acid; arachidonic acid ((5*Z*,8*Z*,11Z,14*Z*)-icosa-5,8,11,14-tetraenoic acid); and (8Z,11Z,14Z,17Z)-icosa-8,11,14,17-tetraenoic acid.

According to a preferred embodiment of the composition (C) of the present invention, the at least one fatty acid residue as comprised in the triglyceride oil composition, as detailed above, said at least one fatty acid residue having at least two non-conjugated double bonds, wherein the at least two non-conjugated double bonds are separated by a methylene CH₂ group, is a fatty acid residue having a non-conjugated moiety selected from 1,4-pentadiene or 1,4,7-octatriene.

Fatty acid residues having a non-conjugated 1,4-pentadiene moiety are known in the art. Non-limiting examples of suitable fatty acid residues having a non-conjugated 1,4-pentadiene moiety notably include fatty acid residues of linoleic acid ((9*Z*,12*Z*)-octadeca-9,12-dienoic acid); eicosadienoic acid ((11*Z*,14*Z*)-icosa-11,14-dienoic acid); and (5*Z*,11*Z*,14*Z*)-icosa-5,11,14-trienoic acid.

Fatty acid residues having a non-conjugated 1,4,7-octatriene moiety are known in the art. Non-limiting examples of suitable fatty acid residues having a non-conjugated 1,4,7-octatriene moiety notably include fatty acid residues of (7*Z*,10*Z*,13*Z*)-hexadeca-7,10,13-trienoic acid; α-linolenic acid ((9*Z*,12*Z*,15*Z*)-octadeca-9,12,15-trienoic acid); γ-linolenic acid ((6*Z*,9*Z*,12*Z*)-octadeca-6,9,12-trienoic acid); (11*Z*,14*Z*,17*Z*)-icosa-11,14,17-trienoic acid; and (8*Z*,11*Z*,14*Z*)-icosa-8,11,14-trienoic acid.

According to a more preferred embodiment of the composition (C) of the present invention, the at least one fatty acid residue as further comprised in the triglyceride oil composition, as detailed above, said at least one fatty acid residue having at least two non-conjugated double bonds, wherein the at least two non-conjugated double bonds are separated by a methylene CH₂ group, is a fatty acid residue having a non-conjugated moiety selected from 1,4-pentadiene or 1,4,7-octatriene and said fatty acid residue being selected from the group consisting of fatty acid residues of linoleic acid ((9*Z*,12*Z*)-octadeca-9,12-dienoic acid), eicosadienoic acid ((11*Z*,14*Z*)-icosa-11,14-dienoic acid), (5*Z*,11*Z*,14*Z*)-icosa-5,11,14-trienoic acid, (7*Z*,10*Z*,13*Z*)-hexadeca-7,10,13-trienoic acid, α-linolenic acid ((9*Z*,12*Z*,15*Z*)-octadeca-9,12,15-trienoic acid), γ-linolenic acid ((6*Z*,9*Z,*12Z)-octadeca-6,9,12-trienoic acid), (11*Z*,14*Z*,17*Z*)-icosa-11,14,17-trienoic acid, and (8*Z*,11*Z*,14*Z*)-icosa-8,11,14-trienoic acid; preferably selected from fatty acid residues of linoleic acid ((9*Z*,12*Z*)-octadeca-9,12-dienoic acid), or α-linolenic acid ((9*Z*,12*Z*,15*Z*)-octadeca-9,12,15-trienoic acid).

As said above, according to the present invention, in the composition (C), as detailed above, the amount of the at least one fatty acid residue having at least two non-conjugated double bonds as comprised in the triglyceride oil composition, as detailed above, wherein the at least two non-conjugated double bonds are separated by a methylene CH₂ group, is from 10.00 to 50.00 wt. %, relative to the total weight of all fatty acid residues in the triglyceride oil composition.

Advantageously, in the composition (C), as detailed above, the amount of the at least one fatty acid residue having at least two non-conjugated double bonds as further comprised in the triglyceride oil composition, as detailed above, wherein the at least two non-conjugated double bonds are separated by a methylene CH₂ group, relative to the total weight of all fatty acid residues in the triglyceride oil composition, is equal to or greater than 11.00 wt. %, preferably equal to or greater than 12.00 wt. %, more preferably equal to or greater than 13.00 wt. %, even more preferably equal to or greater than 14.00 wt. %.

It is further understood that, in the composition (C), as detailed above, the upper limit of the amount of the at least one fatty acid residue having at least two non-conjugated double bonds as further comprised in the triglyceride oil composition, as detailed above, wherein the at least two non-conjugated double bonds are separated by a methylene CH₂ group, relative to the total weight of all fatty acid residues in the triglyceride oil composition, is equal to or less than 40.00 wt. %, preferably equal to or less than 35.00 wt. %, more preferably equal to or less than 30.00 wt. %, even more preferably equal to or less than 25.00 wt. %, yet even more preferably equal to or less than 22.00 wt. %.

In a preferred embodiment of the composition (C) of the present invention, the at least one fatty acid residue having at least two non-conjugated double bonds, wherein the at least two non-conjugated double bonds are separated by a methylene CH₂ group, as detailed above, is further present in the triglyceride oil composition, as detailed above and relative to the total weight of all fatty acid residues in the triglyceride oil composition, in an amount from 10.00 to 40.00 wt. %, preferably in an amount from 11.00 to 35.00 wt. %, more preferably in an amount from 12.00 to 30.00 wt. %, even more preferably in an amount from 13.00 to 25.00 wt. %, yet even more preferably in an amount from 14.00 to 22.00 wt. %.

According to a preferred embodiment of the composition (C) of the present invention, the triglyceride oil composition, as detailed above, said triglyceride oil composition further comprising at least one fatty acid residue having at least two non-conjugated double bonds, wherein the at least two non-conjugated double bonds are separated by a methylene CH₂ group, as detailed above, further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil. More preferably, the at least one second drying oil is selected from the group consisting of linseed oil, sunflower oil, safflower oil, soybean oil, and walnut oil. Most preferably, the at least one second drying oil is linseed oil.

Within the context of the present invention, the expression "at least one second drying oil" is intended to denote one or more than one second drying oil. Mixtures of second drying oils, as detailed above, can also be used for the purpose of the invention.

In the rest of the text, the expression "at least one second drying oil" is understood, for the purposes of the present invention, both in the plural and the singular form, that is to say the triglyceride oil composition, and hence the composition (C) of the present invention comprising said triglyceride oil composition, as detailed above, may further comprise one or more than one second drying oil, as detailed above.

Within the context of the present invention, it is understood that the person skilled in the art can determine and select according to standard practice in the art a suitable amount of the at least one second drying oil, as detailed above, in such a way that the requirements for the triglyceride oil composition, as comprised in the composition (C) and as detailed above, *inter alia* in terms of the amount of the at least one fatty acid residue having at least two non-conjugated double bonds, wherein the at least two non-conjugated double bonds are separated by a methylene CH₂ group, as detailed above and relative to the total weight of all fatty acid residues in the triglyceride oil composition, are complied with. For this purpose, it is submitted that it is according to the common general knowledge of the person skilled in the art that the at least one second drying oil, as detailed above, and furthermore depending on the nature and the origin of the at least one second drying oil, *inter alia* comprises, relative to the total weight of all fatty acid residues in the at least one second drying oil, a certain weight range of at least one fatty acid residue having at least two non-conjugated double bonds, wherein the at least two non-conjugated double bonds are separated by a methylene CH₂ group, as detailed above.

For instance, with reference to the at least one fatty acid residue having at least two non-conjugated double bonds, wherein the at least two non-conjugated double bonds are separated by a methylene CH₂ group, it is notably described in various literature (review) publications that linseed oil as the at least one second drying oil may comprise, relative to the total weight of all fatty acid residues in linseed oil, from 13 to 19 wt. % of the fatty acid residue of linoleic acid ((9Z,12Z)-octadeca-9,12-dienoic acid) and from 48 to 60 wt. % of the fatty acid residue of α-linolenic acid ((9*Z*,12*Z*,15*Z*)-octadeca-9,12,15-trienoic acid). Safflower as the at least one second drying oil may comprise, relative to the total weight of all fatty acid residues in safflower oil, from 55 to 77 wt. % of the fatty acid residue of linoleic acid ((9*Z*,12*Z*)-octadeca-9,12-dienoic acid) and about 0.1 wt. % of the fatty acid residue of α-linolenic acid ((9Z,12*Z*,15*Z*)-octadeca-9,12,15-trienoic acid). Soybean oil as the at least one second drying oil may comprise, relative to the total weight of all fatty acid residues in soybean oil, from 40 to 55 wt. % of the fatty acid residue of linoleic acid ((9*Z*,12*Z*)-octadeca-9,12-dienoic acid) and from 5 to 10 wt. % of the fatty acid residue of α-linolenic acid ((9*Z*,12*Z*,15*Z*)-octadeca-9,12,15-trienoic acid).

Within the context of the present invention, it is further understood that the person skilled in the art can determine using common general knowledge and according to standard practice in the art the fatty acid residue profile of a triglyceride oil composition and the corresponding weight percentages of the fatty acid residues comprised therein, relative to the total weight of all fatty acid residues in the triglyceride oil composition. In particular, it is further understood that the person skilled in the art can thus identify and select suitable triglyceride oil compositions for the purpose of the composition (C) of the present invention and determine according to common general knowledge and standard practice in the art the presence and related amount or weight percentage of the at least one fatty acid residue having at least two non-conjugated double bonds, wherein the at least two non-conjugated double bonds are separated by a methylene CH₂ group, as detailed above, relative to the total weight of all fatty acid residues in the triglyceride oil composition. Suitable methods for the quantitative determination of the fatty acid residues comprised in a triglyceride oil composition, relative to the total weight of all fatty acid residues in the triglyceride oil composition, are for instance ISO 12966-2:2017 or ISO 12966-3:2016 for the preparation of methyl esters of the fatty acid residues (FAMEs), followed by ISO 12966-4:2015 for capillary gas chromatography of the prepared methyl esters of the fatty acid residues (FAMEs).

According to a preferred embodiment of the composition (C) of the present invention, the triglyceride oil composition, as detailed above, comprises, preferably consists essentially of, relative to the total weight of the triglyceride oil composition:
- from 40.00 to 100.00 wt. % of the at least one first drying oil, said at least one first drying oil comprising the at least one fatty acid residue having at least three conjugated double bonds, as detailed above, preferably from 50.00 to 100.00 wt. %, more preferably from 65.00 to 100.00 wt. %, even more preferably from 75.00 to 95.00 wt. %, yet even more preferably from 80.00 to 90.00 wt. %; and
- from 60.00 to 0.00 wt. % of the at least one second drying oil, said at least one second drying oil comprising the at least one fatty acid residue having at least two non-conjugated double bonds, wherein the at least two non-conjugated double bonds are separated by a methylene CH₂ group, as detailed above, preferably from 50.00 to 0.00 wt. %, more preferably from 35.00 to 0.00 wt. %, even more preferably from 25.00 to 5.00 wt. %, yet even more preferably from 20.00 to 10.00 wt. %.

According to a more preferred embodiment of the composition (C) of the present invention, the triglyceride oil composition, as detailed above, comprises, preferably consists essentially of, relative to the total weight of the triglyceride oil composition:
- from 40.00 to 100.00 wt. % of tung oil as the at least one first drying oil, said tung oil as the at least one first drying oil comprising the at least one fatty acid residue having at least three conjugated double bonds, as detailed above, preferably from 50.00 to 100.00 wt. %, more preferably from 65.00 to 100.00 wt. %, even more preferably from 75.00 to 95.00 wt. %, yet even more preferably from 80.00 to 90.00 wt. %; and
- from 60.00 to 0.00 wt. % of linseed oil as the at least one second drying oil, said linseed oil as the at least one second drying oil comprising the at least one fatty acid residue having at least two non-conjugated double bonds, wherein the at least two non-conjugated double bonds are separated by a methylene CH₂ group,as detailed above, preferably from 50.00 to 0.00 wt. %, more preferably from 35.00 to 0.00 wt. %, even more preferably from 25.00 to 5.00 wt. %, yet even more preferably from 20.00 to 10.00 wt. %.

It is further understood that all definitions and preferences as described above for the triglyceride oil composition equally apply for this embodiment and all further embodiments, as described below.

As said above, according to the present invention, the amount of the triglyceride oil composition, as detailed above, as comprised in the composition (C) ranges from 60.00 to 99.00 wt. %, relative to the total weight of the composition (C).

Advantageously, the amount of the triglyceride oil composition, as detailed above, as comprised in the composition (C), relative to the total weight of the composition (C), is equal to or greater than 65.00 wt. %, preferably equal to or greater than 70.00 wt. %, more preferably equal to or greater than 75.00 wt. %, even more preferably equal to or greater than 78.00 wt. %.

It is further understood that the upper limit of the amount of the triglyceride oil composition, as detailed above, as comprised in the composition (C), relative to the total weight of the composition (C), is equal to or less than 95.00 wt. %.

In a preferred embodiment of the composition (C) of the present invention, the triglyceride oil composition, as detailed above, relative to the total weight of the composition (C), is present in an amount from 65.00 to 99.00 wt. %, preferably in an amount from 70.00 to 99.00 wt. %, more preferably in an amount from 75.00 to 95.00 wt. %, even more preferably in an amount from 78.00 to 95.00 wt. %.

As said above, according to the present invention, the composition (C) comprises, relative to the total weight of the composition (C), from 0.01 to 2.00 wt. % of at least one metal-based drying agent.

Within the context of the present invention, the expression "at least one metal-based drying agent" is intended to denote one or more than one metal-based drying agent. Mixtures of metal-based drying agents can also be used for the purpose of the invention.

In the rest of the text, the expression "at least one metal-based drying agent" is understood, for the purposes of the present invention, both in the plural and the singular form, that is to say the composition (C) of the present invention may comprise one or more than one metal-based drying agent.

Within the context of the present invention, the expression "from 0.01 to 2.00 wt. % of at least one metal-based drying agent" refers either to the amount of metal-based drying agent when the composition (C) comprises only one metal-based drying agent, or to the sum of the amounts of metal-based drying agent when the composition (C) comprises more than one metal-based drying agent. This being said, it means that it is necessary that, when more than one metal-based drying agent is present, then it is the sum of the amounts of each of said metal-based drying agent that ranges from 0.01 to 2.00 wt. %, relative to the total weight of the composition (C).

Suitable metal-based drying agents, or metal-based drier catalysts, for the purpose of the composition (C) of the present invention, as detailed above, are known to a person skilled in the art. It is understood that it is a general and known practice in the art of wood coating compositions, hence the composition (C) of the present invention and as detailed above, or drying compositions in general, to incorporate one or more metal-based drying agents which aid to achieve an accelerated (i.e. a faster) oxidative drying upon application of said wood coating compositions to wood products and thereby resulting in coated layers of said wood coating compositions on said wood products. It is further understood that the drying ability of wood coating compositions predominantly occurs through air oxidation, i.e. autoxidative drying, and the reaction mechanisms related thereto, in particular said reaction mechanisms proceeding via the formation and decomposition of hydroperoxide intermediates, are described in various literature publications. In general, the metal-based drying agents can thus assist in catalyzing/achieving an accelerated oxidative drying of the wood coating compositions, particularly since said metal-based drying agents can catalyze/accelerate the formation and/or the reduction of the hydroperoxide intermediates formed in order to more rapidly generate one or more crosslinks between unsaturated parts or moieties in the wood coating composition and oxygen (atmospheric O₂ in air) upon application of said wood coating compositions to wood products and thereby resulting in coated layers of said wood coating compositions on said wood products.

According to a preferred embodiment of the composition (C) of the present invention, the at least one metal-based drying agent, as detailed above, is a metal-based salt wherein the metal cation component is selected from the group consisting of manganese (Mn), iron (Fe), cobalt (Co), zirconium (Zr), and calcium (Ca); wherein the anion component is selected from the group consisting of halides, nitrates, sulphates, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands.

Suitable nitrogen donor ligands are known in the art, such as for instance including 1,10-phenanthroline and 2,2'-bipyridine. A non-limiting example of a suitable metal-based salt as the at least one metal-based drying agent, and wherein the metal-based salt is further complexed with a nitrogen donor ligand, is iron(1+), chloro[rel-1,5-dimethyl (1*R*,2*S*,4*R*,5*S*)-9,9-dihydroxy-3-methyl-2,4-di(2-pyridinyl-kN)-7-[(2-pyridinyl-kN)methyl]-3,7-diazabicyclo[3.3.1]nonane-1,5-dicarboxylate-kN3,kN7]-, chloride (1-), (OC-6-63)- [CAS registry number 478945-46-9], commercially available as Borchi^{®} OXY - Coat 1410 from Borchers (Milliken). A further non-limiting example of a suitable metal-based salt as the at least one metal-based drying agent, and wherein the metal-based salt is further complexed with a nitrogen donor ligand, is manganese neodecanoate in presence of 2-[[2-(dimethylamino)ethyl]methylamino]ethanol as the nitrogen donor ligand, commercially available as DICNATE MV130A from DIC Corporation.

According to a more preferred embodiment of the composition (C) of the present invention, the at least one metal-based drying agent, as detailed above, is a metal-based salt wherein the metal cation component is selected from the group consisting of manganese (Mn), iron (Fe), and cobalt (Co); wherein the anion component is selected from the group consisting of halides, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands.

Non-limiting examples of commercially available metal-based drying agents suitable for use in the composition (C) of the present invention, as detailed above, notably include Borchi^{®} OXY - Coat 1410 commercially available from Borchers (Milliken); Borchi^{®} Dragon commercially available from Borchers (Milliken); DICNATE MV130A from DIC Corporation; and ADDITOL^{®} dry CF100 commercially available from Allnex.

It is further understood that all definitions and preferences as described above for the at least one metal-based drying agent equally apply for this embodiment and all further embodiments, as described below.

As said above, according to the present invention, the composition (C) comprises, relative to the total weight of the composition (C), from 0.01 to 2.00 wt. % of at least one metal-based drying agent, as detailed above.

Advantageously, the amount of the at least one metal-based drying agent, as detailed above, as comprised in the composition (C), relative to the total weight of the composition (C), is equal to or greater than 0.02 wt. %, preferably equal to or greater than 0.03 wt. %, more preferably equal to or greater than 0.04 wt. %, even more preferably equal to or greater than 0.05 wt. %.

It is further understood that the upper limit of the amount of the at least one metal-based drying agent, as detailed above, as comprised in the composition (C), relative to the total weight of the composition (C), is equal to or less than 1.80 wt. %, preferably equal to or less than 1.70 wt. %, more preferably equal to or less than 1.60 wt. %, even more preferably equal to or less than 1.50 wt. %.

In a preferred embodiment of the composition (C) of the present invention, the at least one metal-based drying oil, as detailed above, relative to the total weight of the composition (C), is present in an amount from 0.02 to 1.80 wt. %, preferably in an amount from 0.03 to 1.70 wt. %, more preferably in an amount from 0.04 to 1.60 wt. %, even more preferably in an amount from 0.05 to 1.50 wt. %.

As said above, according to the present invention, the composition (C) comprises, relative to the total weight of the composition (C), from 0.75 to 30.00 wt. % of at least one aminosilane compound [compound (S), herein after] according to general Formula (I) 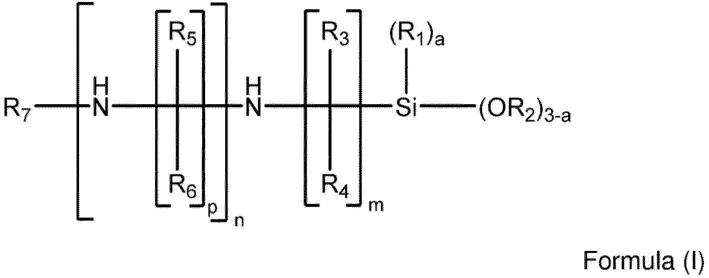 or according to general Formula (II) 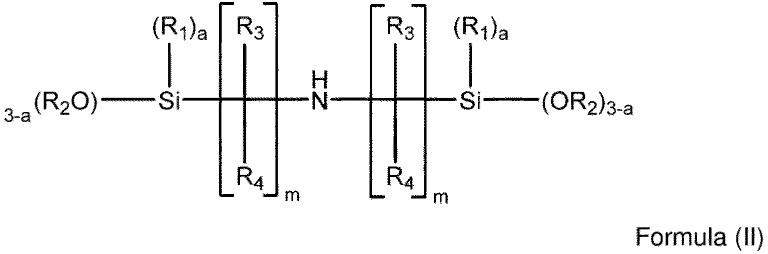 wherein
- each of a is 0, 1, or 2;
- each of m is 1, 2, 3, 4, 5, or 6;
- each of n is 0, 1, 2, 3, or 4;
- each of p is 1, 2, 3, 4, 5, or 6;
- each of R₁ is independently selected from the group consisting of C₁₋₆ alkyl, C₂₋₆ alkenyl, C₃₋₆ cycloalkyl, and C₆₋₁₀ aryl, and wherein said C₁₋₆ alkyl, C₂₋₆ alkenyl, C₃₋₆ cycloalkyl, and C₆₋₁₀ aryl are optionally substituted with one or more substituents independently selected from halo, or CF₃;
- each of R₂ is independently selected from the group consisting of hydrogen, C₁₋₆ alkyl, C₁₋₆ alkoxyalkyl, C₂₋₆ alkenyl, C₂₋₆ alkenyloxyalkyl, C₃₋₆ cycloalkyl, C₃₋₆ heterocyclyl, C₆₋₁₀ aryl, aralkyl, -CORs, -N=CR₉R₁₀, and -N=CR₁₁, and wherein each of R₈, R₈, and R₁₀, equal to or different from each other and at each occurrence, is independently C₁₋₄ alkyl, and wherein each of R₁₁ is a bivalent C₂₋₅ alkyl radical such that -N=CR₁₁ is a cycloalkyl; and wherein said C₁₋₆ alkyl, C₁₋₆ alkoxyalkyl, C₂₋₆ alkenyl, C₂₋₆ alkenyloxyalkyl, C₃₋₆ cycloalkyl, C₃₋₆ heterocyclyl, C₆₋₁₀ aryl, and aralkyl are optionally substituted with one or more substituents independently selected from halo, or CF₃;
- each of R₃, R₄, R₅, and R₆, equal to or different from each other and at each occurrence, is independently selected from hydrogen, or C₁₋₄ alkyl, and wherein said C₁₋₄ alkyl is optionally substituted with one or more substituents independently selected from halo, or CF₃;
- each of R₇ is independently selected from the group consisting of hydrogen, C₁₋₆ alkyl, C₁₋₆ alkoxyalkyl, C₂₋₆ alkenyl, C₂₋₆ alkenyloxyalkyl, C₃₋₆ cycloalkyl, C₃₋₆ heterocyclyl, C₆₋₁₀ aryl, and aralkyl, and wherein said C₁₋₆ alkyl, C₁₋₆ alkoxyalkyl, C₂₋₆ alkenyl, C₂₋₆ alkenyloxyalkyl, C₃₋₆ cycloalkyl, C₃₋₆ heterocyclyl, C₆₋₁₀ aryl, and aralkyl are optionally substituted with one or more substituents independently selected from halo, or CF₃.

Within the context of the present invention, the expression "at least one aminosilane compound [compound (S), herein after] according to general Formula (I) or according to general Formula (II)" is intended to denote one or more than one compound (S) according to general Formula (I) or according to general Formula (II). Mixtures of compounds (S) according to general Formula (I) and/or according to general Formula (II) can also be used for the purpose of the invention.

In the rest of the text, the expression "at least one aminosilane compound [compound (S), herein after] according to general Formula (I) or according to general Formula (II)" is understood, for the purposes of the present invention, both in the plural and the singular, that is to say the composition (C) of the present invention may comprise one or more than one compound (S) according to general Formula (I) and/or according to general Formula (II).

Within the context of the present invention, the expression "from 0.75 to 30.00 wt. % of at least one aminosilane compound [compound (S), herein after] according to general Formula (I) or according to general Formula (II)" refers either to the amount of compound (S) according to general Formula (I) and/or according to general Formula (II) when the composition (C) comprises only one compound (S) according to general Formula (I) or according to general Formula (II), or to the sum of the amounts of compound (S) according to general Formula (I) and/or according to general Formula (II) when the composition (C) comprises more than one compound (S) according to general Formula (I) and/or according to general Formula (II). This being said, it means that it is necessary that, when more than one compound (S) according to general Formula (I) and/or according to general Formula (II) is present, then it is the sum of the amounts of each of said compound (S) according to general Formula (I) and/or according to general Formula (II) that ranges from 0.75 to 30.00 wt. %, relative to the total weight of the composition (C).

As used herein the term "alkyl", and "alkenyl" have the broadest meaning generally understood in the art, and may include a moiety which is linear or branched, or a combination thereof.

The term "alkyl", alone or in combination, means a straight or branched alkane-derived radical, for example, C_{F-G} alkyl defines a straight or branched alkyl radical having from F to G carbon atoms, e.g. C₁₋₄ alkyl defines a straight or branched alkyl radical having from 1 to 4 carbon atoms such as for example methyl, ethyl, 1-propyl, 2-propyl (isopropyl), 1-butyl, 2-butyl, 2-methyl-2-propyl (tert-butyl), 2-methyl-1-propyl (isobutyl).

The term "alkenyl", alone or in combination, means a straight or branched hydrocarbon comprising at least one carbon to carbon double bond, for example C_{H-I} alkenyl defines a straight or branched alkenyl radical having from H to I carbon atoms, e.g. C₂₋₄ alkenyl defines a straight or branched alkenyl radical having from 2 to 4 carbon atoms. Examples of C₂₋₄ alkenyl groups include ethenyl, propenyl, isopropenyl, butenyl, and the like.

The term "cycloalkyl", alone or in combination, means a cyclic alkane-derived radical having one or more cyclic structures. Cycloalkyl includes all saturated hydrocarbon groups comprising one or more rings, including monocyclic or bicyclic groups. The further rings of multi-ring cycloalkyls may be either fused, bridged and/or joined through one or more spiro atoms. For example, C_{L-M} cycloalkyl defines a cyclic alkyl radical having from L to M carbon atoms, e.g. C₃₋₆ cycloalkyl defines a cyclic alkyl radical having from 3 to 6 carbon atoms such as for example cyclopropyl, cyclobutyl, cyclopentyl, cyclohexyl and the like.

The term "heterocyclyl", alone or in combination, means a cyclic alkane-derived radical in which at least one carbon atom is replaced by a heteroatom independently selected from the group consisting of oxygen, nitrogen and sulphur, such as pyrrolidine, piperidine or morpholine and the like.

The term "alkoxyalkyl", alone or in combination, means an alkyl group which is substituted with one, two, or three alkoxy groups, said alkoxy groups being optionally substituted with one, two, or three further alkoxy groups.

The term "aryl," alone or in combination, refers to a phenyl group, or a bicyclic fused ring system wherein one or both of the rings is a phenyl group. Bicyclic fused ring systems consist of a phenyl group fused to a four- to six-membered aromatic or non-aromatic carbocyclic ring. Representative examples of aryl groups include, but are not limited to, indanyl, indenyl, naphthyl, phenyl, and tetrahydronaphthyl.

The inventors have surprisingly found that by using in a composition (C), as detailed above, a defined amount of at least one aminosilane compound (S) according to general Formula (I) or according to general Formula (II), as detailed above, in combination with a defined amount of at least one metal-based drying agent, as detailed above, and a defined amount of a triglyceride oil composition, as detailed above, wherein the triglyceride oil composition comprises a defined amount of at least one fatty acid residue having at least three conjugated double bonds, as detailed above, the defined amount of the at least one aminosilane compound (S) according to general Formula (I) or according to general Formula (II) now synergistically interacts with the defined amount of the triglyceride oil composition, in particular the defined amount of the at least one fatty acid residue having at least three conjugated double bonds comprised in said triglyceride oil composition, thereby resulting in a composition (C) having a high dirt pickup resistance (DPUR) after 24 hours, while at least maintaining good film formation properties, i.e. without jeopardizing film formation, and mechanical properties in terms of hardness upon application of said composition (C) to wood products and thereby resulting in coated layers of said composition (C) on said wood products, and which do not require the combinatorial use of one or more isocyanate-based accelerators, as demonstrated in the experimental section.

Preferably, each of a is 0, or 1. Most preferably, each of a is 0.

Preferably, each of m is 1, 2, 3, 4, or 5. More preferably, each of m is 1, 2, 3, or 4. More preferably, each of m is 1, 3, or 4. Even more preferably, each of m is 1, or 3. Most preferably, each of m is 3.

Preferably, each of n is 0, 1, 2, or 3. More preferably, each of n is 0, 1, or 2. Most preferably, each of n is 0, or 1.

Preferably, each of p is 2, or 6. Most preferably, each of p is 2.

Preferably, each of R₁ is independently selected from the group consisting of C₁₋₄ alkyl, C₂₋₄ alkenyl, C₃₋₆ cycloalkyl, and wherein said C₁₋₄ alkyl, C₂₋₄ alkenyl, and C₃₋₆ cycloalkyl are optionally substituted with one or more substituents independently selected from halo, or CF₃. More preferably, each of R₁ is independently selected from C₁₋₄ alkyl, and wherein said C₁₋₄ alkyl is optionally substituted with one or more substituents independently selected from halo, or CF₃. Even more preferably, each of R₁ is independently selected from the group consisting of methyl, ethyl, propyl, and isopropyl. Even more preferably, each of R₁ is independently selected from the group consisting of methyl, ethyl, and isopropyl. Yet even more preferably, each of R₁ is independently selected from methyl, or isopropyl. Most preferably, each of R₁ is methyl.

Preferably, each of R₂ is independently selected from the group consisting of hydrogen, C₁₋₄ alkyl, C₁₋₆ alkoxyalkyl, C₂₋₄ alkenyl, C₃₋₆ cycloalkyl, C₆₋₁₀ aryl, - CORs, and wherein each of R₈, equal to or different from each other and at each occurrence, is independently C₁₋₄ alkyl, and wherein said C₁₋₄ alkyl, C₁₋₆ alkoxyalkyl, C₂₋₄ alkenyl, C₃₋₆ cycloalkyl, and C₆₋₁₀ aryl are optionally substituted with one or more substituents independently selected from halo, or CF₃. More preferably, each of R₂ is independently selected from the group consisting of hydrogen, C₁₋₄ alkyl, and C₁₋₆ alkoxyalkyl, and wherein said C₁₋₄ alkyl, and C₁₋₆ alkoxyalkyl are optionally substituted with one or more substituents independently selected from halo, or CF₃. Even more preferably, each of R₂ is independently selected from C₁₋₄ alkyl, and wherein said C₁₋₄ alkyl is optionally substituted with one or more substituents independently selected from halo, or CF₃. Yet even more preferably, each of R₂ is independently selected from the group consisting of methyl, ethyl, propyl, and isopropyl. Most preferably, each of R₂ is independently selected from methyl, or ethyl.

Preferably, each of R₃ is independently selected from the group consisting of hydrogen, methyl, ethyl, propyl, and isopropyl. More preferably, each of R₃ is independently selected from the group consisting of hydrogen, methyl, and ethyl. Even more preferably, each of R₃ is independently selected from hydrogen, or methyl. Most preferably, each of R₃ is hydrogen.

Preferably, each of R₄ is independently selected from the group consisting of hydrogen, methyl, ethyl, propyl, and isopropyl. More preferably, each of R₄ is independently selected from the group consisting of hydrogen, methyl, and ethyl. Even more preferably, each of R₄ is independently selected from hydrogen, or methyl. Most preferably, each of R₄ is hydrogen.

Preferably, each of R₅ is independently selected from the group consisting of hydrogen, methyl, ethyl, propyl, and isopropyl. More preferably, each of R₅ is independently selected from the group consisting of hydrogen, methyl, and ethyl. Even more preferably, each of R₅ is independently selected from hydrogen, or methyl. Most preferably, each of R₅ is hydrogen.

Preferably, each of R₆ is independently selected from the group consisting of hydrogen, methyl, ethyl, propyl, and isopropyl. More preferably, each of R₆ is independently selected from the group consisting of hydrogen, methyl, and ethyl. Even more preferably, each of R₆ is independently selected from hydrogen, or methyl. Most preferably, each of R₆ is hydrogen.

Preferably, each of R₇ is independently selected from the group consisting of hydrogen, C₁₋₄ alkyl, C₂₋₄ alkenyl, C₃₋₆ cycloalkyl, C₆₋₁₀ aryl, and aralkyl, and wherein said C₁₋₄ alkyl, C₂₋₄ alkenyl, C₃₋₆ cycloalkyl, C₆₋₁₀ aryl, and aralkyl are optionally substituted with one or more substituents independently selected from halo, or CF₃. More preferably, each of R₇ is independently selected from the group consisting of hydrogen, C₁₋₄ alkyl, allyl, C₅₋₆ cycloalkyl, phenyl, and benzyl, and wherein said C₁₋₄ alkyl, allyl, C₅₋₆ cycloalkyl, phenyl, and benzyl are optionally substituted with one or more substituents independently selected from halo, or CF₃. Even more preferably, each of R₇ is independently selected from the group consisting of hydrogen, C₁₋₄ alkyl, C₆ cycloalkyl, phenyl, and benzyl, and wherein said C₁₋₄ alkyl, C₆ cycloalkyl, phenyl, and benzyl are optionally substituted with one or more substituents independently selected from halo, or CF₃. Most preferably, each of R₇ is hydrogen.

It is further understood that, in the composition (C), as detailed above, the at least one compound (S) according to general Formula (II) is preferably a symmetrical compound (S) according to general Formula (II) meaning that within a single compound (S) according to general Formula (II) each of a, as detailed above, is identical or the same; each of m, as detailed above, is identical or the same; each of R₁, as detailed above, is identical or the same; each of R₂, as detailed above, is identical or the same; each of R₃, as detailed above, is identical or the same; and each of R₄, as detailed above, is identical or the same, respectively.

Non-limiting examples of suitable compounds (S) according to general Formula (I) for the purpose of the composition (C) of the present invention notably include primary *N*-terminal aminosilanes such as (3-aminopropyl)-*tris*(methoxyethoxyethoxy)silane; (3-aminopropyl)silanetriol; *N-*(2-aminoethyl)-(3-aminopropyl)silantriol; (3-aminopropyl)trimethoxysilane; (3-aminopropyl)triethoxysilane; (3-aminopropyl)dimethoxymethylsilane; (3-aminopropyl)diethoxymethylsilane; (3-aminopropyl)dimethylmethoxysilane; (3-aminopropyl)dimethylethoxysilane; (3-aminopropyl)dimethoxyisopropylsilane; (3-aminopropyl)diethoxyisopropylsilane; (3-aminopropyl)diisopropylmethoxysilane; (3-aminopropyl)diisopropylethoxysilane; (4-aminobutyl)trimethoxysilane; (4-aminobutyl)triethoxysilane; (4-aminobutyl)dimethoxymethylsilane; (4-aminobutyl)diethoxymethylsilane; (4-aminobutyl)dimethylmethoxysilane; (4-aminobutyl)dimethylethoxysilane; (4-aminobutyl)dimethoxyisopropylsilane; (4-aminobutyl)diethoxyisopropylsilane; (4-aminobutyl)diisopropylmethoxysilane; (4-aminobutyl)diisopropylethoxysilane; (4-amino-3,3-dimethylbutyl)trimethoxysilane; (4-amino-3,3-dimethylbutyl)triethoxysilane; (4-amino-3,3-dimethylbutyl)dimethoxymethylsilane; (4-amino-3,3-dimethylbutyl)diethoxymethylsilane; (4-amino-3,3-dimethylbutyl)dimethylmethoxysilane; (4-amino-3,3-dimethylbutyl)dimethylethoxysilane; (4-amino-3,3-dimethylbutyl)dimethoxyisopropylsilane; (4-amino-3,3-dimethylbutyl)diethoxyisopropylsilane; (4-amino-3,3-dimethylbutyl)diisopropylmethoxysilane; (4-amino-3,3-dimethylbutyl)diisopropylethoxysilane; *N*-(2-aminoethyl)-(3-aminopropyl)trimethoxysilane; *N-*(2-aminoethyl)-(3-aminopropyl)triethoxysilane; *N-*(2-aminoethyl)-(3-aminopropyl)dimethoxymethylsilane; *N-*(2-aminoethyl)-(3-aminopropyl)diethoxymethylsilane; *N-*(2-aminoethyl)-(3-aminopropyl)dimethylmethoxysilane; *N*-(2-aminoethyl)-(3-aminopropyl)dimethylethoxysilane; *N*-(2-aminoethyl)-(3-aminopropyl)dimethoxyisopropylsilane; *N*-(2-aminoethyl)-(3-aminopropyl)diethoxyisopropylsilane; *N*-(2-aminoethyl)-(3-aminopropyl)diisopropylmethoxysilane; *N*-(2-aminoethyl)-(3-aminopropyl)diisopropylethoxysilane; *N*-(2-aminoethyl)-(3-aminoisobutyl)trimethoxysilane; *N*-(2-aminoethyl)-(3-aminoisobutyl)triethoxysilane; *N*-(2-aminoethyl)-(3-aminoisobutyl)dimethoxymethylsilane; *N*-(2-aminoethyl)-(3-aminoisobutyl)diethoxymethylsilane; *N*-(2-aminoethyl)-(3-aminoisobutyl)dimethylmethoxysilane; *N*-(2-aminoethyl)-(3-aminoisobutyl)dimethylethoxysilane; *N*-(2-aminoethyl)-(3-aminoisobutyl)dimethoxyisopropylsilane; *N*-(2-aminoethyl)-(3-aminoisobutyl)diethoxyisopropylsilane; *N*-(2-aminoethyl)-(3-aminoisobutyl)diisopropylmethoxysilane; *N*-(2-aminoethyl)-(3-aminoisobutyl)diisopropylethoxysilane; *N*-(2-aminoethyl)-(2-aminoethyl)-(3-aminopropyl)trimethoxysilane; *N*-(2-aminoethyl)-(2-aminoethyl)-(3-aminopropyl)triethoxysilane; *N*-(2-aminoethyl)-(2-aminoethyl)-(3-aminopropyl)dimethoxymethylsilane; *N*-(2-aminoethyl)-(2-aminoethyl)-(3-aminopropyl)diethoxymethylsilane; *N*-(2-aminoethyl)-(2-aminoethyl)-(3-aminopropyl)dimethylmethoxysilane; *N*-(2-aminoethyl)-(2-aminoethyl)-(3-aminopropyl)dimethylethoxysilane; *N-*(2-aminoethyl)-(2-aminoethyl)-(3-aminopropyl)dimethoxyisopropylsilane; *N*-(2-aminoethyl)-(2-aminoethyl)-(3-aminopropyl)diethoxyisopropylsilane; *N-*(2-aminoethyl)-(2-aminoethyl)-(3-aminopropyl)diisopropylmethoxysilane; *N-*(2-aminoethyl)-(2-aminoethyl)-(3-aminopropyl)diisopropylethoxysilane; *N*-(6-aminohexyl)aminomethyltrimethoxysilane; *N*-(6-aminohexyl)aminomethyltriethoxysilane; *N*-(6-aminohexyl)-(3-aminopropyl)trimethoxysilane; *N-*(6-aminohexyl)-(3-aminopropyl)triethoxysilane; 1-amino-2-(trimethoxysilyl)propane; 1-amino-2-(triethoxysilyl)propane; 1-amino-2-(dimethoxymethylsilyl)propane; 1-amino-2-(diethoxymethylsilyl)propane; 1-amino-2-(dimethylmethoxysilyl)propane; 1-amino-2-(dimethylethoxysilyl)propane; 1-amino-2-(dimethoxyisopropylsilyl)propane; 1-amino-2-(diethoxyisopropylsilyl)propane; 1-amino-2-(diisopropylmethoxysilyl)propane; 1-amino-2-(diisopropylethoxysilyl)propane; and secondary *N*-terminal aminosilanes such as (*N-*phenylaminomethyl)trimethoxysilane; (*N*-phenylaminomethyl)triethoxysilane; (N-phenylaminomethyl)dimethoxymethylsilane; (*N-*phenylaminomethyl)diethoxymethylsilane; (*N-*phenylaminomethyl)dimethylmethoxysilane; (*N-*phenylaminomethyl)dimethylethoxysilane; (*N-*cyclohexylaminomethyl)trimethoxysilane; (*N-*cyclohexylaminomethyl)triethoxysilane; (*N-*cyclohexylaminomethyl)dimethoxymethylsilane; (*N-*cyclohexylaminomethyl)diethoxymethylsilane; (*N-*cyclohexylaminomethyl)dimethylmethoxysilane; (*N-*cyclohexylaminomethyl)dimethylethoxysilane; (*N-*methyl-3-aminopropyl)trimethoxysilane; (*N-*methyl-3-aminopropyl)triethoxysilane; (*N-*methyl-3-aminopropyl)dimethoxymethylsilane; (*N-*methyl-3-aminopropyl)diethoxymethylsilane; (*N-*methyl-3-aminopropyl)dimethylmethoxysilane; (*N-*methyl-3-aminopropyl)dimethylethoxysilane; (*N*-ethyl-3-aminopropyl)trimethoxysilane; (*N-*ethyl-3-aminopropyl)triethoxysilane; (*N-*ethyl-3-aminopropyl)dimethoxymethylsilane; (*N-*ethyl-3-aminopropyl)diethoxymethylsilane; (*N*-ethyl-3-aminopropyl)dimethylmethoxysilane; (*N*-ethyl-3-aminopropyl)dimethylethoxysilane; (*N-*butyl-3-aminopropyl)trimethoxysilane; (*N-*butyl-3-aminopropyl)triethoxysilane; (*N*-butyl-3-aminopropyl)dimethoxymethylsilane; (*N*-butyl-3-aminopropyl)diethoxymethylsilane; (*N*-butyl-3-aminopropyl)dimethylmethoxysilane; (*N*-butyl-3-aminopropyl)dimethylethoxysilane; (*N-tert*-butyl-3-am inopropyl)trimethoxysilane; *(N-tert-*butyl-3-aminopropyl)triethoxysilane; (*N-tert-*butyl-3-aminopropyl)dimethoxymethylsilane; (*N-tert-*butyl-3-aminopropyl)diethoxymethylsilane; (*N-tert-*butyl-3-aminopropyl)dimethylmethoxysilane; (*N*-*tert*-butyl-3-aminopropyl)dimethylethoxysilane; (*N*-cyclohexyl-3-aminopropyl)trimethoxysilane; (*N*-cyclohexyl-3-aminopropyl)triethoxysilane; (*N-*cyclohexyl-3-aminopropyl)dimethoxymethylsilane; (*N*-cyclohexyl-3-aminopropyl)diethoxymethylsilane; (*N*-cyclohexyl-3-aminopropyl)dimethylmethoxysilane; (*N*-cyclohexyl-3-aminopropyl)dimethylethoxysilane; (*N*-phenyl-3-aminopropyl)trimethoxysilane; (N phenyl-3-aminopropyl)triethoxysilane; (*N*-phenyl-3-aminopropyl)dimethoxymethylsilane; (*N*-phenyl-3-aminopropyl)diethoxymethylsilane; (*N*-phenyl-3-aminopropyl)dimethylmethoxysilane; (*N*-phenyl-3-aminopropyl)dimethylethoxysilane; (*N*-allyl-3-aminopropyl)trimethoxysilane; (*N-*allyl-3-aminopropyl)triethoxysilane; (*N*-allyl-3-aminopropyl)dimethoxymethylsilane; (*N*-allyl-3-aminopropyl)diethoxymethylsilane; (*N*-allyl-3-aminopropyl)dimethylmethoxysilane; (*N*-allyl-3-aminopropyl)dimethylethoxysilane; (*N-*ethyl-3-aminoisobutyl)trimethoxysilane; (*N-*ethyl-3-aminoisobutyl)triethoxysilane; (*N*-ethyl-3-aminoisobutyl)dimethoxymethylsilane; (*N*-ethyl-3-aminoisobutyl)diethoxymethylsilane; (*N-*ethyl-3-aminoisobutyl)dimethylmethoxysilane; (*N*-ethyl-3-aminoisobutyl)dimethylethoxysilane; *N*-(2-*N*-benzylaminoethyl)-(3-aminopropyl)trimethoxysilane; and *N-*(2-*N-b*enzylaminoethyl)-(3-aminopropyl)triethoxysilane.

Non-limiting examples of suitable compounds (S) according to general Formula (II) for the purpose of the composition (C) of the present invention notably include bis(3-trimethoxysilylpropyl)amine; bis(3-triethoxysilylpropyl)amine; bis(3-methyldimethoxysilylpropyl)amine; bis(3-methyldiethoxysilylpropyl)amine; bis(3-dimethylmethoxysilylpropyl)amine; and bis(3-dimethylethoxysilylpropyl)amine.

Compounds (S) according to general Formula (I) or according to general Formula (II) for the purpose of the composition (C) of the present invention may be chemically synthesized in accordance with the common general knowledge of a person skilled in the art. Said synthesis of compounds (S) according to general Formula (I) or according to general Formula (II) may be carried out using conventional methods known to the person skilled in the art.

Compounds (S) according to general Formula (I) or according to general Formula (II) for the purpose of the composition (C) of the present invention may be commercially available, such as from ABCR, Gelest, Wacker Chemie AG, Merck, and Evonik.

According to a preferred embodiment of the composition (C) of the present invention, as detailed above, the at least one compound (S) according to general Formula (I) or according to general Formula (II), as detailed above, is a compound chosen among those of Formula (I₁) [compound (S_{I.1}), herein after], Formula (I₂) [compound (S_{I.2}), herein after], and Formula (II₁) [compound (S_{II.1}), herein after]: 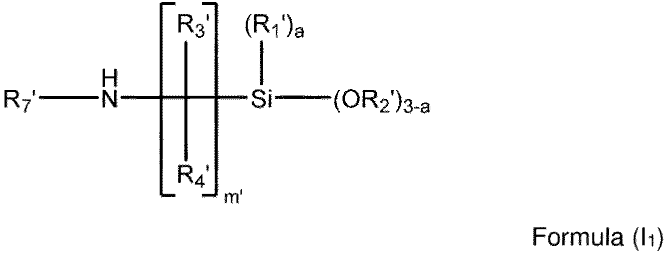 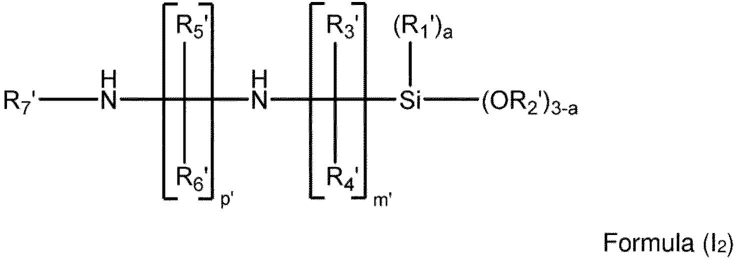 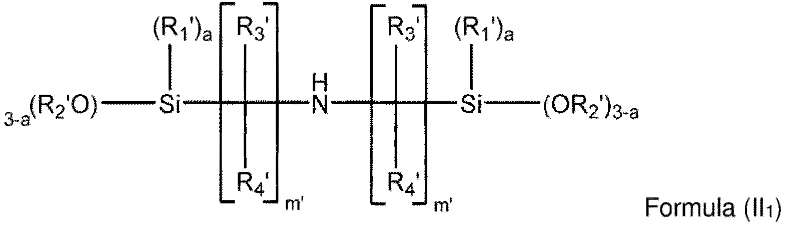 wherein
- each of a is 0, 1, or 2;
- each of m' is 1, 2, 3, or 4;
- each of p' is 2, or 6;
- each of R₁' is independently selected from the group consisting of C₁₋₄ alkyl, C₂₋₄ alkenyl, C₃₋₆ cycloalkyl, and wherein said C₁₋₄ alkyl, C₂₋₄ alkenyl, and C₃₋₆ cycloalkyl are optionally substituted with one or more substituents independently selected from halo, or CF₃;
- each of R₂' is independently selected from the group consisting of hydrogen, C₁₋₄ alkyl, and C₁₋₆ alkoxyalkyl, and wherein said C₁₋₄ alkyl, and C₁₋₆ alkoxyalkyl are optionally substituted with one or more substituents independently selected from halo, or CF₃;
- each of R₃', R₄', R₅', and R₆', equal to or different from each other and at each occurrence, is independently selected from the group consisting of hydrogen, methyl, ethyl, propyl, and isopropyl; and
- each of R₇' is independently selected from the group consisting of hydrogen, C₁₋₄ alkyl, C₂₋₄ alkenyl, C₃₋₆ cycloalkyl, C₆₋₁₀ aryl, and aralkyl, and wherein said C₁₋₄ alkyl, C₂₋₄ alkenyl, C₃₋₆ cycloalkyl, C₆₋₁₀ aryl, and aralkyl are optionally substituted with one or more substituents independently selected from halo, or CF₃.

Preferably, each of a is 0, or 1. Most preferably, each of a is 0.

Preferably, each of m' is 1, 3, or 4. Even more preferably, each of m' is 1, or 3. Most preferably, each of m is 3.

Preferably, each of p' is 2.

Preferably, each of R₁' is independently selected from C₁₋₄ alkyl, and wherein said C₁₋₄ alkyl is optionally substituted with one or more substituents independently selected from halo, or CF₃. More preferably, each of R₁' is independently selected from the group consisting of methyl, ethyl, propyl, and isopropyl. Even more preferably, each of R₁' is independently selected from the group consisting of methyl, ethyl, and isopropyl. Yet even more preferably, each of R₁' is independently selected from methyl, or isopropyl. Most preferably, each of R₁' is methyl.

Preferably, each of R₂' is independently selected from C₁₋₄ alkyl, and wherein said C₁₋₄ alkyl is optionally substituted with one or more substituents independently selected from halo, or CF₃. More preferably, each of R₂' is independently selected from the group consisting of methyl, ethyl, propyl, and isopropyl. Most preferably, each of R₂' is independently selected from methyl, or ethyl.

Preferably, each of R₃' is independently selected from the group consisting of hydrogen, methyl, and ethyl. More preferably, each of R₃' is independently selected from hydrogen, or methyl. Most preferably, each of R₃' is hydrogen.

Preferably, each of R₄' is independently selected from the group consisting of hydrogen, methyl, and ethyl. More preferably, each of R₄' is independently selected from hydrogen, or methyl. Most preferably, each of R₄' is hydrogen.

Preferably, each of R₅' is independently selected from the group consisting of hydrogen, methyl, and ethyl. More preferably, each of R₅' is independently selected from hydrogen, or methyl. Most preferably, each of R₅' is hydrogen.

Preferably, each of R₆' is independently selected from the group consisting of hydrogen, methyl, and ethyl. More preferably, each of R₆' is independently selected from hydrogen, or methyl. Most preferably, each of R₆' is hydrogen.

Preferably, each of R₇' is independently selected from the group consisting of hydrogen, C₁₋₄ alkyl, allyl, C₅₋₆ cycloalkyl, phenyl, and benzyl, and wherein said C₁₋₄ alkyl, allyl, C₅₋₆ cycloalkyl, phenyl, and benzyl are optionally substituted with one or more substituents independently selected from halo, or CF₃. More preferably, each of R₇' is independently selected from the group consisting of hydrogen, C₁₋₄ alkyl, C₆ cycloalkyl, phenyl, and benzyl, and wherein said C₁₋₄ alkyl, C₆ cycloalkyl, phenyl, and benzyl are optionally substituted with one or more substituents independently selected from halo, or CF₃. Most preferably, each of R₇' is hydrogen.

It is further understood that, in the composition (C), as detailed above, the at least one compound (S_{II.1}) according to Formula (II₁) is preferably a symmetrical compound (S_{II.1}) according to Formula (II₁) meaning that within a single compound (S_{II.1}) according to Formula (II₁) each of a, as detailed above, is identical or the same; each of m', as detailed above, is identical or the same; each of R₁', as detailed above, is identical or the same; each of R₂', as detailed above, is identical or the same; each of R₃', as detailed above, is identical or the same; and each of R₄', as detailed above, is identical or the same, respectively.

Non-limiting examples of compounds (S_{I.1}) according to Formula (I₁) for the purpose of the composition (C) of the present invention notably include primary N terminal aminosilanes such as (3-aminopropyl)-tris(methoxyethoxyethoxy)silane; (3-aminopropyl)silanetriol; (3-aminopropyl)trimethoxysilane; (3-aminopropyl)triethoxysilane; (3-aminopropyl)dimethoxymethylsilane; (3-aminopropyl)diethoxymethylsilane; (3-aminopropyl)dimethylmethoxysilane; (3-aminopropyl)dimethylethoxysilane; (3-aminopropyl)dimethoxyisopropylsilane; (3-aminopropyl)diethoxyisopropylsilane; (3-aminopropyl)diisopropylmethoxysilane; (3-aminopropyl)diisopropylethoxysilane; (4-aminobutyl)trimethoxysilane; (4-aminobutyl)triethoxysilane; (4-aminobutyl)dimethoxymethylsilane; (4-aminobutyl)diethoxymethylsilane; (4-aminobutyl)dimethylmethoxysilane; (4-aminobutyl)dimethylethoxysilane; (4-aminobutyl)dimethoxyisopropylsilane; (4-aminobutyl)diethoxyisopropylsilane; (4-aminobutyl)diisopropylmethoxysilane; (4-aminobutyl)diisopropylethoxysilane; (4-amino-3,3-dimethylbutyl)trimethoxysilane; (4-amino-3,3-dimethylbutyl)triethoxysilane; (4-amino-3,3-dimethylbutyl)dimethoxymethylsilane; (4-amino-3,3-dimethylbutyl)diethoxymethylsilane; (4-amino-3,3-dimethylbutyl)dimethylmethoxysilane; (4-amino-3,3-dimethylbutyl)dimethylethoxysilane; (4-amino-3,3-dimethylbutyl)dimethoxyisopropylsilane; (4-amino-3,3-dimethylbutyl)diethoxyisopropylsilane; (4-amino-3,3-dimethylbutyl)diisopropylmethoxysilane; (4-amino-3,3-dimethylbutyl)diisopropylethoxysilane; 1-amino-2-(trimethoxysilyl)propane; 1-amino-2-(triethoxysilyl)propane; 1-amino-2-(dimethoxymethylsilyl)propane; 1-amino-2-(diethoxymethylsilyl)propane; 1-amino-2-(dimethylmethoxysilyl)propane; 1-amino-2-(dimethylethoxysilyl)propane; 1-amino-2-(dimethoxyisopropylsilyl)propane; 1-amino-2-(diethoxyisopropylsilyl)propane; 1-amino-2-(diisopropylmethoxysilyl)propane; 1-amino-2-(diisopropylethoxysilyl)propane; and secondary *N-*terminal aminosilanes such as (*N-*phenylaminomethyl)trimethoxysilane; (*N-*phenylaminomethyl)triethoxysilane; (*N-*phenylaminomethyl)dimethoxymethylsilane; (*N-*phenylaminomethyl)diethoxymethylsilane; (*N-*phenylaminomethyl)dimethylmethoxysilane; (*N-*phenylaminomethyl)dimethylethoxysilane; (*N-*cyclohexylaminomethyl)trimethoxysilane; (*N-*cyclohexylaminomethyl)triethoxysilane; (*N-*cyclohexylaminomethyl)dimethoxymethylsilane; (*N-*cyclohexylaminomethyl)diethoxymethylsilane; (*N-*cyclohexylaminomethyl)dimethylmethoxysilane; (*N-*cyclohexylaminomethyl)dimethylethoxysilane; (*N-*methyl-3-aminopropyl)trimethoxysilane; (N methyl-3-aminopropyl)triethoxysilane; (*N-*methyl-3-aminopropyl)dimethoxymethylsilane; (*N-*methyl-3-aminopropyl)diethoxymethylsilane; (*N-*methyl-3-aminopropyl)dimethylmethoxysilane; (*N-*methyl-3-aminopropyl)dimethylethoxysilane; (*N-*ethyl-3-aminopropyl)trimethoxysilane; (*N-*ethyl-3-aminopropyl)triethoxysilane; (*N-*ethyl-3-aminopropyl)dimethoxymethylsilane; (*N-*ethyl-3-aminopropyl)diethoxymethylsilane; (*N-*ethyl-3-aminopropyl)dimethylmethoxysilane; (*N-*ethyl-3-aminopropyl)dimethylethoxysilane; (*N-*butyl-3-aminopropyl)trimethoxysilane; (*N-*butyl-3-aminopropyl)triethoxysilane; (*N-*butyl-3-aminopropyl)dimethoxymethylsilane; (*N-*butyl-3-aminopropyl)diethoxymethylsilane; (*N-*butyl-3-aminopropyl)dimethylmethoxysilane; (*N-*butyl-3-aminopropyl)dimethylethoxysilane; (*N-tert*-butyl-3-aminopropyl)trimethoxysilane; *(N-*tert-butyl-3-aminopropyl)triethoxysilane; (*N-tert-*butyl-3-aminopropyl)dimethoxymethylsilane; (*N-tert*-butyl-3-aminopropyl)diethoxymethylsilane; (*N-tert*-butyl-3-aminopropyl)dimethylmethoxysilane; (*N-tert*-butyl-3-aminopropyl)dimethylethoxysilane; (*N-*cyclohexyl-3-aminopropyl)trimethoxysilane; (*N-*cyclohexyl-3-aminopropyl)triethoxysilane; (*N-*cyclohexyl-3-aminopropyl)dimethoxymethylsilane; (*N-*cyclohexyl-3-aminopropyl)diethoxymethylsilane; (*N-*cyclohexyl-3-aminopropyl)dimethylmethoxysilane; (*N-*cyclohexyl-3-aminopropyl)dimethylethoxysilane; (*N-*phenyl-3-aminopropyl)trimethoxysilane; (*N-*phenyl-3-aminopropyl)triethoxysilane; (*N-*phenyl-3-aminopropyl)dimethoxymethylsilane; (*N-*phenyl-3-aminopropyl)diethoxymethylsilane; (*N-*phenyl-3-aminopropyl)dimethylmethoxysilane; (*N-*phenyl-3-aminopropyl)dimethylethoxysilane; (*N-*allyl-3-aminopropyl)trimethoxysilane; (*N-*allyl-3-aminopropyl)triethoxysilane; (*N-*allyl-3-aminopropyl)dimethoxymethylsilane; (*N-*allyl-3-aminopropyl)diethoxymethylsilane; (*N-*allyl-3-aminopropyl)dimethylmethoxysilane; (*N-*allyl-3-aminopropyl)dimethylethoxysilane; (*N-*ethyl-3-aminoisobutyl)trimethoxysilane; (*N-*ethyl-3-aminoisobutyl)triethoxysilane; (*N-*ethyl-3-aminoisobutyl)dimethoxymethylsilane; (*N-*ethyl-3-aminoisobutyl)diethoxymethylsilane; (*N-*ethyl-3-aminoisobutyl)dimethylmethoxysilane; and (*N-*ethyl-3-aminoisobutyl)dimethylethoxysilane.

Non-limiting examples of suitable compounds (S_{I.2}) according to Formula (I₂) for the purpose of the composition (C) of the present invention notably include primary *N-*terminal aminosilanes such as *N-*(2-aminoethyl)-(3-aminopropyl)silantriol; *N-*(2-aminoethyl)-(3-aminopropyl)trimethoxysilane; *N-*(2-aminoethyl)-(3-aminopropyl)triethoxysilane; *N-*(2-aminoethyl)-(3-aminopropyl)dimethoxymethylsilane; *N-*(2-aminoethyl)-(3-aminopropyl)diethoxymethylsilane; *N-*(2-aminoethyl)-(3-aminopropyl)dimethylmethoxysilane; *N-*(2-aminoethyl)-(3-aminopropyl)dimethylethoxysilane; *N-*(2-aminoethyl)-(3-aminopropyl)dimethoxyisopropylsilane; *N-*(2-aminoethyl)-(3-aminopropyl)diethoxyisopropylsilane; *N-*(2-aminoethyl)-(3-aminopropyl)diisopropylmethoxysilane; *N-*(2-aminoethyl)-(3-aminopropyl)diisopropylethoxysilane; *N-*(2-aminoethyl)-(3-aminoisobutyl)trimethoxysilane; *N-*(2-aminoethyl)-(3-aminoisobutyl)triethoxysilane; *N-*(2-aminoethyl)-(3-aminoisobutyl)dimethoxymethylsilane; *N-*(2-aminoethyl)-(3-aminoisobutyl)diethoxymethylsilane; *N-*(2-aminoethyl)-(3-aminoisobutyl)dimethylmethoxysilane; *N-*(2-aminoethyl)-(3-aminoisobutyl)dimethylethoxysilane; *N-*(2-aminoethyl)-(3-aminoisobutyl)dimethoxyisopropylsilane; *N-*(2-aminoethyl)-(3-aminoisobutyl)diethoxyisopropylsilane; *N-*(2-aminoethyl)-(3-aminoisobutyl)diisopropylmethoxysilane; *N-*(2-aminoethyl)-(3-aminoisobutyl)diisopropylethoxysilane; *N-*(6-aminohexyl)aminomethyltrimethoxysilane; *N-*(6-aminohexyl)aminomethyltriethoxysilane; *N*-(6-aminohexyl)-(3-aminopropyl)trimethoxysilane; *N-*(6-aminohexyl)-(3-aminopropyl)triethoxysilane; and secondary *N-*terminal aminosilanes such as *N*-(2-*N*-benzylaminoethyl)-(3-aminopropyl)trimethoxysilane; and *N*-(2-*N*-benzylaminoethyl)-(3-aminopropyl)triethoxysilane.

Non-limiting examples of suitable compounds (S_{II.1}) according to Formula (II₁) for the purpose of the composition (C) of the present invention notably include bis(3-trimethoxysilylpropyl)amine; bis(3-triethoxysilylpropyl)amine; bis(3-methyldimethoxysilylpropyl)amine; bis(3-methyldiethoxysilylpropyl)amine; bis(3-dimethylmethoxysilylpropyl)amine; and bis(3-dimethylethoxysilylpropyl)amine.

According to a more preferred embodiment of the composition (C) of the present invention, as detailed above, the at least one compound (S) according to general Formula (I) or according to general Formula (II), as detailed above, is a compound chosen among those of Formula (I_{1'}) [compound (S_{I.1'}), herein after], Formula (I_{2'}) [compound (S_{I.2'}), herein after], and Formula (II_{1'}) [compound (S_{II.1'}), herein after]: 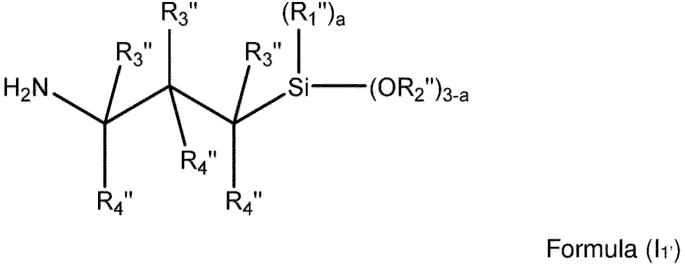 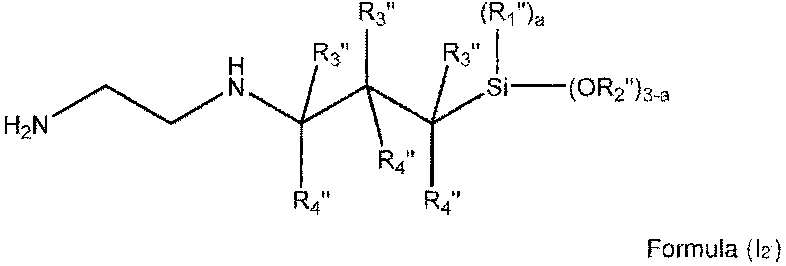 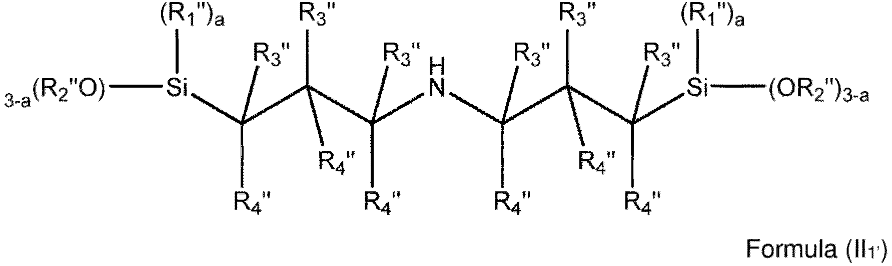 wherein
- each of a is 0, 1, or 2;
- each of R₁" is independently selected from C₁₋₄ alkyl, and wherein said C₁₋₄ alkyl is optionally substituted with one or more substituents independently selected from halo, or CF₃;
- each of R₂" is independently selected from C₁₋₄ alkyl, and wherein said C₁₋₄ alkyl is optionally substituted with one or more substituents independently selected from halo, or CF₃; and
- each of R₃", and R₄", equal to or different from each other and at each occurrence, is independently selected from hydrogen, or methyl.

Preferably, each of a is 0, or 1. Most preferably, each of a is 0.

Preferably, each of R₁" is independently selected from the group consisting of methyl, ethyl, propyl, and isopropyl. More preferably, each of R₁" is independently selected from methyl, ethyl, or isopropyl. Even more preferably, each of R₁" is independently selected from methyl, or isopropyl. Most preferably, each of R₁" is methyl.

Preferably, each of R₂" is independently selected from the group consisting of methyl, ethyl, propyl, and isopropyl. Most preferably, each of R₂" is independently selected from methyl, or ethyl.

Preferably, each of R₃" is hydrogen.

Preferably, each of R₄" is hydrogen.

It is further understood that, in the composition (C), as detailed above, the at least one compound (S_{II.1'}) according to Formula (II_{1'}) is preferably a symmetrical compound (S_{II.1'}) according to Formula (II_{1'}) meaning that within a single compound (S_{II.1'}) according to Formula (II_{1'}) each of a, as detailed above, is identical or the same; each of R₁", as detailed above, is identical or the same; each of R₂", as detailed above, is identical or the same; each of R₃", as detailed above, is identical or the same; and each of R₄", as detailed above, is identical or the same, respectively.

Non-limiting examples of compounds (S_{I.1'}) according to Formula (I_{1'}) for the purpose of the composition (C) of the present invention notably include aminosilanes such as (3-aminopropyl)trimethoxysilane; (3-aminopropyl)triethoxysilane; (3-aminopropyl)dimethoxymethylsilane; (3-aminopropyl)diethoxymethylsilane; (3-aminopropyl)dimethylmethoxysilane; (3-aminopropyl)dimethylethoxysilane; (3-aminopropyl)dimethoxyisopropylsilane; (3-aminopropyl)diethoxyisopropylsilane; (3-aminopropyl)diisopropylmethoxysilane; and (3-aminopropyl)diisopropylethoxysilane.

Non-limiting examples of suitable compounds (S_{I.2'}) according to Formula (I_{2'}) for the purpose of the composition (C) of the present invention notably include aminosilanes such as *N-*(2-aminoethyl)-(3-aminopropyl)trimethoxysilane; *N*-(2-aminoethyl)-(3-aminopropyl)triethoxysilane; *N*-(2-aminoethyl)-(3-aminopropyl)dimethoxymethylsilane; *N*-(2-aminoethyl)-(3-aminopropyl)diethoxymethylsilane; *N*-(2-aminoethyl)-(3-aminopropyl)dimethylmethoxysilane; *N*-(2-aminoethyl)-(3-aminopropyl)dimethylethoxysilane; *N*-(2-aminoethyl)-(3-aminopropyl)dimethoxyisopropylsilane; *N*-(2-aminoethyl)-(3-aminopropyl)diethoxyisopropylsilane; *N*-(2-aminoethyl)-(3-aminopropyl)diisopropylmethoxysilane; *N*-(2-aminoethyl)-(3-aminopropyl)diisopropylethoxysilane; *N*-(2-aminoethyl)-(3-aminoisobutyl)trimethoxysilane; *N*-(2-aminoethyl)-(3-aminoisobutyl)triethoxysilane; *N*-(2-aminoethyl)-(3-aminoisobutyl)dimethoxymethylsilane; *N*-(2-aminoethyl)-(3-aminoisobutyl)diethoxymethylsilane; *N*-(2-aminoethyl)-(3-aminoisobutyl)dimethylmethoxysilane; *N*-(2-aminoethyl)-(3-aminoisobutyl)dimethylethoxysilane; *N*-(2-aminoethyl)-(3-aminoisobutyl)dimethoxyisopropylsilane; *N*-(2-aminoethyl)-(3-aminoisobutyl)diethoxyisopropylsilane; *N*-(2-aminoethyl)-(3-aminoisobutyl)diisopropylmethoxysilane; and *N*-(2-aminoethyl)-(3-aminoisobutyl)diisopropylethoxysilane.

Non-limiting examples of suitable compounds (S_{II.1'}) according to Formula (II_{1'}) for the purpose of the composition (C) of the present invention notably include bis(3-trimethoxysilylpropyl)amine; bis(3-triethoxysilylpropyl)amine; bis(3-methyldimethoxysilylpropyl)amine; bis(3-methyldiethoxysilylpropyl)amine; bis(3-dimethylmethoxysilylpropyl)amine; and bis(3-dimethylethoxysilylpropyl)amine.

Most preferred compounds (S) according to general Formula (I) or according to general Formula (II), for use in the composition (C) of the present invention, as detailed above, are those of Formula (I_{1"}) [compound (S_{I.1"}), herein after], Formula (I_{2"}) [compound (S_{I.2"}), herein after], and Formula (II_{1"}) [compound (S_{II.1"}), herein after]: 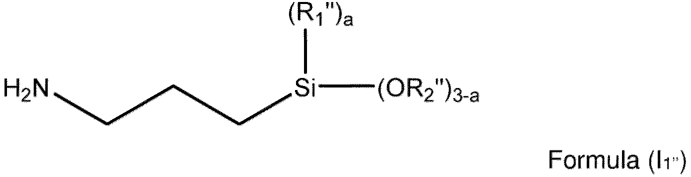 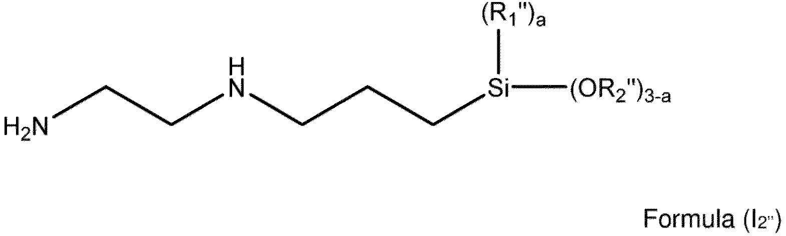 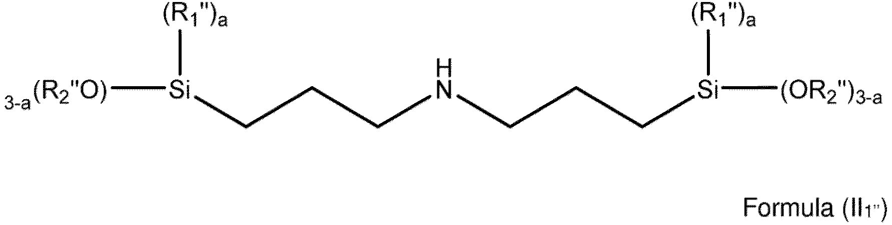 wherein a, R₁", and R₂" have the same meaning as defined above for Formula (I_{1'}), Formula (I_{2'}), and Formula (II_{1'}), respectively.

It is further understood that, in the composition (C), as detailed above, the at least one compound (S_{II.1'}) according to Formula (II_{1"}) is preferably a symmetrical compound (S_{II.1'}) according to Formula (II_{1"}) meaning that within a single compound (S_{II.1'}) according to Formula (II_{1"}) each of R₁", as detailed above, is identical or the same; and each of R₂", as detailed above, is identical or the same, respectively.

Non-limiting examples of compounds (S_{I.1"}) according to Formula (I_{1"}) for the purpose of the composition (C) of the present invention notably include aminosilanes such as (3-aminopropyl)trimethoxysilane; (3-aminopropyl)triethoxysilane; (3-aminopropyl)dimethoxymethylsilane; (3-aminopropyl)diethoxymethylsilane; (3-aminopropyl)dimethylmethoxysilane; (3-aminopropyl)dimethylethoxysilane; (3-aminopropyl)dimethoxyisopropylsilane; (3-aminopropyl)diethoxyisopropylsilane; (3-aminopropyl)diisopropylmethoxysilane; and (3-aminopropyl)diisopropylethoxysilane.

Non-limiting examples of suitable compounds (S_{I.2"}) according to Formula (I_{2"}) for the purpose of the composition (C) of the present invention notably include aminosilanes such as *N*-(2-aminoethyl)-(3-aminopropyl)trimethoxysilane; *N*-(2-aminoethyl)-(3-aminopropyl)triethoxysilane; *N*-(2-aminoethyl)-(3-aminopropyl)dimethoxymethylsilane; *N*-(2-aminoethyl)-(3-aminopropyl)diethoxymethylsilane; *N*-(2-aminoethyl)-(3-aminopropyl)dimethylmethoxysilane; *N*-(2-aminoethyl)-(3-aminopropyl)dimethylethoxysilane; *N*-(2-aminoethyl)-(3-aminopropyl)dimethoxyisopropylsilane; *N*-(2-aminoethyl)-(3-aminopropyl)diethoxyisopropylsilane; *N*-(2-aminoethyl)-(3-aminopropyl)diisopropylmethoxysilane; and *N*-(2-aminoethyl)-(3-aminopropyl)diisopropylethoxysilane.

Non-limiting examples of suitable compounds (S_{II.1"}) according to Formula (II_{1"}) for the purpose of the composition (C) of the present invention notably include bis(3-trimethoxysilylpropyl)amine; bis(3-triethoxysilylpropyl)amine; bis(3-methyldimethoxysilylpropyl)amine; bis(3-methyldiethoxysilylpropyl)amine; bis(3-dimethylmethoxysilylpropyl)amine; and bis(3-dimethylethoxysilylpropyl)amine.

As said above, according to the present invention, the amount of the compound (S) according to general Formula (I) or according to general Formula (II), as detailed above, as comprised in the composition (C) ranges from 0.75 to 30.00 wt. %, relative to the total weight of the composition (C).

Advantageously, the amount of the compound (S) according to general Formula (I) or according to general Formula (II), as detailed above, relative to the total weight of the composition (C), is equal to or greater than 0.80 wt. %, preferably equal to or greater than 0.90 wt. %, more preferably equal to or greater than 1.00 wt. %.

It is further understood that the upper limit of the amount of the compound (S) according to general Formula (I) or according to general Formula (II), as detailed above, relative to the total weight of the composition (C), is equal to or less than 25.00 wt. %, preferably equal to or less than 20.00 wt. %, more preferably equal to or less than 15.00 wt. %, even more preferably equal to or less than 10.00 wt. %, yet even more preferably equal to or less than 7.50 wt. %, most preferably equal to or less than 5.00 wt. %.

In a preferred embodiment of the composition (C) of the present invention, the compound (S) according to general Formula (I) or according to general Formula (II), as detailed above, relative to the total weight of the composition (C), is present in an amount from 0.75 to 25.00 wt. %, preferably in an amount from 0.80 to 20.00 wt. %, more preferably in an amount from 0.80 to 15.00 wt. %, even more preferably in an amount from 0.90 to 10.00 wt. %, yet even more preferably in an mount from 0.90 to 7.50 wt. %, most preferably in an mount from 1.00 to 5.00 wt. %.

As said above, according to the present invention, the composition (C), as detailed above, has a total solids content equal to or greater than 85.00 wt. %, relative to the total weight of the composition (C), and wherein the total solids content of the composition (C) is measured according to the standard ASTM D2369 - 20. In other words, the composition (C) is substantially free of volatile content as measured according to the standard ASTM D2369 - 20.

Within the context of the present invention, the standard ASTM D2369 - 20 is used to obtain a weight percent of solids (non-volatile matter) by difference for determining the volatiles emitted by coatings. Typically, a sample of material is placed in a weighing dish, such as an aluminum foil weighing dish, and placed in a convection oven at 110° C ± 5 °C for 60 minutes. The weight remaining in the weighing dish, i.e. the weight of the residual solids, is then determined and the total solids content is then calculated based on the weight of the residual solids. The mass lost represents the total weight percent of volatile content.

Advantageously, the composition (C) according to the present invention, as detailed above, has a total solids content equal to or greater than 90.00 wt. %, preferably equal to or greater than 92.50 wt. %, more preferably equal to or greater than 95.00 wt. %, more preferably equal to or greater than 97.00 wt. %, even more preferably equal to or greater than 99.00 wt. %, wherein all wt. % are relative to the total weight of the composition (C), and wherein the total solids content of the composition (C) is measured according to the standard ASTM D2369 - 20.

The inventors have surprisingly found that the composition (C), as detailed above, can be successfully characterized as a high-solids composition (C) which is substantially free of volatile content, such as water and volatile organic compounds (VOC), in particular volatile organic compounds (VOC), while still having a high dirt pickup resistance (DPUR) after 24 hours, while at least maintaining good film formation properties, i.e. without jeopardizing film formation, and mechanical properties in terms of hardness upon application of said composition (C) to wood products and thereby resulting in coated layers of said composition (C) on said wood products, and which do not require the combinatorial use of one or more isocyanate-based accelerators, as demonstrated in the experimental section.

It is further understood that all definitions and preferences, as described above, equally apply for all further embodiments, as described below.

According to certain embodiments of the present invention, the composition (C), as detailed above, may further comprise at least one micronized wax [micronized wax (Mₚ), herein after] having a particle size D₉₀ equal to or less than 36 µm and a particle size D₅₀ equal to or less than 20 µm.

Micronized waxes (Mₚ) are known in the art. Non-limiting examples of suitable micronized waxes (Mₚ) for use in the composition (C), as detailed above, notably include micronized polytetrafluoroethylene wax; micronized hybrid wax of polyethylene-polytetrafluoroethylene wax; micronized Fischer-Tropsch wax; micronized polyethylene wax, such as non-polar polyethylene wax and micronized oxidized high-density polyethylene wax; micronized polypropylene wax, such as micronized non-polar polypropylene wax; micronized polyamide wax, such as micronized ethylene-bis-stearamide wax, micronized erucamide wax, micronized stearamide wax, and micronized amide wax made of sugar cane; micronized carnauba wax; micronized wax made of starch, such as micronized wax made of corn starch; and micronized polymer hybrids thereof, such as micronized hybrid wax of Fischer-Tropsch wax polytetrafluoroethylene wax and silica, micronized hybrid wax of Fischer-Tropsch wax and polyethylene wax, micronized hybrid wax of polyethylene wax and amide wax, micronized hybrid wax of Fischer-Tropsch wax and amide wax, micronized hybrid wax of polyethylene wax polypropylene wax Fischer-Tropsch wax and amide wax.

Within the context of the present invention, the expression "at least one micronized wax" is intended to denote one or more than one micronized wax. Mixtures of micronized waxes can also be used for the purpose of the invention. In the remainder of the text, the expression "micronized wax" is understood, for the purposes of the present invention, both in the plural and the singular form.

The micronized wax (Mₚ) may be commercially available. The micronized wax (Mₚ) may be prepared according to preparation methods known in the art. Said preparation of the micronized wax (Mₚ) may be carried out using conventional methods known to the skilled in the art such as melt dispersion techniques, spraying techniques such as spray chilling, milling techniques such as air jet milling, precipitation techniques, grinding techniques, or bead polymerization.

The use and presence of micronized waxes (Mₚ) has a decisive influence with regards to the resulting composition (C) according to the present invention having good abrasion resistance, scratch resistance, antiblocking, water repellency, and slip resistance properties when being applied to wood products.

Advantageously, the micronized wax (Mₚ), as detailed above, has a particle size D₉₀ equal to or less than 32.0 µm and a particle size D₅₀ equal to or less than 18.0 µm, preferably a particle size D₉₀ equal to or less than 29.0 µm and a particle size D₅₀ equal to or less than 16.0 µm, more preferably a particle size D₉₀ equal to or less than 25.0 µm and a particle size D₅₀ equal to or less than 14.0 µm, more preferably a particle size D₉₀ equal to or less than 22.0 µm and a particle size D₅₀ equal to or less than 12.0 µm, more preferably a particle size D₉₀ equal to or less than 18.0 µm and a particle size D₅₀ equal to or less than 10.0 µm.

According to one embodiment of the composition (C) of the present invention, the particles of the micronized wax (Mₚ), as detailed above, have a particle size according to one of the following particle size distributions:
D₁₀ ≤ 3.0 µm and D₉₀ ≤ 36.0 µm and D₅₀ 20.0 µm;
preferably, D₁₀ ≤ 3.0 µm and D₉₀ ≤ 32.0 µm and D₅₀ 18.0 µm;
more preferably, D₁₀ ≤ 3.0 µm and D₉₀ ≤ 29.0 µm and D₅₀ 16.0 µm;
more preferably, D₁₀ ≤ 3.0 µm and D₉₀ ≤ 25.0 µm and D₅₀ 14.0 µm;
more preferably, D₁₀ ≤ 3.0 µm and D₉₀ ≤ 22.0 µm and D₅₀ 12.0 µm;
more preferably, D₁₀ ≤ 3.0 µm and D₉₀ ≤ 18.0 µm and D₅₀ 10.0 µm.

According to the present invention, a particle size of the micronized wax (Mₚ), as detailed above, expressed as Dₓₓ ≤ Y denotes a percentage (xx%) by weight of particles of the micronized wax (Mₚ) having a particle size equal to or less than Y.

For example, D₉₀ ≤ 32.0 µm denotes that 90 wt. % of the particles of the micronized wax (Mₚ), as detailed above, has a particle size equal to or less than 32.0 µm.

According to the present invention, the particle size of the particles of the micronized wax (Mₚ) is measured according to DIN ISO 13320:2020.

Generally, when present in the composition (C) of the present invention, the amount of the micronized wax (Mₚ), as detailed above, is from 0.00 to 20.00 wt. %, or from 2.00 to 20.00 wt. %, or from 5.00 to 20.00 wt. %, or from 5.00 to 15.00 wt. %, or from 10.00 to 15.00 wt. %, relative to the total weight of the composition (C).

According to certain embodiments of the present invention, the composition (C), as detailed above, may further comprise at least one pigment to enhance the appearance of the composition (C).

Within the context of the present invention, the expression "at least one pigment" is intended to denote one or more than one pigment. Mixtures of pigments can also be used for the purpose of the invention. In the remainder of the text, the expression "pigment" is understood, for the purposes of the present invention, both in the plural and the singular form.

Said pigments for the purpose of the composition (C) of the present invention are known to those skilled in the art of wood coating compositions. Non-limiting examples of suitable pigments notably include: inorganic and organic pigments. As non-limiting examples of suitable inorganic pigments mention may be made of compounds of metals such as iron, zinc, titanium, lead, chromium, copper, cadmium, calcium, zirconium, cobalt, magnesium, aluminum, nickel, and other transition metals. Generally, some non-limiting examples of suitable inorganic pigments include iron oxides, including red iron oxides, yellow iron oxides, black micaceous iron oxide, black iron oxides, and brown iron oxides; iron hydroxide; graphite; carbon black; aluminum oxide; calcium carbonate; calcium phosphate; calcium oxide; calcium hydroxide; bismuth carbonate; bismuth oxide; bismuth hydroxide; copper carbonate; copper oxide; copper hydroxide; silicon oxide; zinc carbonate; zinc phosphate; zinc oxide; zinc sulfide; zinc chromate; barium carbonate; barium hydroxide; barium chromate; strontium carbonate; chrome oxide; titanium dioxide; tin oxide; antimony oxide; or mixtures of two or more thereof. As non-limiting examples of suitable organic pigments mention may be made of monoazo (arylide) pigments such as PY3, PY65, PY73, PY74, PY97 and PY98; disazo (diarylide) pigments; disazo (bishydrazone) condensation pigments; benzimidazolone pigments; naphthol pigments; isoindoline pigments; isoindolinone pigments; quinacridone pigments; perylene pigments; perinone pigments; anthraquinone pigments; diketopyrrolopyrrole pigments; diaryl pyrrolopyrole pigments; dioxazine pigments; triacrylcarbonium pigments; phthalocyanine pigments, such as cobalt phthalocyanine, copper phthalocyanine, copper polychlorophthalocyanine, copper semichlorophthalocyanine, copper monochlorophthalocyanine, metal-free phthalocyanine; thioindigo pigments; quinophthalone pigments; or mixtures of two or more thereof.

The at least one pigment, as detailed above, is typically provided as a paste in a suitable drying oil or drying oil mixture as a result of said at least one pigment being dispersed in said suitable drying oil or drying oil mixture in the presence of suitable wetting and/or dispersing agents. Such pigment pastes comprising the at least one pigment are commercially available and known to the person skilled in the art. It is further understood that when the at least one pigment is provided in a suitable drying oil or drying oil mixture, said drying oil or drying oil mixture must be selected such that the requirements of the triglyceride oil composition as comprised in the composition (C), as detailed above, are complied with, in particular the requirements with respect to the fatty acid residues as comprised in said triglyceride oil composition.

As to the amount of the pigments, it is understood that the skilled person in the art will practise said pigments in a suitable amount according to standard and general practice known by said skilled person in the art.

Generally, when present in the composition (C) of the present invention, the amount of the at least one pigment, as detailed above, is from 0.00 to 20.00 wt. %; or from 0.00 to 15.00 wt. % such as from 2.00 to 15.00 wt. % or from 3.00 to 15.00 wt. %; or from 0.00 to 10.00 wt. % such as from 5.00 to 10.00 wt. %, relative to the total weight of the composition (C).

According to certain embodiments of the present invention, the composition (C), as detailed above, may further comprise at least one other additional ingredient [ingredient (I_{C}), herein after] to enhance the appearance, storage, transport, handling and/or performance of the composition (C).

Within the context of the present invention, the expression "at least one other additional ingredients [ingredient (I_{C}), herein after]" is intended to denote one or more than one ingredient (I_{C}). Mixtures of ingredients (I_{C}) can also be used for the purpose of the invention. In the remainder of the text, the expression "ingredient (I_{C})" is understood, for the purposes of the present invention, both in the plural and the singular form.

Said ingredients (I_{C}) are known to those skilled in the art of wood coating compositions. Non-limiting examples of ingredients (I_{C}) notably include: rheology modifiers, such as polyurethane and urea based thickening agents that may induce a shear-thinning flow behavior; methyl or ethyl esters of vegetable oils; microcrystalline waxes; inorganic or organic UV absorbers; photoinitiators; fire retardants; surfactants; dispersants; wetting agents; defoaming agents; water repellent agents; biocides such as pesticides, herbicides, insecticides, weedicides, miticides, fungicides, moldicides, algaecides, acaricides, nematicides, bactericides, and rodenticides; plasticizers; hindered amine light stabilizers (HALS); anti-skinning agents; coalescing agents; fragrances; or mixtures of two or more thereof.

Photoinitiators are known in the art, are commercially available, and can be prepared according to the common general knowledge of a person skilled in the art. Any photoinitiator and mixtures thereof capable of generating free radicals upon exposure to radiation, in particular UV/Vis radiation, may be used. Non-limiting examples of suitable photoinitiators include acyl phosphine oxides, such as 2,4,6-trimethylbenzoyldiphenylphosphine oxide (TPO) and bis(2,4,6-trimethylbenzoyl)phenylphosphine oxide (BAPO). The optional presence of these one or more photoinitiators as ingredient (I_{C}) in the composition (C) according to the present invention, as detailed above, serves primarily the purpose of providing additional crosslinking means for and leading to the crosslinking of the polymeric network in the composition (C) upon application of said composition (C) to wood products, thereby resulting in coated layers of said composition (C) on said wood products, in particular in addition to the at least one metal-based drying agent as comprised in the composition (C), said metal-based drying agent assisting the autoxidative drying of the composition (C), as described above.

Methyl or ethyl esters of vegetable oils are known in the art, are commercially available, and can be prepared according to the common general knowledge of a person skilled in the art, for example via a (base-catalyzed) transesterification reaction. Non-limiting examples of suitable methyl or ethyl esters of vegetable oils notable include sunflower oil methyl or ethyl ester; linseed oil methyl or ethyl ester; and tung oil methyl or ethyl ester. Depending on the nature and the origin of the vegetable oil component of such methyl or ethyl esters, and hence the fatty acid residue profile corresponding to said vegetable oil component of such methyl or ethyl esters, these methyl or ethyl esters of vegetable oils may further contribute, in addition to the fatty acid residues as comprised in the triglyceride oil composition, as detailed above, to one or more of the dirt pickup resistance (DPUR), the film formation properties, the hardness, the oxidative crosslinking and the drying capacity of the composition (C), as detailed above, while reducing the viscosity of the composition (C), and upon application of said composition (C) to wood products and thereby resulting in coated layers of said composition (C) on said wood products.

As to the amount of the ingredients (I_{C}), it is understood that the skilled person in the art will practise said additional ingredients (I_{C}) in a suitable amount according to standard and general practice known by said skilled person in the art.

Generally, when present in the composition (C) of the present invention, the amount of the ingredients (I_{C}), as detailed above, is from 0.00 to 11.00 wt. %, or from 0.10 to 11.00 wt. %, or from 1.00 to 10.00 wt. %, or from 1.00 to 8.00 wt. %, or from 2.00 to 8.00 wt. %, or from 3.00 to 7.00 wt. %, relative to the total weight of the composition (C).

It is further understood that all definitions and preferences, as described above, equally apply for all further embodiments, as described below.

According to a preferred embodiment of the composition (C) of the present invention, the composition (C), as detailed above, comprises, or consists essentially of, relative to the total weight of the composition (C):
- from 60.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 40.00 to 85.00 wt. % of at least one fatty acid residue having at least three conjugated double bonds, wherein said at least one fatty acid residue is a conjugated triene fatty acid residue; wherein the triglyceride oil composition optionally further comprises, relative to the total weight of all fatty acid residues in the triglyceride oil composition, from 10.00 to 50.00 wt. % of at least one fatty acid residue having at least two non-conjugated double bonds, wherein the at least two non-conjugated double bonds are separated by a methylene CH₂ group;
   wherein the triglyceride oil composition optionally comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition optionally further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;
- from 0.01 to 2.00 wt. % of at least one metal-based drying agent, as detailed above; and
- from 0.75 to 30.00 wt. % of at least one aminosilane compound [compound (S), herein after] according to general Formula (I) 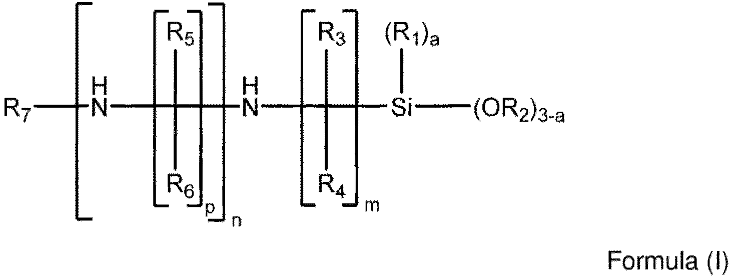 or according to general Formula (II) 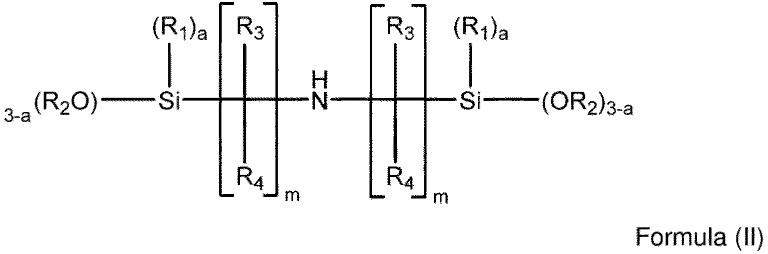 wherein
   - each of a is 0, 1, or 2;
   - each of m is 1, 2, 3, 4, or 5;
   - each of n is 0, 1, or 2;
   - each of p is 2, or 6;
   - each of R₁ is independently selected from the group consisting of C₁₋₄ alkyl, C₂₋₄ alkenyl, C₃₋₆ cycloalkyl, and wherein said C₁₋₄ alkyl, C₂₋₄ alkenyl, and C₃₋₆ cycloalkyl are optionally substituted with one or more substituents independently selected from halo, or CF₃;
   - each of R₂ is independently selected from the group consisting of hydrogen, C₁₋₄ alkyl, C₁₋₆ alkoxyalkyl, C₂₋₄ alkenyl, C₃₋₆ cycloalkyl, C₆₋₁₀ aryl, -CORs, and wherein each of Rs, equal to or different from each other and at each occurrence, is independently C₁₋₄ alkyl, and wherein said C₁₋₄ alkyl, C₁₋₆ alkoxyalkyl, C₂₋₄ alkenyl, C₃₋₆ cycloalkyl, and C₆₋₁₀ aryl are optionally substituted with one or more substituents independently selected from halo, or CF₃;
   - each of R₃, R₄, R₅, and R₆, equal to or different from each other and at each occurrence, is independently selected from hydrogen, or C₁₋₄ alkyl, and wherein said C₁₋₄ alkyl is optionally substituted with one or more substituents independently selected from halo, or CF₃;
   - each of R₇ is independently selected from the group consisting of hydrogen, C₁₋₄ alkyl, C₂₋₄ alkenyl, C₃₋₆ cycloalkyl, C₆₋₁₀ aryl, and aralkyl, and wherein said C₁₋₄ alkyl, C₂₋₄ alkenyl, C₃₋₆ cycloalkyl, C₆₋₁₀ aryl, and aralkyl are optionally substituted with one or more substituents independently selected from halo, or CF₃;
- from 0.00 to 20.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- from 0.00 to 11.00 wt. % of at least one ingredient (I_{C}), as detailed above, wherein the composition (C) has a total solids content equal to or greater than 85.00 wt. %, relative to the total weight of the composition (C), and wherein the total solids content of the composition (C) is measured according to the standard ASTM D2369 - 20.

According to a preferred embodiment of the composition (C) of the present invention, the composition (C), as detailed above, consists essentially of, relative to the total weight of the composition (C):
- from 60.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 40.00 to 85.00 wt. % of at least one fatty acid residue having at least three conjugated double bonds, wherein said at least one fatty acid residue is a conjugated triene fatty acid residue; wherein the triglyceride oil composition optionally further comprises, relative to the total weight of all fatty acid residues in the triglyceride oil composition, from 10.00 to 50.00 wt. % of at least one fatty acid residue having at least two non-conjugated double bonds, wherein the at least two non-conjugated double bonds are separated by a methylene CH₂ group;
   wherein the triglyceride oil composition comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition optionally further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;

- from 0.01 to 2.00 wt. % of at least one metal-based drying agent, as detailed above; and
- from 0.75 to 30.00 wt. % of at least one aminosilane compound [compound (S), herein after] according to general Formula (I) 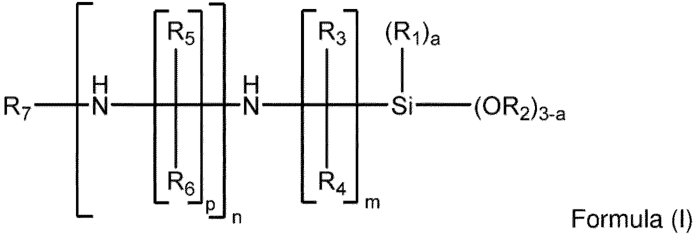 or according to general Formula (II) 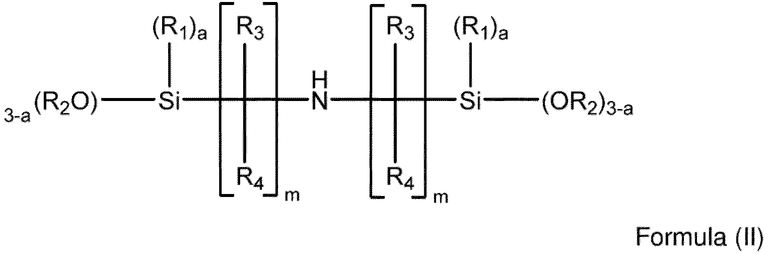 wherein
   - each of a is 0, 1, or 2;
   - each of m is 1, 2, 3, 4, or 5;
   - each of n is 0, 1, or 2;
   - each of p is 2, or 6;
   - each of R₁ is independently selected from the group consisting of C₁₋₄ alkyl, C₂₋₄ alkenyl, C₃₋₆ cycloalkyl, and wherein said C₁₋₄ alkyl, C₂₋₄ alkenyl, and C₃₋₆ cycloalkyl are optionally substituted with one or more substituents independently selected from halo, or CF₃;
   - each of R₂ is independently selected from the group consisting of hydrogen, C₁₋₄ alkyl, C₁₋₆ alkoxyalkyl, C₂₋₄ alkenyl, C₃₋₆ cycloalkyl, C₆₋₁₀ aryl, -CORs, and wherein each of R₈, equal to or different from each other and at each occurrence, is independently C₁₋₄ alkyl, and wherein said C₁₋₄ alkyl, C₁₋₆ alkoxyalkyl, C₂₋₄ alkenyl, C₃₋₆ cycloalkyl, and C₆₋₁₀ aryl are optionally substituted with one or more substituents independently selected from halo, or CF₃;
   - each of R₃, R₄, R₅, and R₆, equal to or different from each other and at each occurrence, is independently selected from hydrogen, or C₁₋₄ alkyl, and wherein said C₁₋₄ alkyl is optionally substituted with one or more substituents independently selected from halo, or CF₃;
   - each of R₇ is independently selected from the group consisting of hydrogen, C₁₋₄ alkyl, C₂₋₄ alkenyl, C₃₋₆ cycloalkyl, C₆₋₁₀ aryl, and aralkyl, and wherein said C₁₋₄ alkyl, C₂₋₄ alkenyl, C₃₋₆ cycloalkyl, C₆₋₁₀ aryl, and aralkyl are optionally substituted with one or more substituents independently selected from halo, or CF₃;
   - from 0.00 to 20.00 wt. % of at least one micronized wax [micronized wax (Mₚ), herein after] having a particle size D₉₀ equal to or less than 36 µm and a particle size D₅₀ equal to or less than 20 µm;
   - from 0.00 to 20.00 of at least one pigment, as detailed above; and
   - from 0.00 to 11.00 wt. % of at least one ingredient (I_{C}), as detailed above, wherein the composition (C) has a total solids content equal to or greater than 85.00 wt. %, relative to the total weight of the composition (C), and wherein the total solids content of the composition (C) is measured according to the standard ASTM D2369 - 20.

According to a more preferred embodiment of the composition (C) of the present invention, the composition (C), as detailed above, comprises, or consists essentially of, relative to the total weight of the composition (C):
- from 65.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 45.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9,11,13-trienoic acid), α-licanic acid (4-oxo-(9*Z*,11*E*,13*E*)-octadeca-9,11,13-trienoic acid or 4-oxo-α-eleostearic acid), jacaric acid ((8*Z*,10*E*,12*Z*)-octadeca-8,10,12-trienoic acid), and catalpic acid ((9*E*,11*E*,13*Z*)-octadeca-9,11,13-trienoic acid);
   wherein the triglyceride oil composition optionally further comprises, relative to the total weight of all fatty acid residues in the triglyceride oil composition, from 10.00 to 40.00 wt. % of at least one fatty acid residue having at least two non-conjugated double bonds, wherein the at least two non-conjugated double bonds are separated by a methylene CH₂ group;
   wherein the triglyceride oil composition optionally comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition optionally further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;
- from 0.01 to 2.00 wt. % of at least one metal-based drying agent, as detailed above; and
- from 0.75 to 30.00 wt. % of at least one aminosilane compound [compound (S), herein after] chosen among those of Formula (I₁) [compound (S_{I.1}), herein after], Formula (I₂) [compound (S_{I.2}), herein after], and Formula (II₁) [compound (S_{II.1}), herein after]: 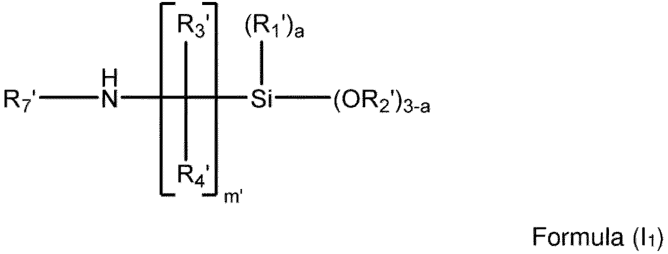 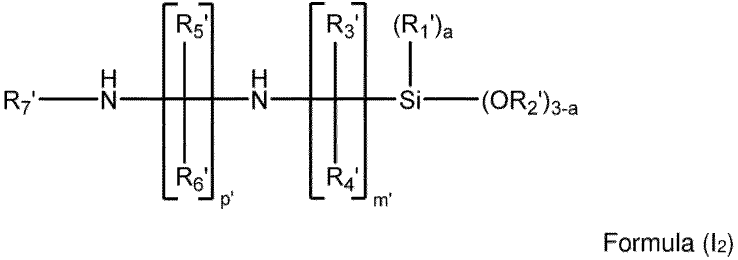 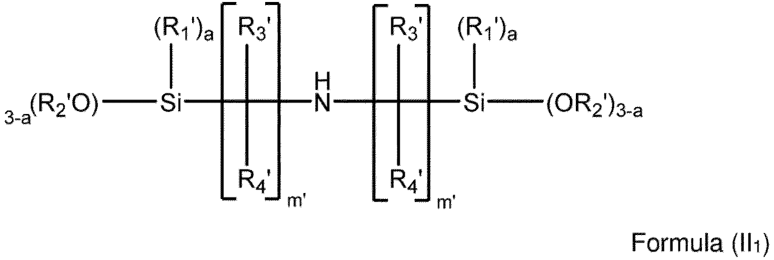 wherein
   - each of a is 0, 1, or 2;
   - each of m' is 1, 2, 3, or 4;
   - each of p' is 2, or 6;
   - each of R₁' is independently selected from C₁₋₄ alkyl, and wherein said C₁₋₄ alkyl is optionally substituted with one or more substituents independently selected from halo, or CF₃;
   - each of R₂' is independently selected from the group consisting of hydrogen, C₁₋₄ alkyl, and C₁₋₆ alkoxyalkyl, and wherein said C₁₋₄ alkyl, and C₁₋₆ alkoxyalkyl are optionally substituted with one or more substituents independently selected from halo, or CF₃;
   - each of R₃', R₄', R₅', and R₆', equal to or different from each other and at each occurrence, is independently selected from the group consisting of hydrogen, methyl, ethyl, propyl, and isopropyl;
   - each of R₇' is independently selected from the group consisting of hydrogen, C₁₋₄ alkyl, C₂₋₄ alkenyl, C₃₋₆ cycloalkyl, C₆₋₁₀ aryl, and aralkyl, and wherein said C₁₋₄ alkyl, C₂₋₄ alkenyl, C₃₋₆ cycloalkyl, C₆₋₁₀ aryl, and aralkyl are optionally substituted with one or more substituents independently selected from halo, or CF₃;
   - from 0.00 to 20.00 wt. % of at least one micronized wax [micronized wax (Mₚ), herein after] having a particle size D₉₀ equal to or less than 36 µm and a particle size D₅₀ equal to or less than 20 µm;
   - from 0.00 to 20.00 of at least one pigment, as detailed above; and
   - from 0.00 to 11.00 wt. % of at least one ingredient (I_{C}), as detailed above, wherein the composition (C) has a total solids content equal to or greater than 85.00 wt. %, relative to the total weight of the composition (C), and wherein the total solids content of the composition (C) is measured according to the standard ASTM D2369 - 20.

According to a more preferred embodiment of the composition (C) of the present invention, the composition (C), as detailed above, consists essentially of, relative to the total weight of the composition (C):
- from 65.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 45.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z*,11E,13E)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13Z)-octadeca-9,11,13-trienoic acid), and α-licanic acid (4-oxo-(9*Z*,11*E*,13*E*)-octadeca-9,11,13-trienoic acid or 4-oxo-α-eleostearic acid);
   wherein the triglyceride oil composition optionally further comprises, relative to the total weight of all fatty acid residues in the triglyceride oil composition, from 10.00 to 40.00 wt. % of at least one fatty acid residue having at least two non-conjugated double bonds, wherein the at least two non-conjugated double bonds are separated by a methylene CH₂ group;
   wherein the triglyceride oil composition comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition optionally further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;
- from 0.01 to 2.00 wt. % of at least one metal-based drying agent, as detailed above; and
- from 0.75 to 30.00 wt. % of at least one aminosilane compound [compound (S), herein after] chosen among those of Formula (I₁) [compound (S_{I.1}), herein after], Formula (I₂) [compound (S_{I.2}), herein after], and Formula (II₁) [compound (S_{II.1}), herein after]: 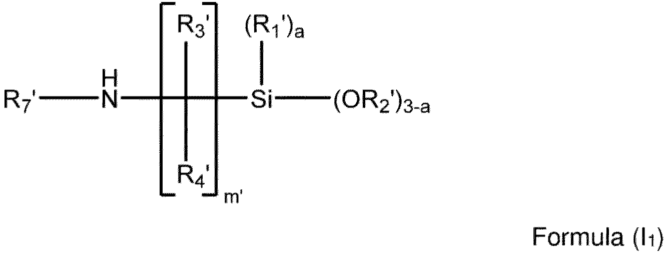 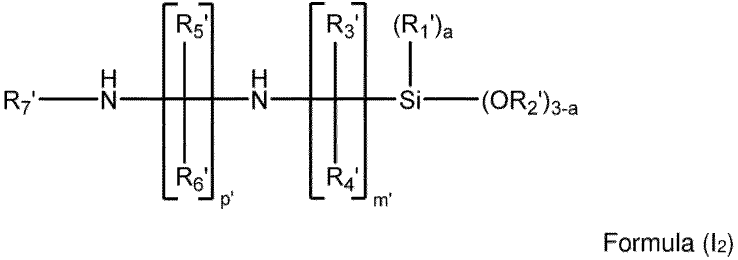 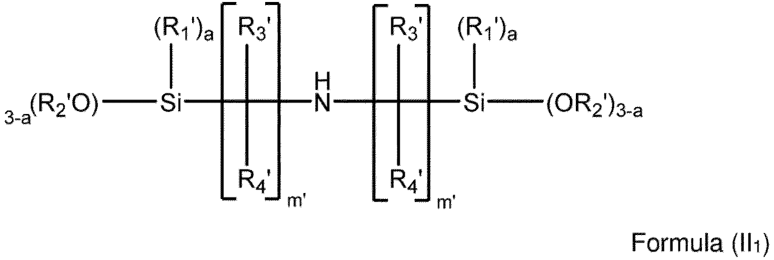 wherein
   - each of a is 0, 1, or 2;
   - each of m' is 1, 2, 3, or 4;
   - each of p' is 2, or 6;
   - each of R₁' is independently selected from C₁₋₄ alkyl, and wherein said C₁₋₄ alkyl is optionally substituted with one or more substituents independently selected from halo, or CF₃;
   - each of R₂' is independently selected from the group consisting of hydrogen, C₁₋₄ alkyl, and C₁₋₆ alkoxyalkyl, and wherein said C₁₋₄ alkyl, and C₁₋₆ alkoxyalkyl are optionally substituted with one or more substituents independently selected from halo, or CF₃;
   - each of R₃', R₄', R₅', and R₆', equal to or different from each other and at each occurrence, is independently selected from the group consisting of hydrogen, methyl, ethyl, propyl, and isopropyl;
   - each of R₇' is independently selected from the group consisting of hydrogen, C₁₋₄ alkyl, C₂₋₄ alkenyl, C₃₋₆ cycloalkyl, C₆₋₁₀ aryl, and aralkyl, and wherein said C₁₋₄ alkyl, C₂₋₄ alkenyl, C₃₋₆ cycloalkyl, C₆₋₁₀ aryl, and aralkyl are optionally substituted with one or more substituents independently selected from halo, or CF₃;
   - from 0.00 to 20.00 wt. % of at least one micronized wax [micronized wax (Mₚ), herein after] having a particle size D₉₀ equal to or less than 36 µm and a particle size D₅₀ equal to or less than 20 µm;
   - from 0.00 to 20.00 of at least one pigment, as detailed above; and
   - from 0.00 to 11.00 wt. % of at least one ingredient (I_{C}), as detailed above, wherein the composition (C) has a total solids content equal to or greater than 85.00 wt. %, relative to the total weight of the composition (C), and wherein the total solids content of the composition (C) is measured according to the standard ASTM D2369 - 20.

According to a more preferred embodiment of the composition (C) of the present invention, the composition (C), as detailed above, comprises, or consists essentially of, relative to the total weight of the composition (C):
- from 70.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 50.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z*,11E,13E)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9,11,13-trienoic acid), α-licanic acid (4-oxo-(9*Z*,11*E*,13*E*)-octadeca-9,11,13-trienoic acid or 4-oxo-α-eleostearic acid), jacaric acid ((8*Z*,10*E*,12*Z*)-octadeca-8,10,12-trienoic acid), and catalpic acid ((9*E*,11*E*,13*Z)*-octadeca-9,11,13-trienoic acid);
   wherein the triglyceride oil composition further comprises, relative to the total weight of all fatty acid residues in the triglyceride oil composition, from 10.00 to 40.00 wt. % of at least one fatty acid residue having at least two non-conjugated double bonds, wherein the at least two non-conjugated double bonds are separated by a methylene CH₂ group, and wherein said at least one fatty acid residue has a non-conjugated moiety selected from 1,4-pentadiene or 1,4,7-octatriene;
   wherein the triglyceride oil composition optionally comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition optionally further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;
- from 0.01 to 2.00 wt. % of at least one metal-based drying agent, wherein the at least one metal-based drying agent is a metal-based salt wherein the metal cation component is selected from the group consisting of manganese (Mn), iron (Fe), cobalt (Co), zirconium (Zr), and calcium (Ca); wherein the anion component is selected from the group consisting of halides, nitrates, sulphates, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands; and
- from 0.75 to 25.00 wt. % of at least one aminosilane compound [compound (S), herein after] chosen among those of Formula (li) [compound (S_{I.1}), herein after], Formula (I₂) [compound (S_{I.2}), herein after], and Formula (II₁) [compound (S_{II.1}), herein after]: 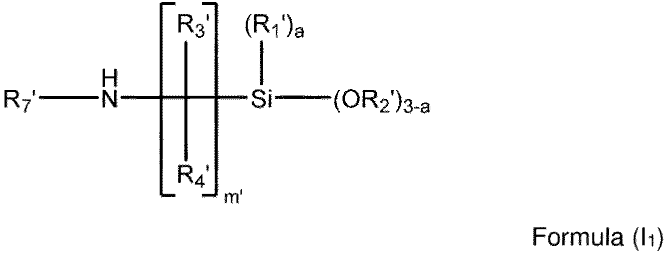 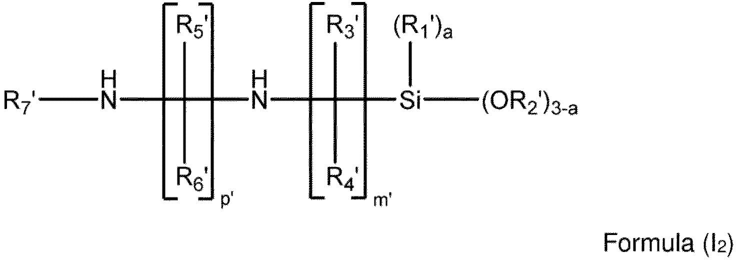 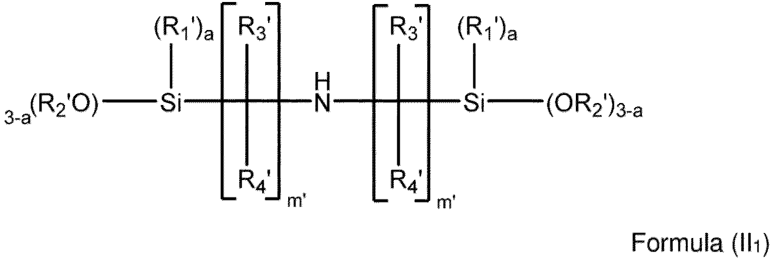 wherein
   - each of a is 0, 1, or 2;
   - each of m' is 1, 3, or 4;
   - each of p' is 2, or 6;
   - each of R₁' is independently selected from the group consisting of methyl, ethyl, propyl, and isopropyl;
   - each of R₂' is independently selected from C₁₋₄ alkyl, and wherein said C₁₋₄ alkyl is optionally substituted with one or more substituents independently selected from halo, or CF₃;
   - each of R₃', R₄', R₅', and R₆', equal to or different from each other and at each occurrence, is independently selected from the group consisting of hydrogen, methyl, and ethyl;
   - each of R₇' is independently selected from the group consisting of hydrogen, C₁₋₄ alkyl, allyl, C₅₋₆ cycloalkyl, phenyl, and benzyl, and wherein said C₁₋₄ alkyl, allyl, C₅₋₆ cycloalkyl, phenyl, and benzyl are optionally substituted with one or more substituents independently selected from halo, or CF₃;
   - optionally from 2.00 to 20.00 wt. % of at least one micronized wax [micronized wax (Mₚ), herein after] having a particle size D₉₀ equal to or less than 36 µm and a particle size D₅₀ equal to or less than 20 µm;
   - from 0.00 to 20.00 of at least one pigment, as detailed above; and
   - optionally from 0.10 to 11.00 wt. % of at least one ingredient (I_{C}), as detailed above,
   wherein the composition (C) has a total solids content equal to or greater than 90.00 wt. %, relative to the total weight of the composition (C), and wherein the total solids content of the composition (C) is measured according to the standard ASTM D2369 - 20.

According to a more preferred embodiment of the composition (C) of the present invention, the composition (C), as detailed above, consists essentially of, relative to the total weight of the composition (C):
- from 70.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 50.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9,11,13-trienoic acid), and α-licanic acid (4-oxo-(9*Z*,11*E*,13*E*)-octadeca-9,11,13-trienoic acid or 4-oxo-α-eleostearic acid);
   wherein the triglyceride oil composition further comprises, relative to the total weight of all fatty acid residues in the triglyceride oil composition, from 10.00 to 40.00 wt. % of at least one fatty acid residue having at least two non-conjugated double bonds, wherein the at least two non-conjugated double bonds are separated by a methylene CH₂ group, and wherein said at least one fatty acid residue has a non-conjugated moiety selected from 1,4-pentadiene or 1,4,7-octatriene;
   wherein the triglyceride oil composition comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;
- from 0.01 to 2.00 wt. % of at least one metal-based drying agent, wherein the at least one metal-based drying agent is a metal-based salt wherein the metal cation component is selected from the group consisting of manganese (Mn), iron (Fe), cobalt (Co), zirconium (Zr), and calcium (Ca);
   wherein the anion component is selected from the group consisting of halides, nitrates, sulphates, acetoacetonates, and carboxylates such as naphthenates, linoleates, octoates, ethylhexanoates such as 2-ethylhexanoate, decanoates, neodecanoates, and dodecanoates; and
   wherein the metal-based salt is optionally complexed with at least one nitrogen donor ligand selected from the group consisting of monodentate, bidentate, tridentate, tetradentate, pentadentate, and hexadentate nitrogen donor ligands; and
- from 0.75 to 25.00 wt. % of at least one aminosilane compound [compound (S), herein after] chosen among those of Formula (I₁) [compound (S_{I.1}), herein after], Formula (I₂) [compound (S_{I.2}), herein after], and Formula (II₁) [compound (S_{II.1}), herein after]: 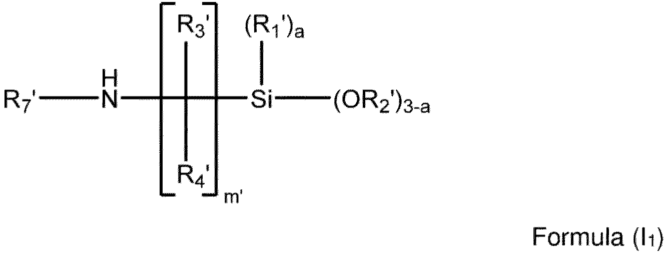 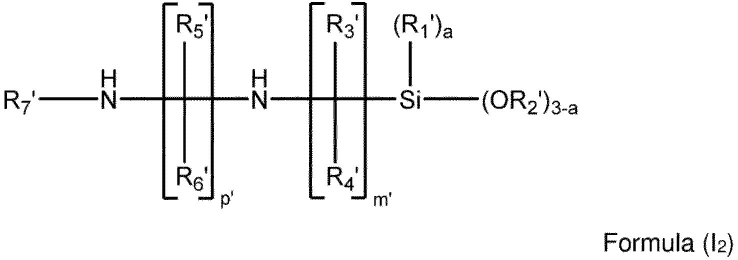 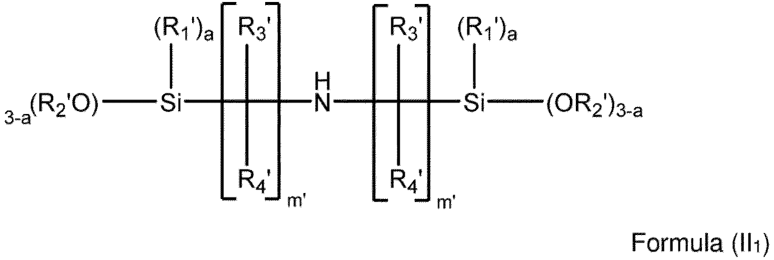 wherein
   - each of a is 0, 1, or 2;
   - each of m' is 1, 3, or 4;
   - each of p' is 2, or 6;
   - each of R₁' is independently selected from the group consisting of methyl, ethyl, propyl, and isopropyl;
   - each of R₂' is independently selected from C₁₋₄ alkyl, and wherein said C₁₋₄ alkyl is optionally substituted with one or more substituents independently selected from halo, or CF₃;
   - each of R₃', R₄', R₅', and R₆', equal to or different from each other and at each occurrence, is independently selected from the group consisting of hydrogen, methyl, and ethyl;
   - each of R₇' is independently selected from the group consisting of hydrogen, C₁₋₄ alkyl, allyl, C₅₋₆ cycloalkyl, phenyl, and benzyl, and wherein said C₁₋₄ alkyl, allyl, C₅₋₆ cycloalkyl, phenyl, and benzyl are optionally substituted with one or more substituents independently selected from halo, or CF₃;
- optionally from 2.00 to 20.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- optionally from 0.10 to 11.00 wt. % of at least one ingredient (I_{C}), as detailed above,
wherein the composition (C) has a total solids content equal to or greater than 90.00 wt. %, relative to the total weight of the composition (C), and wherein the total solids content of the composition (C) is measured according to the standard ASTM D2369 - 20.

According to a more preferred embodiment of the composition (C) of the present invention, the composition (C), as detailed above, comprises, or consists essentially of, relative to the total weight of the composition (C):
- from 70.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 55.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z*,11E,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9,11,13-trienoic acid), α-licanic acid (4-oxo-(9*Z*,11*E*,13*E*)-octadeca-9,11,13-trienoic acid or 4-oxo-α-eleostearic acid), jacaric acid ((8*Z*,10*E*,12*Z*)-octadeca-8,10,12-trienoic acid), and catalpic acid ((9*E*,11E,13*Z*)-octadeca-9,11,13-trienoic acid);
   wherein the triglyceride oil composition further comprises, relative to the total weight of all fatty acid residues in the triglyceride oil composition, from 11.00 to 35.00 wt. % of at least one fatty acid residue having at least two non-conjugated double bonds, wherein the at least two non-conjugated double bonds are separated by a methylene CH₂ group, and wherein said at least one fatty acid residue has a non-conjugated moiety selected from 1,4-pentadiene or 1,4,7-octatriene;
   wherein the triglyceride oil composition optionally comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition optionally further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;
- from 0.01 to 2.00 wt. % of at least one metal-based drying agent, wherein the at least one metal-based drying agent is a metal-based salt wherein the metal cation component is selected from the group consisting of manganese (Mn), iron (Fe), cobalt (Co), zirconium (Zr), and calcium (Ca); wherein the anion component is selected from the group consisting of halides, nitrates, sulphates, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands; and
- from 0.80 to 20.00 wt. % of at least one aminosilane compound [compound (S), herein after] chosen among those of Formula (I₁) [compound (S_{I.1}), herein after], Formula (I₂) [compound (S_{I.2}), herein after], and Formula (II₁) [compound (S_{II.1}), herein after]: 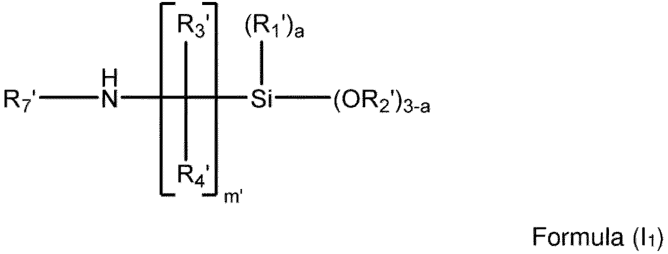 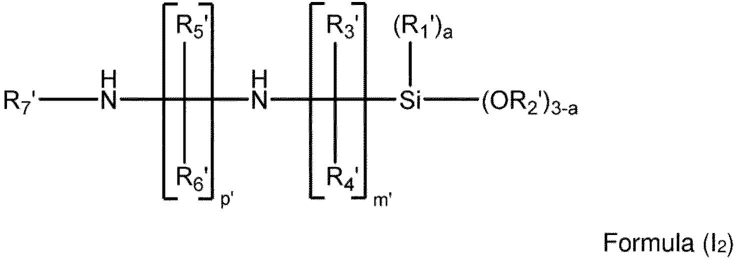 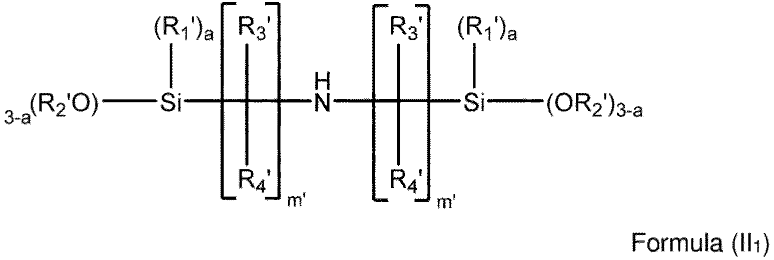 wherein
   - each of a is 0, 1, or 2;
   - each of m' is 1, 3, or 4;
   - each of p' is 2, or 6;
   - each of R₁' is independently selected from the group consisting of methyl, ethyl, propyl, and isopropyl;
   - each of R₂' is independently selected from C₁₋₄ alkyl, and wherein said C₁₋₄ alkyl is optionally substituted with one or more substituents independently selected from halo, or CF₃;
   - each of R₃', R₄', R₅', and R₆', equal to or different from each other and at each occurrence, is independently selected from the group consisting of hydrogen, methyl, and ethyl;
   - each of R₇' is independently selected from the group consisting of hydrogen, C₁₋₄ alkyl, allyl, C₅₋₆ cycloalkyl, phenyl, and benzyl, and wherein said C₁₋₄ alkyl, allyl, C₅₋₆ cycloalkyl, phenyl, and benzyl are optionally substituted with one or more substituents independently selected from halo, or CF₃;
- optionally from 2.00 to 20.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- optionally from 0.10 to 11.00 wt. % of at least one ingredient (I_{C}), as detailed above,
wherein the composition (C) has a total solids content equal to or greater than 92.50 wt. %, relative to the total weight of the composition (C), and wherein the total solids content of the composition (C) is measured according to the standard ASTM D2369 - 20.

According to a more preferred embodiment of the composition (C) of the present invention, the composition (C), as detailed above, consists essentially of, relative to the total weight of the composition (C):
- from 70.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 55.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z*,11E,13E)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9,11,13-trienoic acid), and α-licanic acid (4-oxo-(9*Z*,11*E*,13*E*)-octadeca-9,11,13-trienoic acid or 4-oxo-α-eleostearic acid);
   wherein the triglyceride oil composition further comprises, relative to the total weight of all fatty acid residues in the triglyceride oil composition, from 11.00 to 35.00 wt. % of at least one fatty acid residue having at least two non-conjugated double bonds, wherein the at least two non-conjugated double bonds are separated by a methylene CH₂ group, and wherein said at least one fatty acid residue has a non-conjugated moiety selected from 1,4-pentadiene or 1,4,7-octatriene;
   wherein the triglyceride oil composition comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;
- from 0.01 to 2.00 wt. % of at least one metal-based drying agent, wherein the at least one metal-based drying agent is a metal-based salt wherein the metal cation component is selected from the group consisting of manganese (Mn), iron (Fe), cobalt (Co), zirconium (Zr), and calcium (Ca); wherein the anion component is selected from the group consisting of halides, nitrates, sulphates, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands; and
- from 0.80 to 20.00 wt. % of at least one aminosilane compound [compound (S), herein after] chosen among those of Formula (I₁) [compound (S_{I.1}), herein after], Formula (I₂) [compound (S_{I.2}), herein after], and Formula (II₁) [compound (S_{II.1}), herein after]: 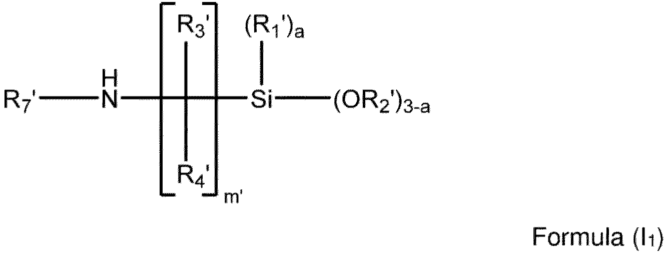 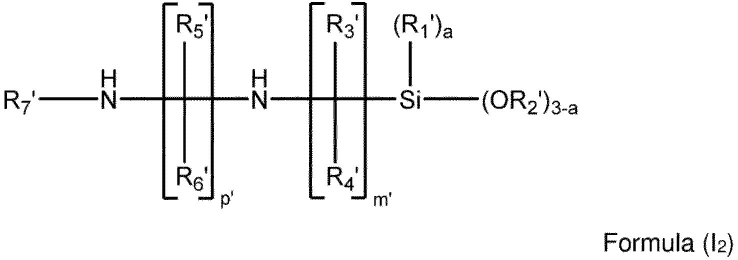 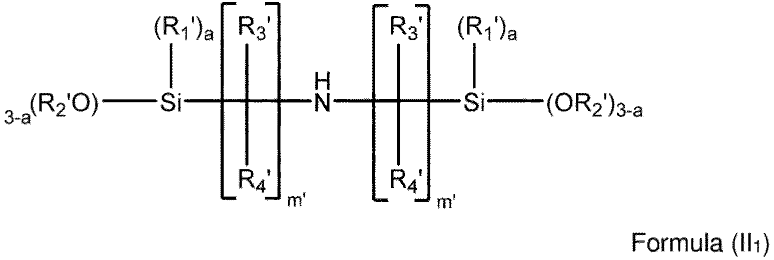 wherein
   - each of a is 0, 1, or 2;
   - each of m' is 1, 3, or 4;
   - each of p' is 2, or 6;
   - each of R₁' is independently selected from the group consisting of methyl, ethyl, propyl, and isopropyl;
   - each of R₂' is independently selected from C₁₋₄ alkyl, and wherein said C₁₋₄ alkyl is optionally substituted with one or more substituents independently selected from halo, or CF₃;
   - each of R₃', R₄', R₅', and R₆', equal to or different from each other and at each occurrence, is independently selected from the group consisting of hydrogen, methyl, and ethyl;
   - each of R₇' is independently selected from the group consisting of hydrogen, C₁₋₄ alkyl, allyl, C₅₋₆ cycloalkyl, phenyl, and benzyl, and wherein said C₁₋₄ alkyl, allyl, C₅₋₆ cycloalkyl, phenyl, and benzyl are optionally substituted with one or more substituents independently selected from halo, or CF₃;
   - optionally from 2.00 to 20.00 wt. % of at least one micronized wax [micronized wax (Mₚ), herein after] having a particle size D₉₀ equal to or less than 36 µm and a particle size D₅₀ equal to or less than 20 µm;
   - from 0.00 to 20.00 of at least one pigment, as detailed above; and
   - optionally from 0.10 to 11.00 wt. % of at least one ingredient (I_{C}), as detailed above,
wherein the composition (C) has a total solids content equal to or greater than 92.50 wt. %, relative to the total weight of the composition (C), and wherein the total solids content of the composition (C) is measured according to the standard ASTM D2369 - 20.

According to an even more preferred embodiment of the composition (C) of the present invention, the composition (C), as detailed above, comprises, or consists essentially of, relative to the total weight of the composition (C):
- from 75.00 to 95.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 60.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12Z)-octadeca-8,10,12-trienoic acid), and β-calendic acid ((8*E*,10*E*,12*E*)-octadeca-8,10,12-trienoic acid);
   wherein the triglyceride oil composition further comprises, relative to the total weight of all fatty acid residues in the triglyceride oil composition, from 12.00 to 30.00 wt. % of at least one fatty acid residue having at least two non-conjugated double bonds, wherein the at least two non-conjugated double bonds are separated by a methylene CH₂ group, wherein said at least one fatty acid residue has a non-conjugated moiety selected from 1,4-pentadiene or 1,4,7-octatriene, and wherein said at least one fatty acid residue is selected from fatty acid residues of linoleic acid ((9Z,12Z)-octadeca-9,12-dienoic acid), or α-linolenic acid ((9Z,12Z,15Z)-octadeca-9,12,15-trienoic acid);
   wherein the triglyceride oil composition comprises at least one first drying oil, said at least one first drying oil comprising the at least one fatty acid residue having at least three conjugated double bonds, and wherein the at least one first drying oil is selected from tung oil, or calendula seed oil; and
   wherein the triglyceride oil composition optionally further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, and walnut oil;
- from 0.01 to 2.00 wt. % of at least one metal-based drying agent, wherein the at least one metal-based drying agent is a metal-based salt wherein the metal cation component is selected from the group consisting of manganese (Mn), iron (Fe), and cobalt (Co); wherein the anion component is selected from the group consisting of halides, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands; and
- from 0.80 to 15.00 wt. % of at least one aminosilane compound [compound (S), herein after] chosen among those of Formula (I₁) [compound (S_{I.1}), herein after], Formula (I₂) [compound (S_{I.2}), herein after], and Formula (II₁) [compound (S_{II.1}), herein after]: 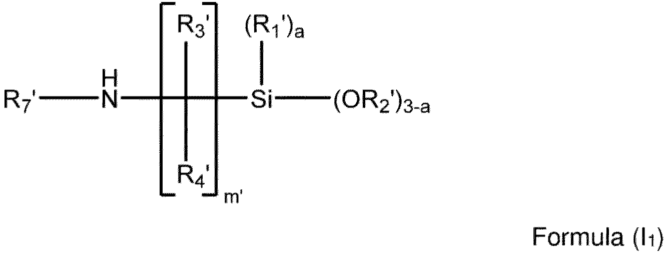 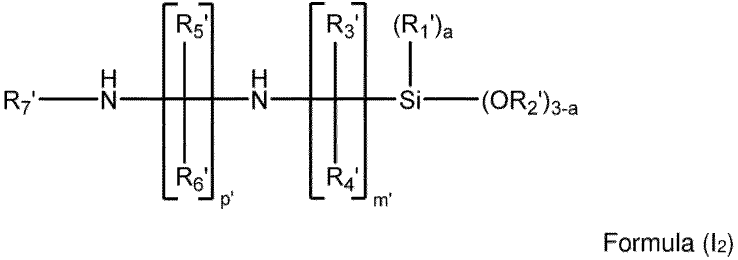 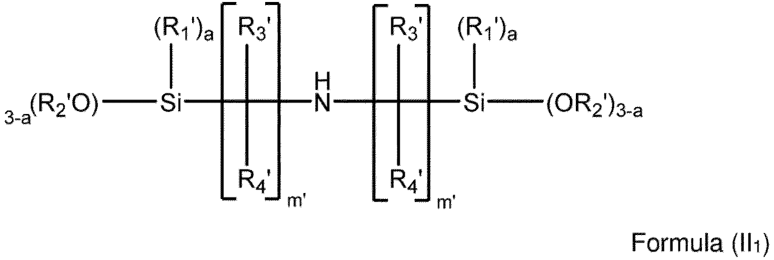 wherein
   - each of a is 0, 1, or 2;
   - each of m' is 1, or 3;
   - each of p' is 2, or 6;
   - each of R₁' is independently selected from the group consisting of methyl, ethyl, propyl, and isopropyl;
   - each of R₂' is independently selected from the group consisting of methyl, ethyl, propyl, and isopropyl;
   - each of R₃', R₄', R₅', and R₆', equal to or different from each other and at each occurrence, is independently selected from hydrogen, or methyl;
   - each of R₇' is independently selected from the group consisting of hydrogen, C₁₋₄ alkyl, allyl, C₅₋₆ cycloalkyl, phenyl, and benzyl, and wherein said C₁₋₄ alkyl, allyl, C₅₋₆ cycloalkyl, phenyl, and benzyl are optionally substituted with one or more substituents independently selected from halo, or CF₃;
- optionally from 5.00 to 20.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- optionally from 0.10 to 11.00 wt. % of at least one ingredient (I_{C}), as detailed above,
wherein the composition (C) has a total solids content equal to or greater than 95.00 wt. %, relative to the total weight of the composition (C), and wherein the total solids content of the composition (C) is measured according to the standard ASTM D2369 - 20.

According to an even more preferred embodiment of the composition (C) of the present invention, the composition (C), as detailed above, consists essentially of, relative to the total weight of the composition (C):
- from 75.00 to 95.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 60.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), and β-calendic acid ((8*E*,10*E*,12*E*)-octadeca-8,10,12-trienoic acid);
   wherein the triglyceride oil composition further comprises, relative to the total weight of all fatty acid residues in the triglyceride oil composition, from 12.00 to 30.00 wt. % of at least one fatty acid residue having at least two non-conjugated double bonds, wherein the at least two non-conjugated double bonds are separated by a methylene CH₂ group, wherein said at least one fatty acid residue has a non-conjugated moiety selected from 1,4-pentadiene or 1,4,7-octatriene, and wherein said at least one fatty acid residue is selected from fatty acid residues of linoleic acid ((9*Z*,12*Z*)-octadeca-9,12-dienoic acid), or α-linolenic acid ((9*Z*,12*Z*,15*Z*)-octadeca-9,12,15-trienoic acid);
   wherein the triglyceride oil composition comprises at least one first drying oil, said at least one first drying oil comprising the at least one fatty acid residue having at least three conjugated double bonds, and wherein the at least one first drying oil is selected from tung oil, or calendula seed oil; and
   wherein the triglyceride oil composition further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, and walnut oil;
- from 0.01 to 2.00 wt. % of at least one metal-based drying agent, wherein the at least one metal-based drying agent is a metal-based salt wherein the metal cation component is selected from the group consisting of manganese (Mn), iron (Fe), and cobalt (Co); wherein the anion component is selected from the group consisting of halides, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands; and
- from 0.80 to 15.00 wt. % of at least one aminosilane compound [compound (S), herein after] chosen among those of Formula (I₁) [compound (S_{I.1}), herein after], Formula (I₂) [compound (S_{I.2}), herein after], and Formula (II₁) [compound (S_{II.1}), herein after]: 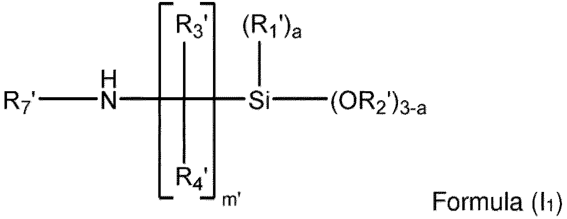 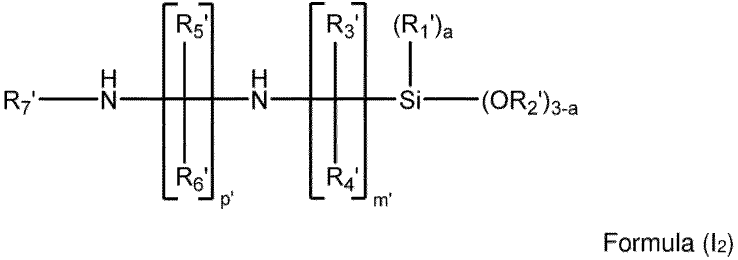 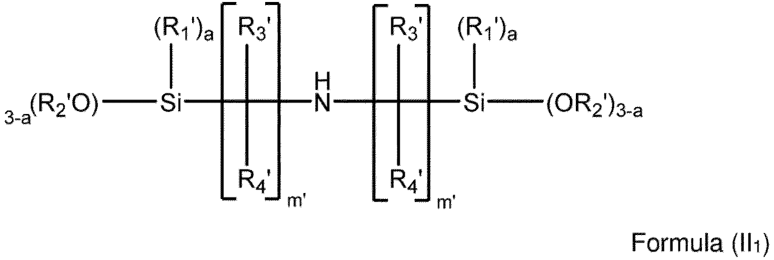 wherein
   - each of a is 0, 1, or 2;
   - each of m' is 1, or 3;
   - each of p' is 2, or 6;
   - each of R₁' is independently selected from the group consisting of methyl, ethyl, propyl, and isopropyl;
   - each of R₂' is independently selected from the group consisting of methyl, ethyl, propyl, and isopropyl;
   - each of R₃', R₄', R₅', and R₆', equal to or different from each other and at each occurrence, is independently selected from hydrogen, or methyl;
   - each of R₇' is independently selected from the group consisting of hydrogen, C₁₋₄ alkyl, allyl, C₅₋₆ cycloalkyl, phenyl, and benzyl, and wherein said C₁₋₄ alkyl, allyl, C₅₋₆ cycloalkyl, phenyl, and benzyl are optionally substituted with one or more substituents independently selected from halo, or CF₃;
- optionally from 5.00 to 20.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- optionally from 0.10 to 11.00 wt. % of at least one ingredient (I_{C}), as detailed above,
wherein the composition (C) has a total solids content equal to or greater than 95.00 wt. %, relative to the total weight of the composition (C), and wherein the total solids content of the composition (C) is measured according to the standard ASTM D2369 - 20.

According to a yet even more preferred embodiment of the composition (C) of the present invention, the composition (C), as detailed above, comprises, or consists essentially of, relative to the total weight of the composition (C):
- from 75.00 to 95.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 60.00 to 75.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), and β-calendic acid ((8*E*,10*E*,12*E*)-octadeca-8,10,12-trienoic acid);
   wherein the triglyceride oil composition further comprises, relative to the total weight of all fatty acid residues in the triglyceride oil composition, from 13.00 to 25.00 wt. % of at least one fatty acid residue having at least two non-conjugated double bonds, wherein the at least two non-conjugated double bonds are separated by a methylene CH₂ group, wherein said at least one fatty acid residue has a non-conjugated moiety selected from 1,4-pentadiene or 1,4,7-octatriene, and wherein said at least one fatty acid residue is selected from fatty acid residues of linoleic acid ((9*Z*,12*Z*)-octadeca-9,12-dienoic acid), or α-linolenic acid ((9*Z*,12*Z*,15*Z*)-octadeca-9,12,15-trienoic acid);
   wherein the triglyceride oil composition comprises at least one first drying oil, said at least one first drying oil comprising the at least one fatty acid residue having at least three conjugated double bonds, and wherein the at least one first drying oil is selected from tung oil, or calendula seed oil; and
   wherein the triglyceride oil composition further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, and walnut oil;
- from 0.01 to 2.00 wt. % of at least one metal-based drying agent, wherein the at least one metal-based drying agent is a metal-based salt wherein the metal cation component is selected from the group consisting of manganese (Mn), iron (Fe), and cobalt (Co); wherein the anion component is selected from the group consisting of halides, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands; and
- from 0.90 to 10.00 wt. % of at least one aminosilane compound [compound (S), herein after] chosen among those of Formula (I_{1'}) [compound (S_{I.1'}), herein after], Formula (I_{2'}) [compound (S_{I.2'}), herein after], and Formula (II_{1'}) [compound (S_{II.1'}), herein after]: 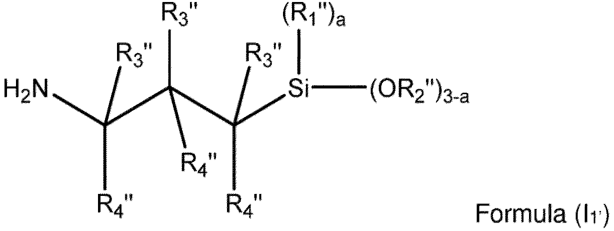 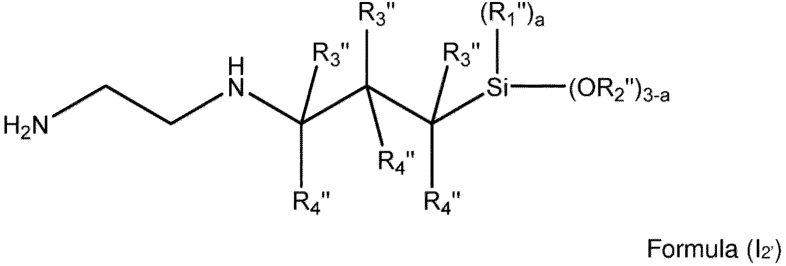 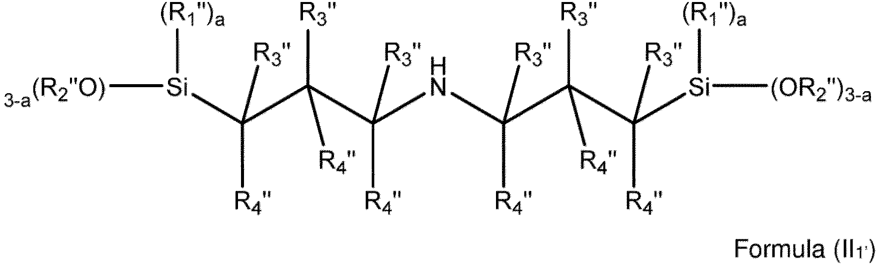 wherein
   - each of a is 0, 1, or 2;
   - each of R₁" is independently selected from the group consisting of methyl, ethyl, propyl, and isopropyl;
   - each of R₂" is independently selected from the group consisting of methyl, ethyl, propyl, and isopropyl;
   - each of R₃", and R₄", equal to or different from each other and at each occurrence, is independently selected from hydrogen, or methyl;
- optionally from 5.00 to 15.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- optionally from 0.10 to 11.00 wt. % of at least one ingredient (I_{C}), as detailed above,
wherein the composition (C) has a total solids content equal to or greater than 97.00 wt. %, relative to the total weight of the composition (C), and wherein the total solids content of the composition (C) is measured according to the standard ASTM D2369 - 20.

For the purpose of the present invention, the expression "consists essentially of" is intended to denote that, relative to the total weight of the composition (C), any additional ingredient different from the triglyceride oil composition, as detailed above, the at least one metal-based drying agent, as detailed above, the at least one compound (S) according to general Formula (I) or according to general Formula (II), as detailed above, and, when present, the at least one micronized wax (Mₚ), as detailed above, and, when present, the at least one pigment, as detailed above, and, when present, the at least one ingredient (I_{C}), as detailed above, is present in minor amounts in said composition (C), being understood that these latter do not substantially modify the properties of said composition (C).

Another aspect of the present invention is a method for the manufacturing of the composition (C), as detailed above.

It is further understood that all definitions and preferences, as described above, equally apply for all further embodiments, as described below.

The composition (C) of the present invention can be manufactured by a variety of methods known in the art. For manufacturing composition (C) of the present invention, several methods known in the art may adequately be used.

In one embodiment of the present invention, the method for the manufacturing of the composition (C), as detailed above, comprises intimate admixing of the triglyceride oil composition, as detailed above, the at least one metal-based drying agent, as detailed above, the at least one compound (S) according to general Formula (I) or according to general Formula (II), as detailed above, optionally the at least one micronized wax (Mₚ), as detailed above, optionally the at least one pigment, as detailed above, and optionally the at least one additional ingredient (I_{C}), as detailed above.

According to one embodiment of the present invention, the method for the manufacturing of the composition (C), as detailed above, comprises the following steps of intimate admixing:
- from 60.00 to 99.00 % wt. % of a triglyceride oil composition, as detailed above;
- from 0.01 to 2.00 wt. % of at least one metal-based drying agent, as detailed above;
- from 0.75 to 30.00 wt. % of at least one compound (S) according to general Formula (I) or according to general Formula (II), as detailed above;
- optionally at least one micronized wax (Mₚ), as detailed above;
- optionally at least one pigment, as detailed above;
- optionally at least one ingredient (I_{C}), as detailed above;
wherein all wt. % are relative to the total weight of the composition (C), and wherein the admixing of the at least one micronized wax (Mₚ), when present, is carried out at a temperature lower than the melting point of said micronized wax (Mₚ).

According to one embodiment of the method for the manufacturing of the composition (C) of the present invention, as detailed above, the triglyceride oil composition, as detailed above, is prepared from at least one first drying oil, as detailed above, and wherein said at least one first drying oil is optionally further admixed with at least one second drying oil, as detailed above. Within the context of the present invention, it is understood that the at least one second drying oil may but does not need to be admixed with the first drying oil prior to admixing with the other constituent components of the composition (C).

According to a preferred embodiment of the method for the manufacturing of the composition (C) of the present invention, as detailed above, the triglyceride oil composition, as detailed above and as comprised in the composition (C), is prepared by admixing at least one first drying oil, as detailed above, and at least one second drying oil, as detailed above.

Generally said intimate admixing, as detailed above, may be carried out by using traditional mixers and blenders, high intensity mixers and electric stirrers, said mixers, blenders and stirrers which can be equipped with at least one dispersion disk.

Non-limiting examples of high intensity mixers notably include those high intensity mixers as commercially available from Dispermill, and from ROSS Mixers.

Non-limiting examples of dispersion disks notably include those dispersion disks as commercially available from Dispermill.

It is understood that the skilled person in the art will carry out said intimate admixing according to general practice such as notably using optimal times, speeds, weights, volumes and batch quantities.

Furthermore, it is understood that any order of intimate admixing of the various components as comprised in the composition (C), as detailed above, is acceptable.

Another aspect of the present invention is a method for treating a surface or at least part of a surface of a wood product wherein said wood product is treated with the composition (C), as detailed above.

It is further understood that all definitions and preferences, as described above, equally apply for all further embodiments, as described below.

As non-limiting examples of suitable wood products mention may be made of decking; siding; siding cladding; roof shingles; furniture; veneer; flooring; wood-based composite panels such as particle board (PB), hardboard, plywood, oriented strand board (OSB), flake board, chipboard and fibreboard such as medium density fibreboard (MDF), and high density fibreboard (HDF).

In general, the method for treating the surface or at least part of the surface of the wood product is not limited to wood products made of a particular type of wood.

Non-limiting examples of suitable types of wood notably include i. hardwood such as woods from dicotyledonous trees such as ash, mahogany, troko, beech, oak, maple, birch, walnut, teak, alder, aspen, elm, gum, poplar or willow, ii. softwood such as woods from coniferous trees such as larch, pine, fir, Douglas fir, hemlock, redwood, or spruce, or iii. certain other lignocellulosic materials such as bamboo, or hemp.

As non-limiting examples, suitable hardwood floorings notably include solid hardwood flooring such as solid parquet, or engineered hardwood flooring such as engineered parquet.

Preferred wood products are chosen among furniture, solid hardwood flooring, or engineered hardwood flooring.

Among the suitable manners for applying the composition (C), as detailed above, to the surface or at least part of the surface of the wood products, as detailed above, mention can be notably made of conventional application methods known to those skilled in the art of wood coating compositions such as painting; spraying such as air-atomized spraying, air-assisted spraying and airless spraying; flow-coating; transfer-coating; roller coating; brushing; impregnating; dipping; spreading; curtain coating; and the like by using conventional equipment such as but not limited to a sprayer, a roller coating machine, a cloth, a brush, a sponge, a polishing machine with pads, and the like. Preferably, the composition (C) is applied to the surface or at least part of the surface of the wood products by spreading using a polishing machine with pads, or by spreading or impregnating using a sponge, a brush, or a cloth.

In general, after applying the composition (C), as detailed above, to the surface or at least part of the surface of the wood products, as detailed above, the applied composition (C) may then be finally polished during at least one polishing step. The at least one polishing step can for instance be performed manually, for example by using a cloth, or by using a polishing machine with pads. In case of any excess of the applied composition (C) is present on the surface or at least part of the surface of the wood products, said excess should be removed within an appropriate timeframe during at least one removal step. The at least one removal can for instance be performed manually, for example by using a cloth, or by using a polishing machine with pads.

If desired, prior to application of the composition (C), as detailed above, the surface or at least part of the surface of the wood products is preliminary roughened up, such as by mechanical abrasion.

The composition (C) can be applied to the surface or at least part of the surface of wood products in low amounts, for instance in an amount (wet basis) from 5.0 gram per square meter [g/m², herein after] to 50.0 g/m², preferably from 5.0 g/m² to 40.0 g/m², preferably from 10.0 to 20.0 g/m², thereby resulting in thin coated layers, for instance with an average thickness from 5.0 to 50.0 micron, preferably from 5.0 to 40.0 micron, after drying and curing.

Another aspect of the present invention is a coated layer obtained by the method for treating the surface or at least part of the surface of the wood product, as detailed above, wherein said wood product is treated with the composition (C), as detailed above.

It is further understood that all definitions and preferences, as described above, equally apply for all further embodiments, as described below.

The inventors have surprisingly found that by treating the surface or at least part of the surface of wood products with the composition (C) of the present invention, as detailed above, the resulting coated layer now demonstrates a high dirt pickup resistance (DPUR) after 24 hours, while at least maintaining good film formation properties, i.e. without jeopardizing film formation, and mechanical properties in terms of hardness, as demonstrated in the experimental section. In particular, in combination with a high dirt pickup resistance (DPUR) and good film formation properties, the inventors have surprisingly found that when the composition (C) of the present invention is applied to wood products and thereby resulting in coated layers of said composition (C) on said wood products, a sufficiently high hardness can be readily obtained within a few days of application, or even after 24 hours of application, and without any further need or use of one or more isocyanate-based accelerators which are known to those skilled in the art of wood coating compositions to further improve the drying properties and kinetics of wood coating compositions (i.e. thereby obtaining a reduced drying time or an accelerated drying in presence of such one or more isocyanate-based accelerators).

The application of the composition (C) to the surface or at least part of the surface of wood products can result in thin coated layers, for instance coated layers with an average thickness from 5.0 to 50.0 micron, preferably from 5.0 to 40.0 micron, after drying and curing.

Another aspect of the present invention is a use of the composition (C), as detailed above, in the method for treating the surface or at least part of the surface of the wood product, as detailed above.

It is further understood that all definitions and preferences, as described above, equally apply for all further embodiments, as described below.

Advantageously, the composition (C), as detailed above, is storage-stable, i.e. said composition (C) can be stored over a period of several months to a year and longer without changing to an extent relevant to its use with respect to its application properties or its properties after oxidative drying.

According to the present invention, the composition (C), as detailed above, is preferably contained for storage in a container, such as a can, for example a metal can.

According to one embodiment of the composition (C) of the present invention, the composition (C), as detailed above, is a one-part system or a single-part system, for example stored as such in a container or a can, for example a metal can, as the one part.

In a one-part system, the composition (C), as detailed above, may for instance be manufactured right before the introduction of said composition (C) in said one part. Alternatively, in a one-part system, the composition (C), as detailed above, may for instance be manufactured by adding the triglyceride oil composition, as detailed above, the at least one metal-based drying agent, as detailed above, the at least one compound (S) according to general Formula (I) or according to general Formula (II), as detailed above, optionally the at least one micronized wax (Mₚ), as detailed above, optionally the at least one pigment, as detailed above, and optionally the at least one ingredient (I_{C}), as detailed above, to said one part, thereby forming the composition (C) inside said one part.

If desired, instead of storing the composition (C), as detailed above, as a one-part system, the composition (C), as detailed above, is a multi-part system comprising at least two complementary parts, said at least two complementary parts being a first complementary part and a second complementary part and optionally one or more further complementary parts, such as a two-part system consisting of the first complementary part and the second complementary part, wherein said at least two complementary parts are configured to be mixed so as to formulate the composition (C), and wherein the constituent components of the composition (C) are divided over said at least two complementary parts, wherein said at least two complementary parts are unmixed and physically separated and packaged, for example either in separate containers or in separate compartments of a single container. For said multi-part system, the mixing of the at least two complementary parts is performed at the moment of application when the first complementary part of said at least two complementary parts and the second complementary part of said at least two complementary parts and optionally the one or more further complementary parts are mixed thereby forming the composition (C).

In particular, the composition (C), as detailed above, may be a multi-part system comprising at least two complementary parts, said at least two complementary parts being a first complementary part and a second complementary part and optionally one or more further complementary parts, preferably the composition (C) is a two-part system consisting of the first complementary part and the second complementary part, wherein said at least two complementary parts are configured to be mixed so as to formulate the composition (C), wherein the first complementary part may comprise at least part of the triglyceride oil composition, as detailed above, wherein the second complementary part may comprise at least part of the at least one compound (S) according to general Formula (I) or according to general Formula (II), as detailed above, optionally wherein the remaining part of the triglyceride oil composition may be comprised in one or more complementary parts of the at least two complementary parts different from the first complementary part, optionally wherein the remaining part of the at least one compound (S) according to general Formula (I) or according to general Formula (II) may be comprised in one or more complementary parts of the at least two complementary parts different from the second complementary part, wherein the multi-part system further comprises the at least one metal-based drying agent, as detailed above, and wherein the at least one metal-based drying agent may be comprised in one or more parts selected from the group consisting of the first complementary part, the second complementary part, and optionally the one or more further complementary parts of said multi-part system.

More in particular, said multi-part system may be a two-part system consisting of a first complementary part and a second complementary part, wherein said first complementary part and said second complementary part are configured to be mixed so as to formulate the composition (C), wherein the first complementary part comprises at least part of the triglyceride oil composition, as detailed above, and optionally comprises the remaining part of the at least one compound (S) according to general Formula (I) or according to general Formula (II), as detailed above, wherein the second complementary part comprises at least part of the at least one compound (S) according to general Formula (I) or according to general Formula (II) and optionally comprises the remaining part of the triglyceride oil composition, wherein the two-part system further comprises the at least one metal-based drying agent, as detailed above, and wherein the at least one metal-based drying agent may be comprised in one or more parts selected from the first complementary part, or the second complementary part of said two-part system.

Within the context of the present invention, it is further understood that when the composition (C) is a multi-part system, such as a two-part system, as detailed above, the at least one pigment, as detailed above and when comprised in said composition (C), is preferably comprised in one or more complementary parts of said multi-part system separate or different from the one or more another complementary parts of said multi-part system comprising the at least one metal-based drying agent, as detailed above.

Within the context of the present invention, it is further understood that when the composition (C) is a multi-part system, such as a two-part system, as detailed above, the at least one ingredient (I_{C}) being one or more photoinitiators, as detailed above and when comprised in said composition (C), is preferably comprised in one or more complementary parts of said multi-part system separate or different from the one or more another complementary parts of said multi-part system comprising the at least one compound (S) according to general Formula (I) or according to general Formula (II), as detailed above.

According to an alternative embodiment of the composition (C) of the present invention, the composition (C), as detailed above, is a multi-part system comprising at least two complementary parts, said at least two complementary parts being a first complementary part and a second complementary part and optionally one or more further complementary parts, such as a two-part system consisting of the first complementary part and the second complementary part, wherein said at least two complementary parts are configured to be mixed so as to formulate the composition (C), wherein the constituent components of the composition (C) are divided over said at least two complementary parts, and wherein said at least two complementary parts are unmixed and physically separated and packaged, for example either in separate containers or in separate compartments of a single container.

According to a particular embodiment of the composition (C) of the present invention, the composition (C), as detailed above, is a multi-part system comprising at least two complementary parts, said at least two complementary parts being a first complementary part and a second complementary part and optionally one or more further complementary parts, preferably the composition (C) is a two-part system consisting of the first complementary part and the second complementary part, wherein said at least two complementary parts are configured to be mixed so as to formulate the composition (C), wherein the first complementary part comprises at least part of the triglyceride oil composition, as detailed above, wherein the second complementary part comprises at least part of the at least one compound (S) according to general Formula (I) or according to general Formula (II), as detailed above, optionally wherein the remaining part of the triglyceride oil composition is comprised in one or more complementary parts of the at least two complementary parts different from the first complementary part, optionally wherein the remaining part of the at least one compound (S) according to general Formula (I) or according to general Formula (II) is comprised in one or more complementary parts of the at least two complementary parts different from the second complementary part, wherein the multi-part system further comprises the at least one metal-based drying agent, as detailed above, and wherein the at least one metal-based drying agent is comprised in one or more parts selected from the group consisting of the first complementary part, the second complementary part, and optionally the one or more further complementary parts of said multi-part system.

According to a more particular embodiment of the composition (C) of the present invention, the composition (C), as detailed above, is a two-part system consisting of two complementary parts, said two complementary parts being a first complementary part and a second complementary part, wherein said first complementary part and said second complementary part are configured to be mixed so as to formulate the composition (C), wherein the first complementary part comprises at least part of the triglyceride oil composition, as detailed above, and optionally comprises the remaining part of the at least one compound (S) according to general Formula (I) or according to general Formula (II), as detailed above, wherein the second complementary part comprises at least part of the at least one compound (S) according to general Formula (I) or according to general Formula (II) and optionally comprises the remaining part of the triglyceride oil composition, wherein the two-part system further comprises the at least one metal-based drying agent, as detailed above, and wherein the at least one metal-based drying agent may be comprised in one or more parts selected from the first complementary part, or the second complementary part of said two-part system.

Within the context of the present invention, it is further understood that the constituent components of the composition (C), as detailed above, other than the triglyceride oil composition, as detailed above, the at least one metal-based drying agent, as detailed above, and the at least one compound (S) according to general Formula (I) or according to general Formula (II), as detailed above, may be divided over the at least two complementary parts of the multi-part system, said at least two complementary parts being a first complementary part and a second complementary part and optionally one or more further complementary parts, as detailed above, wherein said at least two complementary parts are configured to be mixed so as to formulate the composition (C). These constituent components of the composition (C) other than the triglyceride oil composition, the at least one metal-based drying agent, and the at least one compound (S) according to general Formula (I) or according to general Formula (II), may thus be comprised in one or more parts selected from the group consisting of the first complementary part, the second complementary part, and optionally the one or more further complementary parts of said multi-part system. Preferably, the at least one pigment, when comprised in the composition (C), is comprised in one or more complementary parts of said multi-part system separate or different from the one or more another complementary parts of said multi-part system comprising the at least one metal-based drying agent. Preferably, the at least one ingredient (I_{C}) being one or more photoinitiators, as detailed above and when comprised in said composition (C), is comprised in one or more complementary parts of said multi-part system separate or different from the one or more another complementary parts of said multi-part system comprising the at least one compound (S) according to general Formula (I) or according to general Formula (II).

Another aspect of the present invention is a kit of parts comprising at least two complementary parts, said at least two complementary parts being a first complementary part and a second complementary part and optionally one or more further complementary parts, wherein said at least two complementary parts are configured to be mixed so as to formulate the composition (C), as detailed above, and wherein the constituent components of the composition (C) are divided over said at least two complementary parts.

It is further understood that all definitions and preferences, as described above, equally apply for all further embodiments, as described below.

According to a particular embodiment of the present invention, the kit of parts comprises at least two complementary parts, said at least two complementary parts being a first complementary part and a second complementary part and optionally one or more further complementary parts, preferably the kit of parts of the present invention consists of the first complementary part and the second complementary part, wherein said at least two complementary parts are configured to be mixed so as to formulate the composition (C), as detailed above, wherein the first complementary part comprises at least part of the triglyceride oil composition, as detailed above, wherein the second complementary part comprises at least part of the at least one compound (S) according to general Formula (I) or according to general Formula (II), as detailed above, optionally wherein the remaining part of the triglyceride oil composition is comprised in one or more complementary parts of the at least two complementary parts different from the first complementary part, optionally wherein the remaining part of the at least one compound (S) according to general Formula (I) or according to general Formula (II) is comprised in one or more complementary parts of the at least two complementary parts different from the second complementary part, wherein the kit of parts further comprises the at least one metal-based drying agent, as detailed above, and wherein the at least one metal-based drying agent is comprised in one or more parts selected from the group consisting of the first complementary part, the second complementary part, and optionally the one or more further complementary parts of said kit of parts.

According to a more particular embodiment of the present invention, the kit of parts consists of two complementary parts, said two complementary parts being a first complementary part and a second complementary part, wherein said first complementary part and said second complementary part are configured to be mixed so as to formulate the composition (C), as detailed above, wherein the first complementary part comprises at least part of the triglyceride oil composition, as detailed above, and optionally comprises the remaining part of the at least one compound (S) according to general Formula (I) or according to general Formula (II), as detailed above, wherein the second complementary part comprises at least part of the at least one compound (S) according to general Formula (I) or according to general Formula (II) and optionally comprises the remaining part of the triglyceride oil composition, wherein the kit of parts further comprises the at least one metal-based drying agent, as detailed above, and wherein the at least one metal-based drying agent may be comprised in one or more parts selected from the first complementary part, or the second complementary part of said kit of parts.

Within the context of the present invention, it is further understood that the at least two complementary parts as comprised in the kit of parts, said at least two complementary parts being a first complementary part and a second complementary part and optionally one or more further complementary parts, said at least two complementary parts are unmixed and physically separated and packaged, for example either in separate containers or in separate compartments of a single container. Preferably, the at least two complementary parts as comprised in the kit of parts are packaged in separate containers.

It is further understood for the kit of parts of the present invention, as detailed above, that the mixing of the at least two complementary parts as comprised in the kit of parts, said at least two complementary parts being a first complementary part and a second complementary part and optionally one or more further complementary parts, wherein said at least two complementary parts are configured to be mixed so as to formulate the composition (C), as detailed above, is performed at the moment of application when the first complementary part of said at least two complementary parts and the second complementary part of said at least two complementary parts and optionally the one or more further complementary parts are mixed thereby forming the composition (C), and obtaining the technical advantages associated with said composition (C), as detailed above.

Within the context of the present invention, it is further understood that the constituent components of the composition (C), as detailed above, other than the triglyceride oil composition, as detailed above, the at least one metal-based drying agent, as detailed above, and the at least one compound (S) according to general Formula (I) or according to general Formula (II), as detailed above, may be divided over the at least two complementary parts as comprised in the kit of parts, said at least two complementary parts being a first complementary part and a second complementary part and optionally one or more further complementary parts, as detailed above, wherein said at least two complementary parts are configured to be mixed so as to formulate the composition (C), as detailed above. These constituent components of the composition (C) other than the triglyceride oil composition, the at least one metal-based drying agent, and the at least one compound (S) according to general Formula (I) or according to general Formula (II), may thus be comprised in one or more parts selected from the group consisting of the first complementary part, the second complementary part, and optionally the one or more further complementary parts of said kit of parts. Preferably, the at least one pigment, when comprised in the composition (C), is comprised in one or more complementary parts as comprised in the kit of parts separate or different from the one or more another complementary parts as comprised in the kit of parts comprising the at least one metal-based drying agent. Preferably, the at least one ingredient (I_{C}) being one or more photoinitiators, as detailed above and when comprised in said composition (C), is comprised in one or more complementary parts as comprised in the kit of parts separate or different from the one or more another complementary parts as comprised in the kit of parts comprising the at least one compound (S) according to general Formula (I) or according to general Formula (II).

Within the context of the present invention, it is further understood that the kit of parts, as detailed above, may further comprise one or more technical instructions, for example one or more technical instructions with respect to mixing the at least two complementary parts as comprised in the kit of parts, said at least two complementary parts being a first complementary part and a second complementary part and optionally one or more further complementary parts, as detailed above, wherein said at least two complementary parts are configured to be mixed so as to formulate the composition (C), as detailed above, and/or for example one or more technical instructions with respect to dosage amounts for applying the formed composition (C) to a wood product in a method for treating a surface or at least part of a surface of a wood product wherein said wood product is treated with the formed composition (C), as detailed above, and thereby resulting in a coated layer of the formed composition (C) on the surface or at least part of the surface of the wood product.

### EXAMPLES

The invention will be now described in more details with reference to the following examples, whose purpose is merely illustrative and not intended to limit the scope of the invention. All mixing ratios, contents and concentrations in this text are given in units of weight and percent by weight unless otherwise stated.

### General analytical test methods

### Dirt pickup resistance (DPUR)

The measurements regarding the dirt pickup resistance (DPUR) of the composition (C) of the present invention, as detailed above, were performed as follows:
- oak flooring boards (size boards: 190 cm x 19 cm) were first sanded using a belt sander or sanding machine equipped with a 120 grit sanding belt;
- the composition (C) was applied to one side of said oak flooring boards using a sponge;
- the composition (C) was allowed to penetrate the oak flooring boards during a period of 10 minutes; afterwards the excess material of the composition (C) was removed using a cloth until a total applied quantity of 15 ± 2 g/m² was obtained (i.e. on a wet basis). This event was verified by weighing the amount of the composition (C) applied as well as the removed excess material by using a standard scale with a reading accuracy of 0.01 g;
- the oak flooring boards were dried and cured for 24 hours at a temperature of 20 °C and a relative humidity of 50 %;
- after said period of 24 hours, the oak flooring boards were each placed in a narrow corridor and walked on at the same high frequency and intensity for a period of one week;
- prior to evaluation and measurement of the dirt pickup resistance (DPUR), the oak flooring boards were cleaned using an damp aqueous cloth and allowed to dry at 20 °C;

With regard to the evaluation and measurement of the dirt pickup resistance (DPUR), the dirt pickup resistance (DPUR) of each oak flooring board coated with the composition (C) was evaluated and measured relative to two reference compositions, said two reference compositions being both applied to the same board in a non-overlapping manner and equally following the above-described protocol for the composition (C) in order to allow an accurate comparison between each of the compositions and the two reference compositions. The coated layers of the compositions were compared visually with the naked eye and assessed in detail in terms of their dirt pickup resistance (DPUR), i.e. the extent to which the oak flooring boards treated with the compositions adsorb dirt and dust that cannot be washed off with water or analogously the ability of the composition, when applied to oak flooring boards, to repel dirt in order to maintain the original appearance as much as possible after an aqueous cleaning step.

The first reference composition was a comparative composition of the Comparative Example CEx9 *(see Table 2* - *CEx9: 99.40 wt.* % *of a triglyceride oil composition B comprising 100 wt.* % *tung oil as a first drying oil* + *0.60 wt. % of ADDITOL^{®} dry CF100, commercially available from Allnex, comprising the metal-based drying agent (i.e. thus in absence of the aminosilane compound (S)).* If the dirt pickup resistance (DPUR) of the tested composition was assessed to be worse than or equal to this first reference composition, the dirt pickup resistance (DPUR) corresponding to this tested composition was assessed or evaluated as *'poor'.*

The second reference composition was a two-component (component B = isocyanate-based accelerator) drying oil-based (component A) comparative composition Rubio Monocoat Oil Plus 2C (OP2C), commercially available from the Applicant Muylle-Facon (*i.e. thus in absence of the aminosilane compound* (S)). Rubio Monocoat Oil Plus 2C (OP2C) constitutes a two-component reference product in the market of wood coating compositions, characterized by a good dirt pickup resistance (DPUR), in particular due to the presence of the isocyanate-based accelerator component B, which is mixed with the drying oil-based component A before the resulting mixture is used to treat the surfaces of wood products, as detailed below.

The component A of Rubio Monocoat Oil Plus 2C (OP2C) also contains a drying agent within the context of the present invention. Prior to the application of Rubio Monocoat Oil Plus 2C (OP2C) to the oak flooring boards, the drying oil-based component A (i.e. said component A also containing the drying agent within the context of the present invention) was mixed with the isocyanate accelerator in a weight ratio of 3:1.

If the dirt pickup resistance (DPUR) of the tested composition was assessed to be better than the first reference composition (i.e. CEx9 as detailed above) but worse than or equal to this second reference composition, the dirt pickup resistance (DPUR) corresponding to this tested composition was assessed or evaluated as *'good'.* If the dirt pickup resistance (DPUR) of the tested composition was assessed to be better than both the first reference composition and this second reference composition, the dirt pickup resistance (DPUR) corresponding to this tested composition was assessed or evaluated as *'excellent'.*

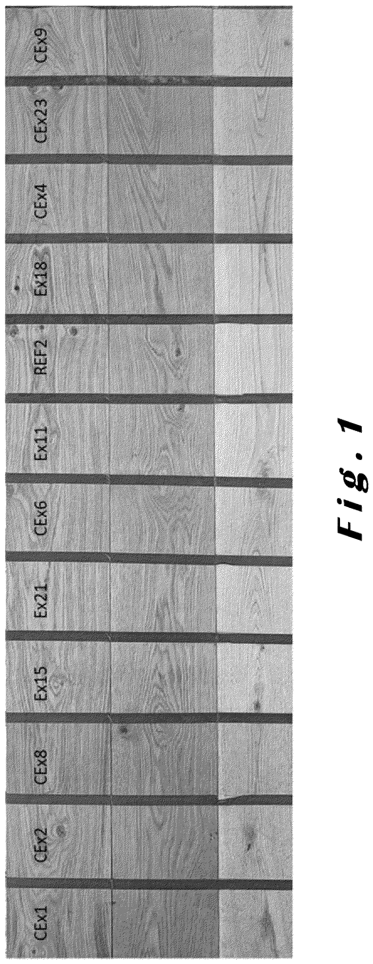

Figure 1. shows the measurement results of the dirt pickup resistance (DPUR) of Examples Ex11, Ex15, Ex18, and Ex21 according to the present invention and Comparative Examples CEx1, CEx2, CEx4, CEx6, CEx8, CEx9, and CEx23. REF2 stands for the second reference composition, as detailed above, said second reference composition being the two-component (component B = isocyanate-based accelerator) drying oil-based (component A) comparative composition Rubio Monocoat Oil Plus 2C (OP2C), commercially available from the Applicant Muylle-Facon.

### Hardness of the composition (C)

### Via pencil Gouge hardness:

The measurements regarding the pencil Gouge hardness of the composition (C) of the present invention, as detailed above, were performed according to the standard ASTM D3363-20 whereby the following method and measurement parameters were additionally taken into account:
- the composition (C) was applied to a Form P123-10N Leneta White Scrub Test Panel, commercially available from Leneta, using a suitable wire bar until a wet layer thickness of 8 ± 1 µm was obtained (i.e. on a wet basis);
- samples were dried and cured for 24 hours at a temperature of 20 °C and a relative humidity of 50 %; and
- pencils were used commercially available from Mitsubishi.

The Gouge hardness is defined by the hardest pencil that will leave the coated layer of the composition (C) uncut for a stroke length distance of at least 3.2 mm (1/8 inch).

The experimentally determined values of the pencil Gouge hardness were expressed according to the following scale ascending from softest to hardest: 6B, 5B, 4B, 3B, 2B, B, HB, F, H, 2H, 3H, 4H, 5H, 6H, 7H, 8H, and 9H.

### Film Formation

The measurements regarding the film formation of the composition (C) of the present invention, as detailed above, were performed as follows:
- the composition (C) was applied to a Form P123-10N Leneta White Scrub Test Panel, commercially available from Leneta, using a suitable wire bar until a wet layer thickness of 8 ± 1 µm was obtained (i.e. on a wet basis), at a temperature of 20 °C and a relative humidity of 50 %;
- a manual analysis was performed after every period of 10 minutes by touching the film of the applied composition (C) to assess whether it was still liquid or had solidified; and
- the time of solidification was recorded as the film formation time.

**Table 1: components used in the compositions of the Examples and in the compositions of the Comparative Examples**

| **Triglyceride oil composition** | **Company** | **Description** |
|---|---|---|
| first drying oil: tung oil | Mosselman | raw (untreated); fatty acid residue content: see [1] |
| second drying oil: linseed oil | Linagro | raw (untreated); fatty acid residue content: see [2] |

| **Metal-based drying agent** | **Company** | **Description** |
|---|---|---|
| ADDITOL^{®} dry CF100 | Allnex | manganese(Mn)-based drying agent |

| **Aminosilane compound (S) according to general Formula (I)** | **Company** | **Description** |
|---|---|---|
| (3-aminopropyl)trimethoxysilane | Hubei Jianghan New Materials Co., Ltd. | CAS: 13822-56-5 |
| (3-aminopropyl)triethoxysilane | Evonik | CAS: 919-30-2 |
| *N*-(2-aminoethyl)-(3-aminopropyl)trimethoxysilane | Wacker Chemie AG | CAS: 1760-24-3 |
| bis(3-trimethoxysilylpropyl)amine | Hubei Jianghan New Materials Co., Ltd. | CAS: 82985-35-1 |
| (*N*-phenyl-3-aminopropyl)trimethoxysilane or *N*-(3-(trimethoxysilyl)propyl)aniline | Merck (Sigma-Aldrich) | CAS: 3068-76-6 |

| **Aminosilane compound for Comparative Example CEx30** | **Company** | **Description** |
|---|---|---|
| 3-(*N*,*N*-dimethylaminopropyl)-trimethoxysilane | Merck (Sigma-Aldrich) | CAS: 2530-86-1 |

| | | |
|---|---|---|
| [1] fatty acid residue content of tung oil as the first drying oil, relative to the total weight of all fatty acid residues in tung oil: 81.28 wt. % of the fatty acid residue of eleostearic acid; 7.82 wt. % of the fatty acid residue of linoleic acid; 5.95 wt. % of the fatty acid residue of oleic acid; and 4.95 wt. % of saturated fatty acid residues (e.g. the fatty acid residue of palmitic acid). [2] fatty acid residue content of linseed oil as the second drying oil, relative to the total weight of all fatty acid residues in linseed oil: 16.02 wt. % of the fatty acid residue of linoleic acid; 53.67 wt. % of the fatty acid residue of α-linolenic acid; 19.22 wt. % of the fatty acid residue of oleic acid; and 11.09 wt. % of saturated fatty acid residues (e.g. the fatty acid residue of palmitic acid and stearic acid). | | |

### General procedure for manufacturing composition (C) according to the present invention:

Reference is hereby made to the above Table 1 with respect to the various components used in the compositions of the Examples and used in the compositions of the Comparative Examples. The exact compositions of the Examples and of the Comparative Examples, with respect to the type of components contained therein and the related quantities thereof, are described in Tables 2-4 below.

The compositions of the Examples and the compositions of the Comparative Examples, as listed in Tables 2 - 4 below, were respectively prepared by admixing and homogenizing for 5 minutes using a high intensity mixer, the mixer being equipped with a dispersion disk, at 20 °C and at atmospheric pressure.

**Table 2: Dirt pickup resistance (DPUR) + Pencil Gouge hardness coated layer + Film Formation**

| **Compound (S): (3-aminopropyl)-trimethoxysilane** → | 0.00 wt. % | 0.50 wt. % | 0.75 wt. % | 1.00 wt. % | 5.00 wt. % | 10.00 wt. % | 20.00 wt. % | 30.00 wt. % | 50.00 wt. % |
|---|---|---|---|---|---|---|---|---|---|
| **Triglyceride oil composition ↓** | | | | | | | | | |
| *triglyceride oil composition A:* 100.00 wt. % linseed oil (second drying oil) | **CEx1** | **CEx2** | **CEx3** | **CEx4** | **CEx5** | **CEx6** | **CEx7** | **CEx8** | |
| | 99.40 wt. % A | 98.90 wt. % A | 98.65 wt. % A | 98.40 wt. % A | 94.40 wt. % A | 89.40 wt. % A | 79.40 wt. % A | 69.40 wt. % A | |
| | DPUR: poor | DPUR: poor | DPUR: poor | DPUR: poor | DPUR: poor | DPUR: poor | DPUR: poor | DPUR: poor | |
| | Hardness: 6B | Hardness: 6B | Hardness: 6B | Hardness: 6B | Hardness: 6B | Hardness: 6B | Hardness: 6B | Hardness: 6B | |
| | Film formation time: >8h00 | Film formation time: >8h00 | Film formation time: >8h00 | Film formation time: >8h00 | Film formation time: >8h00 | Film formation time: >8h00 | Film formation time: >8h00 | Film formation time: >8h00 | |
| *triglyceride oil composition B:* 100.00 wt. % tung oil (first drying oil) | **CEx9** | **CEx10** | **Ex11** | **Ex12** | **Ex13** | **Ex14** | **Ex15** | **Ex16** | **CEx17** |
| | 99.40 wt. % B | 98.90 wt. % B | 98.65 wt. % B | 98.40 wt. % B | 94.40 wt. % B | 89.40 wt. % B | 79.40 wt. % B | 69.40 wt. % B | 49.40 wt. % B |
| | DPUR: poor | DPUR: poor | DPUR: good | DPUR: excellent | DPUR: excellent | DPUR: excellent | DPUR: excellent | DPUR: excellent | DPUR: poor |
| | Hardness: HB | Hardness: HB | Hardness: HB | Hardness: HB | Hardness: HB | Hardness: HB | Hardness: HB | Hardness: HB | Hardness: F |
| | Film formation time: 2h00 | Film formation time: 2h00 | Film formation time: 2h00 | Film formation time: 2h00 | Film formation time: 2h00 | Film formation time: 2h00 | Film formation time: 2h00 | Film formation time: 2h00 | Film formation time: >8h00 |

| | | | | | | | | | |
|---|---|---|---|---|---|---|---|---|---|
| (1) The compositions of the Examples and the compositions of the Comparative Examples all comprise 0.60 wt. % of ADDITOL^{®} dry CF100 comprising the metal-based drying agent, commercially available from Allnex. | | | | | | | | | |

The experimental results as shown in Table 2 and Figure 1 clearly demonstrate that using in a composition (C) a defined amount of a triglyceride oil composition comprising a defined amount of a fatty acid residue having at least three conjugated double bonds, particularly in the present examples said triglyceride oil composition originating from tung oil as a first drying oil comprising the fatty acid residue of α-eleostearic acid ((9*Z*,11*E*,13*E*)-octadeca-9,11,13-trienoic acid) as a conjugated triene fatty acid residue, further in combination with a defined amount of a drying agent, and a defined amount of (3-aminopropyl)trimethoxysilane as a compound (S) according to general Formula (I), the defined amount of the triglyceride oil composition, in particular the defined amount of the fatty acid residue having at least three conjugated double bonds comprised in said triglyceride oil composition, now synergistically interacts with the defined amount of the compound (S) according to general Formula (I), thereby resulting in a composition (C) having a high dirt pickup resistance (DPUR) after 24 hours, while at least maintaining good film formation properties, i.e. without jeopardizing film formation, and good mechanical properties in terms of hardness upon application of said compositions (C) to wood products and thereby resulting in coated layers of said compositions (C) on said wood products. In particular, in combination with a high dirt pickup resistance (DPUR), the experimental results as shown in Table 2 and Figure 1 clearly demonstrate that when the composition (C) is applied to wood products and thereby resulting in coated layers of said composition (C) on said wood products, a sufficiently high hardness can be readily obtained within 24 hours of application and without any further need or use of one or more isocyanate-based accelerators which are known to those skilled in the art of wood coating compositions to further improve the drying properties and kinetics of wood coating compositions (i.e. thereby obtaining a reduced drying time or an accelerated drying in presence of such one or more isocyanate-based accelerators).

The compositions (C) of the Examples 11 - 16 according to the present invention clearly demonstrate that the amount of the conjugated triene fatty acid residue α-eleostearic acid ((9*Z*,11*E*,13*E*)-octadeca-9,11,13-trienoic acid) as comprised in tung oil as the first drying oil comprised in the triglyceride oil composition of the composition (C) synergistically interacts with (3-aminopropyl)trimethoxysilane as the compound (S) according to general Formula (I), thereby resulting in said compositions (C) being characterized by a good to excellent dirt pickup resistance (DPUR) after 24 hours, while at least maintaining good film formation properties (film formation time: 2h00), i.e. without jeopardizing film formation, and good mechanical properties in terms of hardness (Pencil Gouge hardness: HB) upon application of said compositions (C) to wood products and thereby resulting in coated layers of said compositions (C) on said wood products.

The compositions of the Comparative Examples CEx1 - CEx8 in absence of a triglyceride oil composition comprising a defined amount of a fatty acid residue having at least three conjugated double bonds, i.e. in absence of tung oil as a first drying oil; the composition of the Comparative Example CEx9 in absence of any compound (S) according to general Formula (I); and the compositions of the Comparative Examples CEx10 and CEx17 comprising respectively an insufficient or an excessive amount of (3-aminopropyl)trimethoxysilane as the compound (S) according to general Formula (I) are only characterized by a poor dirt pickup resistance (DPUR) after 24 hours. The presented experimental data clearly demonstrate the synergetic effect between the defined amount of the triglyceride oil composition, in particular the defined amount of the fatty acid residue having at least three conjugated double bonds comprised in said triglyceride oil composition originating from tung oil as the first drying oil, and the defined amount of the compound (S) according to general Formula (I).

In addition, the compositions of the Comparative Examples CEx1 - CEx8 in absence of a triglyceride oil composition comprising a defined amount of a fatty acid residue having at least three conjugated double bonds, i.e. in absence of tung oil as a first drying oil, do not demonstrate good film formation properties (film formation time: >8h00) and good hardness after 24 hours (Pencil Gouge hardness: 6B), particularly in absence of one or more isocyanate-based accelerators.

**Table 3: Dirt pickup resistance (DPUR) + Pencil Gouge hardness coated layer + Film Formation**

| **Compound (S): (3-aminopropyl)trimethoxysilane →** | 5.00 wt. % |
|---|---|
| **Triglyceride oil composition ↓** | |
| *triglyceride oil composition A:* 100.00 wt. % linseed oil (second drying oil) | **CEx5** |
| | 94.40 wt. % A |
| | DPUR: poor |
| | Hardness: 6B |
| | Film formation time: >8h00min |
| *triglyceride oil composition B:* 100.00 wt. % tung oil (first drying oil) | **Ex13** |
| | 94.40 wt. % B |
| | DPUR: excellent |
| | Hardness: HB |
| | Film formation time: 2h00min |
| *triglyceride oil composition C:* 90.00 wt. % tung oil (first drying oil) + 10.00 wt. % linseed oil (second drying oil) | **Ex18** |
| | 94.40 wt. % C |
| | DPUR: excellent |
| | Hardness: HB |
| | Film formation time: 1h40min |
| *triglyceride oil composition D:* 80.00 wt. % tung oil (first drying oil) + 20.00 wt. % linseed oil (second drying oil) | **Ex19** |
| | 94.40 wt. % D |
| | DPUR: excellent |
| | Hardness: HB |
| | Film formation time: 1h10min |
| *triglyceride oil composition E:* 70.00 wt. % tung oil (first drying oil) + 30.00 wt. % linseed oil (second drying oil) | **Ex20** |
| | 94.40 wt. % E |
| | DPUR: excellent |
| | Hardness: HB |
| | Film formation time: 1h10min |
| *triglyceride oil composition F:* 50.00 wt. % tung oil (first drying oil) + 50.00 wt. % linseed oil (second drying oil) | **Ex21** |
| | 94.40 wt. % F |
| | DPUR: excellent |
| | Hardness: B Film |
| | formation time: 1h00min |
| *triglyceride oil composition G:* 40.00 wt. % tung oil (first drying oil) + 60.00 wt. % linseed oil (second drying oil) | **Ex22** |
| | 94.40 wt. % G |
| | DPUR: excellent |
| | Hardness: 2B |
| | Film formation time: 1h00min |
| *triglyceride oil composition H:* 30.00 wt. % tung oil (first drying oil) + 70.00 wt. % linseed oil (second drying oil) | **CEx23** |
| | 94.40 wt. % H |
| | DPUR: poor |
| | Hardness: 3B |
| | Film formation time: 1h00min |
| *triglyceride oil composition I:* 20.00 wt. % tung oil (first drying oil) + 80.00 wt. % linseed oil (second drying oil) | **CEx24** |
| | 94.40 wt. % I |
| | DPUR: poor |
| | Hardness: 3B |
| | Film formation time: 2h20min |

| | |
|---|---|
| (1) The compositions of the Examples and the compositions of the Comparative Examples all comprise 0.60 wt. % of ADDITOL^{®} dry CF100 comprising the metal-based drying agent, commercially available from Allnex. | |

The experimental results as shown in Table 3 and Figure 1 clearly demonstrate that by using in a composition (C) a defined amount of a triglyceride oil composition comprising a defined amount of a fatty acid residue having at least three conjugated double bonds, particularly in the present examples said triglyceride oil composition originating from tung oil as a first drying oil comprising the fatty acid residue of α-eleostearic acid ((9*Z*,11*E*,13*E*)-octadeca-9,11,13-trienoic acid) as a conjugated triene fatty acid residue, further in combination with a defined amount of a drying agent, and a defined amount of (3-aminopropyl)trimethoxysilane as a compound (S) according to general Formula (I), the resulting compositions (C) have an excellent dirt pickup resistance (DPUR) after 24 hours, while at least maintaining good film formation properties, i.e. without jeopardizing film formation, and good mechanical properties in terms of hardness upon application of said compositions (C) to wood products and thereby resulting in coated layers of said compositions (C) on said wood products.

The composition of the Comparative Example CEx5 in absence of a triglyceride oil composition comprising a defined amount of a fatty acid residue having at least three conjugated double bonds, i.e. in absence of tung oil as a first drying oil and solely incorporating a linseed oil based triglyceride oil composition, is only characterized by a poor dirt pickup resistance (DPUR) after 24 hours and does not demonstrate good film formation properties (film formation time: >8h00) and does not demonstrate good hardness after 24 hours (Pencil Gouge hardness: 6B), particularly in absence of one or more isocyanate-based accelerators.

More surprisingly, the inventors have found that by using in the composition (C) a defined amount of a triglyceride oil composition further comprising, i.e. in addition to a defined amount of a fatty acid residue having at least three conjugated double bonds, particularly in the present examples said triglyceride oil composition originating from tung oil as a first drying oil comprising the fatty acid residue of α-eleostearic acid ((9*Z*,11*E*,13*E*)-octadeca-9,11,13-trienoic acid) as a conjugated triene fatty acid residue, a defined amount of a fatty acid residue having at least two non-conjugated double bonds wherein the at least two non-conjugated double bonds are separated by a methylene CH₂ group, particularly in the present examples said triglyceride oil composition further originating from linseed oil as a second drying oil comprising the fatty acid residue of linoleic acid ((9*Z*,12*Z*)-octadeca-9,12-dienoic acid) having a non-conjugated 1,4-pentadiene moiety and the fatty acid residue of α-linolenic acid ((9*Z*,12*Z*,1*5*Z)-octadeca-9,12,15-trienoic acid) having a non-conjugated 1,4,7-octatriene moiety, these fatty acid residues now interact synergistically with each other, thereby resulting in the composition (C) having improved film formation properties, i.e. a reduced film formation time and hence faster film formation, while maintaining an excellent dirt pickup resistance after 24 hours and good mechanical properties in terms of hardness upon application of said composition (C) to wood products and thereby resulting in coated layers of said composition (C) on said wood products. In addition, such improved film formation properties resulting from the synergistic interaction and cooperation between these fatty acid residues have the further advantage that the composition (C), in particular the resulting coated layer of said composition (C) after application to wood products, has reduced chances of being rapidly contaminated by dirt, dust, insects, and the like, which may become trapped in the coated layer while said coated layer is not (yet) solidified and still liquid.

In particular, upon comparison with the composition of the Example Ex13 in absence of linseed oil as the second drying oil and also upon comparison with the composition of the Comparative Example CEx5 in absence of tung oil as the first drying oil, the compositions of the Examples Ex18 - Ex22 surprisingly demonstrate that the addition of linseed oil as the second drying oil comprising the fatty acid residue of linoleic acid ((9*Z*,12*Z*)-octadeca-9,12-dienoic acid) having a non-conjugated 1,4-pentadiene moiety and the fatty acid residue of α-linolenic acid ((9*Z*,12*Z*,15*Z*)-octadeca-9,12,15-trienoic acid) having a non-conjugated 1,4,7-octatriene moiety to a triglyceride oil composition already comprising tung oil as the first drying oil comprising the fatty acid residue of α-eleostearic acid ((9*Z*,11*E*,13*E*)-octadeca-9,11,13-trienoic acid) as a conjugated triene fatty acid residue, results in a synergistic interaction and cooperation between these characteristic fatty acid residues thereby resulting in the composition (C) having improved film formation properties, i.e. a reduced film formation time and hence faster film formation, while maintaining an excellent dirt pickup resistance after 24 hours and good mechanical properties in terms of hardness upon application of said composition (C) to wood products and thereby resulting in coated layers of said composition (C) on said wood products.

**Table 4: Dirt pickup resistance (DPUR) + Pencil Gouge hardness coated layer + Film Formation**

| **Triglyceride oil composition** → | *triglyceride oil composition B:* 100.00 wt. % tung oil (first drying oil) |
|---|---|
| **Compound (S)** ↓ | |
| No compound (S) | **CEx9** |
| | 99.40 wt. % B |
| | DPUR: poor |
| | Hardness: HB |
| | Film formation time: 2h00 |
| 3.00 wt. % of (3-aminopropyl)trimethoxysilane | **Ex25** |
| | 96.40 wt. % B |
| | DPUR: excellent |
| | Hardness: HB |
| | Film formation time: 2h00 |
| 3.00 wt. % of (3-aminopropyl)triethoxysilane | **Ex26** |
| | 96.40 wt. % B |
| | DPUR: excellent |
| | Hardness: HB |
| | Film formation time: 2h00 |
| 3.00 wt. % of *N*-(2-aminoethyl)-(3-aminopropyl)trimethoxysilane | **Ex27** |
| | 96.40 wt. % B |
| | DPUR: excellent |
| | Hardness: HB |
| | Film formation time: 2h00 |
| 3.00 wt. % of bis(3-trimethoxysilylpropyl)amine | **Ex28** |
| | 96.40 wt. % B |
| | DPUR: excellent |
| | Hardness: HB |
| | Film formation time: 2h00 |
| 3.00 wt. % of (*N*-phenyl-3-aminopropyl)trimethoxysilane or *N*-(3-(trimethoxysilyl)propyl)aniline | **Ex29** |
| | 96.40 wt. % B |
| | DPUR: good |
| | Hardness: HB |
| | Film formation time: 2h00 |
| 3.00 wt. % of 3-(*N*,*N*-dimethylaminopropyl)trimethoxysilane | **CEx30** |
| | 96.40 wt. % B |
| | DPUR: poor |
| | Hardness: HB |
| | Film formation time: 2h00 |

| | |
|---|---|
| (1) The compositions of the Examples and the compositions of the Comparative Examples all comprise 0.60 wt. % of ADDITOL^{®} dry CF100 comprising the metal-based drying agent, commercially available from Allnex. | |

The experimental results as shown in Table 4, in particular the compositions of the Examples Ex25 - Ex29 upon comparison with the composition of the Comparative Example CEx30 in presence of a tertiary N-terminal aminosilane compound, clearly demonstrate the importance of the presence of a defined amount of a primary *N-*terminal aminosilane compound (S) or a defined amount of a secondary *N-*terminal aminosilane compound (S) in the compositions (C) according to general Formula (I) or according to general Formula (II) in combination with said compositions (C) further comprising a defined amount of a triglyceride oil composition comprising a defined amount of a fatty acid residue having at least three conjugated double bonds, particularly in the present examples said triglyceride oil composition originating from tung oil as a first drying oil comprising the fatty acid residue of α-eleostearic acid ((9*Z*,11*E*,13*E*)-octadeca-9,11,13-trienoic acid) as a conjugated triene fatty acid residue, for obtaining high-solids wood coating compositions having an excellent dirt pickup resistance (DPUR) after 24 hours, while at least maintaining good film formation properties, i.e. without jeopardizing film formation, and good mechanical properties in terms of hardness upon application of said compositions (C) to wood products and thereby resulting in coated layers of said compositions (C) on said wood products.

## Claims

1. A high-solids wood coating composition [composition (C), herein after] comprising, relative to the total weight of the composition (C):
- from 60.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 30.00 to 85.00 wt. % of at least one fatty acid residue having at least three conjugated double bonds;
- from 0.01 to 2.00 wt. % of at least one metal-based drying agent; and
- from 0.75 to 30.00 wt. % of at least one aminosilane compound [compound (S), herein after] according to general Formula (I) 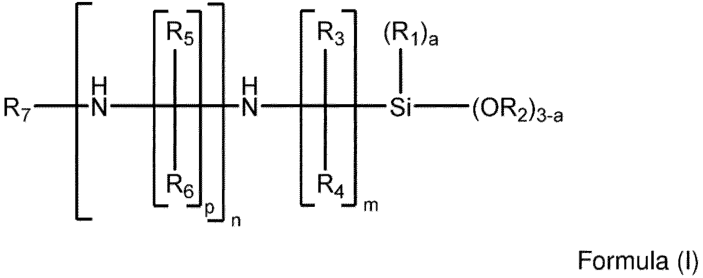 or according to general Formula (II) 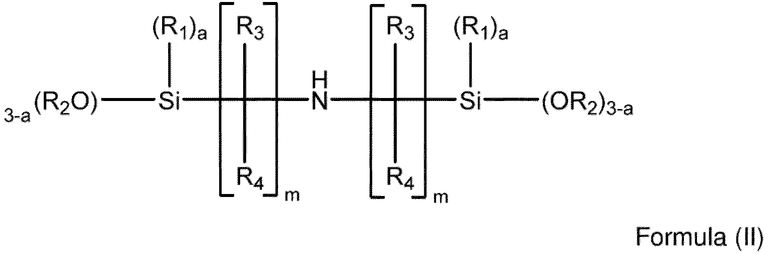 wherein
- each of a is 0, 1, or 2;
- each of m is 1, 2, 3, 4, 5, or 6;
- each of n is 0, 1, 2, 3, or 4;
- each of p is 1, 2, 3, 4, 5, or 6;
- each of R₁ is independently selected from the group consisting of C₁₋₆ alkyl, C₂₋₆ alkenyl, C₃₋₆ cycloalkyl, and C₆₋₁₀ aryl, and wherein said C₁₋₆ alkyl, C₂₋₆ alkenyl, C₃₋₆ cycloalkyl, and C₆₋₁₀ aryl are optionally substituted with one or more substituents independently selected from halo, or CF₃;
- each of R₂ is independently selected from the group consisting of hydrogen, C₁₋₆ alkyl, C₁₋₆ alkoxyalkyl, C₂₋₆ alkenyl, C₂₋₆ alkenyloxyalkyl, C₃₋₆ cycloalkyl, C₃₋₆ heterocyclyl, C₆₋₁₀ aryl, aralkyl, -CORs, -N=CR₉R₁₀, and -N=CR₁₁, and wherein each of R₈, R₉, and R₁₀, equal to or different from each other and at each occurrence, is independently C₁₋₄ alkyl, and wherein each of R₁₁ is a bivalent C₂₋₅ alkyl radical such that -N=CR₁₁ is a cycloalkyl; and wherein said C₁₋₆ alkyl, C₁₋₆ alkoxyalkyl, C₂₋₆ alkenyl, C₂₋₆ alkenyloxyalkyl, C₃₋₆ cycloalkyl, C₃₋₆ heterocyclyl, C₆₋₁₀ aryl, and aralkyl are optionally substituted with one or more substituents independently selected from halo, or CF₃;
- each of R₃, R₄, R₅, and R₆, equal to or different from each other and at each occurrence, is independently selected from hydrogen, or C₁₋₄ alkyl, and wherein said C₁₋₄ alkyl is optionally substituted with one or more substituents independently selected from halo, or CF₃;
- each of R₇ is independently selected from the group consisting of hydrogen, C₁₋₆ alkyl, C₁₋₆ alkoxyalkyl, C₂₋₆ alkenyl, C₂₋₆ alkenyloxyalkyl, C₃₋₆ cycloalkyl, C₃₋₆ heterocyclyl, C₆₋₁₀ aryl, and aralkyl, and wherein said C₁₋₆ alkyl, C₁₋₆ alkoxyalkyl, C₂₋₆ alkenyl, C₂₋₆ alkenyloxyalkyl, C₃₋₆ cycloalkyl, C₃₋₆ heterocyclyl, C₆₋₁₀ aryl, and aralkyl are optionally substituted with one or more substituents independently selected from halo, or CF₃,
wherein the composition (C) has a total solids content equal to or greater than 85.00 wt. %, relative to the total weight of the composition (C), and wherein the total solids content of the composition (C) is measured according to the standard ASTM D2369 - 20.

2. The composition (C) according to claim 1, wherein the triglyceride oil composition comprises, relative to the total weight of all fatty acid residues in the triglyceride oil composition, from 40.00 to 85.00 wt. % of the at least one fatty acid residue having at least three conjugated double bonds, preferably from 45.00 to 85.00 wt. %, more preferably from 50.00 to 85.00 wt. %, more preferably from 55.00 to 85.00 wt. %, more preferably from 60.00 to 85.00 wt. %, even more preferably from 60.00 to 80.00 wt. %, yet even more preferably from 60.00 to 75.00 wt. %, most preferably from 60.00 to 70.00 wt. %.

3. The composition (C) according to claim 1 or claim 2, wherein the at least one fatty acid residue having at least three conjugated double bonds is a conjugated triene fatty acid residue selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9,11,13-trienoic acid), α-licanic acid (4-oxo-(9*Z*,11*E*,13*E*)-octadeca-9,11,13-trienoic acid or 4-oxo-α-eleostearic acid), jacaric acid ((8*Z*,10*E*,12*Z*)-octadeca-8,10,12-trienoic acid), and catalpic acid ((9*E*,11*E*,13*Z*)-octadeca-9,11,13-trienoic acid); preferably selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11E,13Z)-octadeca-9,11,13-trienoic acid), and α-licanic acid (4-oxo-(9*Z*,11*E*,13*E*)-octadeca-9,11,13-trienoic acid or 4-oxo-α-eleostearic acid); more preferably selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), and β-calendic acid ((8*E*,10*E*,12*E*)-octadeca-8,10,12-trienoic acid); most preferably selected from fatty acid residues of α-eleostearic acid ((9*Z*,11*E*,13*E*)-octadeca-9,11,13-trienoic acid) or β-eleostearic acid ((9*E*,11*E*,13*E*)-octadeca-9,11,13-trienoic acid).

4. The composition (C) according to any one of claims 1 to 3, wherein the triglyceride oil composition comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; preferably selected from the group consisting of tung oil, calendula seed oil, pomegranate seed oil, and oiticica oil; more preferably selected from tung oil, or calendula seed oil; most preferably, the at least one first drying oil is tung oil.

5. The composition (C) according to any one of claims 1 to 4, wherein the triglyceride oil composition further comprises, relative to the total weight of all fatty acid residues in the triglyceride oil composition, from 10.00 to 50.00 wt. % of at least one fatty acid residue having at least two non-conjugated double bonds, wherein the at least two non-conjugated double bonds are separated by a methylene CH₂ group, preferably from 10.00 to 40.00 wt. %, preferably from 11.00 to 35.00 wt. %, more preferably from 12.00 to 30.00 wt. %, even more preferably from 13.00 to 25.00 wt. %, yet even more preferably from 14.00 to 22.00 wt. %.

6. The composition (C) according to claim 5, wherein the at least one fatty acid residue having at least two non-conjugated double bonds, wherein the at least two non-conjugated double bonds are separated by a methylene CH₂ group, is a fatty acid residue having a non-conjugated moiety selected from 1,4-pentadiene or 1,4,7-octatriene and wherein said at least one fatty acid residue is selected from the group consisting of fatty acid residues of linoleic acid ((9*Z*,12*Z*)-octadeca-9,12-dienoic acid), eicosadienoic acid ((11*Z*,14*Z*)-icosa-11,14-dienoic acid), (5*Z,*11*Z*,14*Z*)-icosa-5,11,14-trienoic acid, (7*Z*,10*Z*,13*Z*)-hexadeca-7,10,13-trienoic acid, α-linolenic acid ((9*Z*,12*Z*,15*Z*)-octadeca-9,12,15-trienoic acid), γ-linolenic acid ((6*Z*,9*Z*,12*Z*)-octadeca-6,9,12-trienoic acid), (11*Z*,14*Z*,17*Z*)-icosa-11,14,17-trienoic acid, and (8*Z*,11*Z*,14*Z*)-icosa-8,11,14-trienoic acid; preferably selected from fatty acid residues of linoleic acid ((9*Z*,12*Z*)-octadeca-9,12-dienoic acid), or α-linolenic acid ((9*Z*,12*Z*,15*Z*)-octadeca-9,12,15-trienoic acid).

7. The composition (C) according to claim 5 or claim 6, wherein the triglyceride oil composition further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil; preferably selected from the group consisting of linseed oil, sunflower oil, safflower oil, soybean oil, and walnut oil; most preferably, the at least one second drying oil is linseed oil.

8. The composition (C) according to any one of claims 1 to 7, wherein the composition (C) comprises, relative to the total weight of the composition (C), the triglyceride oil composition in an amount from 65.00 to 99.00 wt. %, preferably from 70.00 to 99.00 wt. %, more preferably from 75.00 to 95.00 wt. %, even more preferably from 78.00 to 95.00 wt. %.

9. The composition (C) according to any one of claims 1 to 8, wherein the at least one drying metal-based agent is a metal-based salt wherein the metal cation component is selected from the group consisting of manganese (Mn), iron (Fe), cobalt (Co), zirconium (Zr), and calcium (Ca); wherein the anion component is selected from the group consisting of halides, nitrates, sulphates, acetoacetonates, and carboxylates; and wherein the metal-based salt is optionally complexed with at least one nitrogen donor ligand selected from the group consisting of monodentate, bidentate, tridentate, tetradentate, pentadentate, and hexadentate nitrogen donor ligands.

10. The composition (C) according to any one of claims 1 to 9, wherein the compound (S) according to general Formula (I) or according to general Formula (II) is selected from the group consisting of (3-aminopropyl)-*tris*(methoxyethoxyethoxy)silane; (3-aminopropyl)silanetriol; *N-*(2-aminoethyl)-(3-aminopropyl)silantriol; (3-aminopropyl)trimethoxysilane; (3-aminopropyl)triethoxysilane; (3-aminopropyl)dimethoxymethylsilane; (3-aminopropyl)diethoxymethylsilane; (3-aminopropyl)dimethylmethoxysilane; (3-aminopropyl)dimethylethoxysilane; (3-aminopropyl)dimethoxyisopropylsilane; (3-aminopropyl)diethoxyisopropylsilane; (3-aminopropyl)diisopropylmethoxysilane; (3-aminopropyl)diisopropylethoxysilane; (4-aminobutyl)trimethoxysilane; (4-aminobutyl)triethoxysilane; (4-aminobutyl)dimethoxymethylsilane; (4-aminobutyl)diethoxymethylsilane; (4-aminobutyl)dimethylmethoxysilane; (4-aminobutyl)dimethylethoxysilane; (4-aminobutyl)dimethoxyisopropylsilane; (4-aminobutyl)diethoxyisopropylsilane; (4-aminobutyl)diisopropylmethoxysilane; (4-aminobutyl)diisopropylethoxysilane; (4-amino-3,3-dimethylbutyl)trimethoxysilane; (4-amino-3,3-dimethylbutyl)triethoxysilane; (4-amino-3,3-dimethylbutyl)dimethoxymethylsilane; (4-amino-3,3-dimethylbutyl)diethoxymethylsilane; (4-amino-3,3-dimethylbutyl)dimethylmethoxysilane; (4-amino-3,3-dimethylbutyl)dimethylethoxysilane; (4-amino-3,3-dimethylbutyl)dimethoxyisopropylsilane; (4-amino-3,3-dimethylbutyl)diethoxyisopropylsilane; (4-amino-3,3-dimethylbutyl)diisopropylmethoxysilane; (4-amino-3,3-dimethylbutyl)diisopropylethoxysilane; *N-*(2-aminoethyl)-(3-aminopropyl)trimethoxysilane; *N*-(2-aminoethyl)-(3-aminopropyl)triethoxysilane; *N*-(2-aminoethyl)-(3-aminopropyl)dimethoxymethylsilane; *N-*(2-aminoethyl)-(3-aminopropyl)diethoxymethylsilane; *N-*(2-aminoethyl)-(3-aminopropyl)dimethylmethoxysilane; *N-*(2-aminoethyl)-(3-aminopropyl)dimethylethoxysilane; *N-*(2-aminoethyl)-(3-aminopropyl)dimethoxyisopropylsilane; *N-*(2-aminoethyl)-(3-aminopropyl)diethoxyisopropylsilane; *N-*(2-aminoethyl)-(3-aminopropyl)diisopropylmethoxysilane; *N-*(2-aminoethyl)-(3-aminopropyl)diisopropylethoxysilane; *N-*(2-aminoethyl)-(3-aminoisobutyl)trimethoxysilane; *N-*(2-aminoethyl)-(3-aminoisobutyl)triethoxysilane; *N-*(2-aminoethyl)-(3-aminoisobutyl)dimethoxymethylsilane; *N-*(2-aminoethyl)-(3-aminoisobutyl)diethoxymethylsilane; *N-*(2-aminoethyl)-(3-aminoisobutyl)dimethylmethoxysilane; *N-*(2-aminoethyl)-(3-aminoisobutyl)dimethylethoxysilane; *N-*(2-aminoethyl)-(3-aminoisobutyl)dimethoxyisopropylsilane; *N-*(2-aminoethyl)-(3-aminoisobutyl)diethoxyisopropylsilane; *N-*(2-aminoethyl)-(3-aminoisobutyl)diisopropylmethoxysilane; *N-*(2-aminoethyl)-(3-aminoisobutyl)diisopropylethoxysilane; *N-*(2-aminoethyl)-(2-aminoethyl)-(3-aminopropyl)trimethoxysilane; *N-*(2-aminoethyl)-(2-aminoethyl)-(3-aminopropyl)triethoxysilane; *N-*(2-aminoethyl)-(2-aminoethyl)-(3-aminopropyl)dimethoxymethylsilane; *N-*(2-aminoethyl)-(2-aminoethyl)-(3-aminopropyl)diethoxymethylsilane; *N-*(2-aminoethyl)-(2-aminoethyl)-(3-aminopropyl)dimethylmethoxysilane; *N-*(2-aminoethyl)-(2-aminoethyl)-(3-aminopropyl)dimethylethoxysilane; *N*-(2-aminoethyl)-(2-aminoethyl)-(3-aminopropyl)dimethoxyisopropylsilane; *N-*(2-aminoethyl)-(2-aminoethyl)-(3-aminopropyl)diethoxyisopropylsilane; *N*-(2-aminoethyl)-(2-aminoethyl)-(3-aminopropyl)diisopropylmethoxysilane; *N*-(2-aminoethyl)-(2-aminoethyl)-(3-aminopropyl)diisopropylethoxysilane; *N*-(6-aminohexyl)aminomethyltrimethoxysilane; *N*-(6-aminohexyl)aminomethyltriethoxysilane; *N*-(6-aminohexyl)-(3-aminopropyl)trimethoxysilane; *N*-(6-aminohexyl)-(3-aminopropyl)triethoxysilane; 1-amino-2-(trimethoxysilyl)propane; 1-amino-2-(triethoxysilyl)propane; 1-amino-2-(dimethoxymethylsilyl)propane; 1-amino-2-(diethoxymethylsilyl)propane; 1-amino-2-(dimethylmethoxysilyl)propane; 1-amino-2-(dimethylethoxysilyl)propane; 1-amino-2-(dimethoxyisopropylsilyl)propane; 1-amino-2-(diethoxyisopropylsilyl)propane; 1-amino-2-(diisopropylmethoxysilyl)propane; 1-amino-2-(diisopropylethoxysilyl)propane; (*N-*phenylaminomethyl)trimethoxysilane; (N phenylaminomethyl)triethoxysilane; (*N-*phenylaminomethyl)dimethoxymethylsilane; (*N-*phenylaminomethyl)diethoxymethylsilane; (*N-*phenylaminomethyl)dimethylmethoxysilane; (*N-*phenylaminomethyl)dimethylethoxysilane; (*N-*cyclohexylaminomethyl)trimethoxysilane; (*N-*cyclohexylaminomethyl)triethoxysilane; (*N-*cyclohexylaminomethyl)dimethoxymethylsilane; (*N-*cyclohexylaminomethyl)diethoxymethylsilane; (*N-*cyclohexylaminomethyl)dimethylmethoxysilane; (*N-*cyclohexylaminomethyl)dimethylethoxysilane; (*N*-methyl-3-aminopropyl)trimethoxysilane; (*N-*methyl-3-aminopropyl)triethoxysilane; (*N-*methyl-3-aminopropyl)dimethoxymethylsilane; (*N*-methyl-3-aminopropyl)diethoxymethylsilane; (*N*-methyl-3-aminopropyl)dimethylmethoxysilane; (*N*-methyl-3-aminopropyl)dimethylethoxysilane; (*N-*ethyl-3-aminopropyl)trimethoxysilane; (*N-*ethyl-3-aminopropyl)triethoxysilane; (N ethyl-3-aminopropyl)dimethoxymethylsilane; (*N*-ethyl-3-aminopropyl)diethoxymethylsilane; (*N-*ethyl-3-aminopropyl)dimethylmethoxysilane; (*N*-ethyl-3-aminopropyl)dimethylethoxysilane; (*N*-butyl-3-aminopropyl)trimethoxysilane; (*N-*butyl-3-aminopropyl)triethoxysilane; (*N*-butyl-3-aminopropyl)dimethoxymethylsilane; (*N*-butyl-3-aminopropyl)diethoxymethylsilane; (*N*-butyl-3-aminopropyl)dimethylmethoxysilane; (*N*-butyl-3-aminopropyl)dimethylethoxysilane; (*N-tert*-butyl-3-aminopropyl)trimethoxysilane; *(N-tert*-butyl-3-aminopropyl)triethoxysilane; (*N-tert-*butyl-3-aminopropyl)dimethoxymethylsilane; (*N-tert*-butyl-3-aminopropyl)diethoxymethylsilane; (*N-tert*-butyl-3-aminopropyl)dimethylmethoxysilane; (*N-tert*-butyl-3-aminopropyl)dimethylethoxysilane; (*N-*cyclohexyl-3-aminopropyl)trimethoxysilane; (*N-*cyclohexyl-3-aminopropyl)triethoxysilane; (*N-*cyclohexyl-3-aminopropyl)dimethoxymethylsilane; (*N-*cyclohexyl-3-aminopropyl)diethoxymethylsilane; (*N*-cyclohexyl-3-aminopropyl)dimethylmethoxysilane; (*N*-cyclohexyl-3-aminopropyl)dimethylethoxysilane; (*N-*phenyl-3-aminopropyl)trimethoxysilane; (*N-*phenyl-3-aminopropyl)triethoxysilane; (*N*-phenyl-3-aminopropyl)dimethoxymethylsilane; (*N*-phenyl-3-aminopropyl)diethoxymethylsilane; (*N*-phenyl-3-aminopropyl)dimethylmethoxysilane; (*N*-phenyl-3-aminopropyl)dimethylethoxysilane; (*N-*allyl-3-aminopropyl)trimethoxysilane; (*N-*allyl-3-aminopropyl)triethoxysilane; (*N-*allyl-3-aminopropyl)dimethoxymethylsilane; (*N-*allyl-3-aminopropyl)diethoxymethylsilane; (*N-*allyl-3-aminopropyl)dimethylmethoxysilane; (*N-*allyl-3-aminopropyl)dimethylethoxysilane; (*N*-ethyl-3-aminoisobutyl)trimethoxysilane; (*N*-ethyl-3-aminoisobutyl)triethoxysilane; (*N-*ethyl-3-aminoisobutyl)dimethoxymethylsilane; (*N-*ethyl-3-aminoisobutyl)diethoxymethylsilane; (*N*-ethyl-3-aminoisobutyl)dimethylmethoxysilane; (*N-*ethyl-3-aminoisobutyl)dimethylethoxysilane; *N-*(2-*N-*benzylaminoethyl)-(3-aminopropyl)trimethoxysilane; *N-*(2-*N-*benzylaminoethyl)-(3-aminopropyl)triethoxysilane; bis(3-trimethoxysilylpropyl)amine; bis(3-triethoxysilylpropyl)amine; bis(3-methyldimethoxysilylpropyl)amine; bis(3-methyldiethoxysilylpropyl)amine; bis(3-dimethylmethoxysilylpropyl)amine; and bis(3-dimethylethoxysilylpropyl)amine.

11. The composition (C) according to any one of claims 1 to 10, wherein the at least one compound (S) according to general Formula (I) or according to general Formula (II) is a compound chosen among those of Formula (I₁) [compound (S_{I.1}), herein after], Formula (I₂) [compound (S_{I.2}), herein after], and Formula (II₁) [compound (S_{II.1}), herein after]: 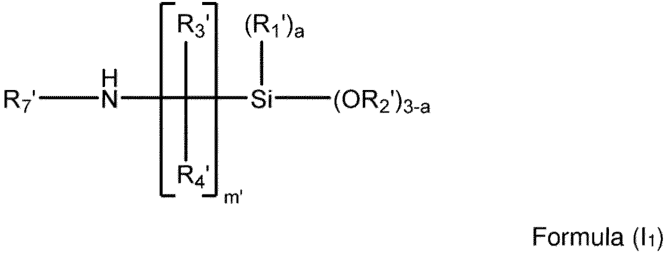 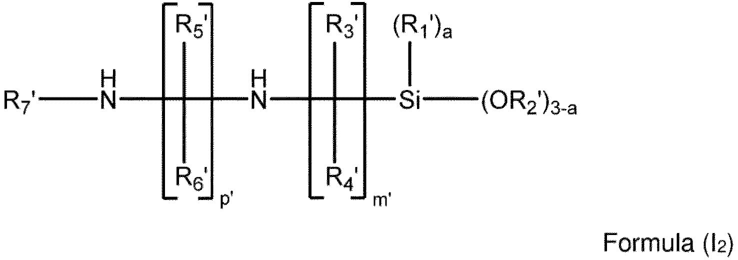 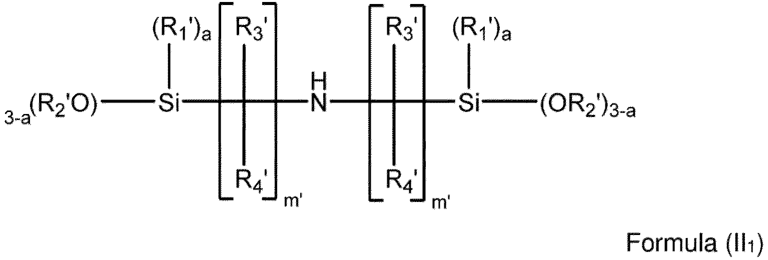 wherein
- each of a is 0, 1, or 2;
- each of m' is 1, 2, 3, or 4;
- each of p' is 2, or 6;
- each of R₁' is independently selected from the group consisting of C₁₋₄ alkyl, C₂₋₄ alkenyl, C₃₋₆ cycloalkyl, and wherein said C₁₋₄ alkyl, C₂₋₄ alkenyl, and C₃₋₆ cycloalkyl are optionally substituted with one or more substituents independently selected from halo, or CF₃;
- each of R₂' is independently selected from the group consisting of hydrogen, C₁₋₄ alkyl, and C₁₋₆ alkoxyalkyl, and wherein said C₁₋₄ alkyl, and C₁₋₆ alkoxyalkyl are optionally substituted with one or more substituents independently selected from halo, or CF₃;
- each of R₃', R₄', R₅', and R₆', equal to or different from each other and at each occurrence, is independently selected from the group consisting of hydrogen, methyl, ethyl, propyl, and isopropyl; and
- each of R₇' is independently selected from the group consisting of hydrogen, C₁₋₄ alkyl, C₂₋₄ alkenyl, C₃₋₆ cycloalkyl, C₆₋₁₀ aryl, and aralkyl, and wherein said C₁₋₄ alkyl, C₂₋₄ alkenyl, C₃₋₆ cycloalkyl, C₆₋₁₀ aryl, and aralkyl are optionally substituted with one or more substituents independently selected from halo, or CF₃.

12. The composition (C) according to any one of claims 1 to 11, wherein the at least one compound (S) according to general Formula (I) or according to general Formula (II) is a compound chosen among those of Formula (I_{1'}) [compound (S_{I.1'}), herein after], Formula (I_{2'}) [compound (S_{I.2'}), herein after], and Formula (II_{1'}) [compound (S_{II.1'}), herein after]: 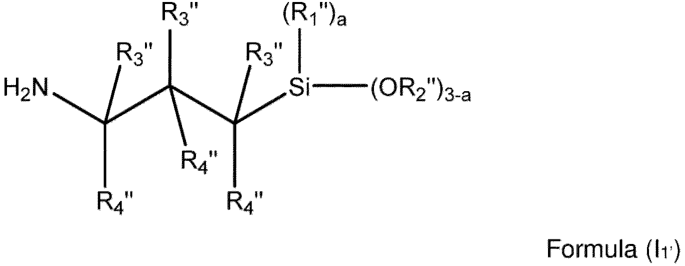 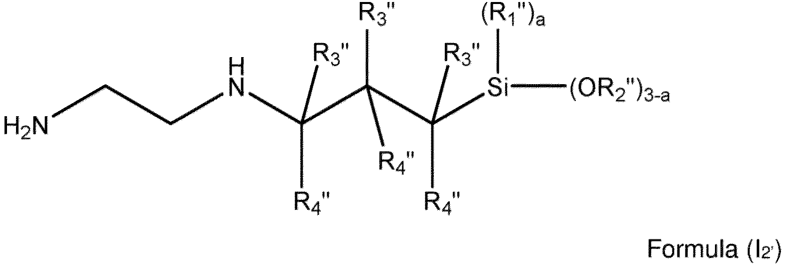 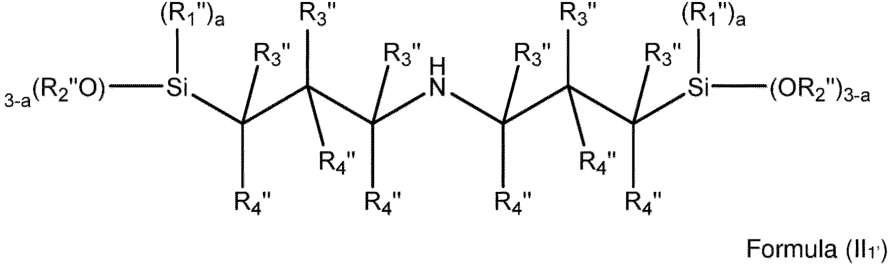 wherein
- each of a is 0, 1, or 2;
- each of R₁" is independently selected from C₁₋₄ alkyl, and wherein said C₁₋₄ alkyl is optionally substituted with one or more substituents independently selected from halo, or CF₃;
- each of R₂" is independently selected from C₁₋₄ alkyl, and wherein said C₁₋₄ alkyl is optionally substituted with one or more substituents independently selected from halo, or CF₃; and
- each of R₃", and R₄", equal to or different from each other and at each occurrence, is independently selected from hydrogen, or methyl.

13. The composition (C) according to any one of claims 1 to 12, wherein the composition (C) comprises, relative to the total weight of the composition (C), the compound (S) according to general Formula (I) or according to general Formula (II) in an amount from 0.75 to 25.00 wt. %, preferably from 0.80 to 20.00 wt. %, more preferably from 0.80 to 15.00 wt. %, even more preferably from 0.90 to 10.00 wt. %, yet even more preferably from 0.90 to 7.50 wt. %, most preferably from 1.00 to 5.00 wt. %.

14. The composition (C) according to any one of claims 1 to 13, wherein the composition (C) has a total solids content equal to or greater than 90.00 wt. %, preferably equal to or greater than 92.50 wt. %, more preferably equal to or greater than 95.00 wt. %, more preferably equal to or greater than 97.00 wt. %, even more preferably equal to or greater than 99.00 wt. %, wherein all wt. % are relative to the total weight of the composition (C), and wherein the total solids content of the composition (C) is measured according to the standard ASTM D2369 - 20.

15. A method for the manufacturing of the composition (C) according to any one of claims 1 to 14, wherein the method comprises the steps of intimate admixing:
- from 60.00 to 99.00 % wt. % of the triglyceride oil composition;
- from 0.01 to 2.00 wt. % of the at least one metal-based drying agent;
- from 0.75 to 30.00 wt. % of the at least one compound (S) according to general Formula (I) or according to general Formula (II);
wherein all wt. % are relative to the total weight of the composition (C).

16. A method of treating a surface or at least part of a surface of a wood product wherein said wood product is treated with the composition (C) according to any one of claims 1 to 14.

17. A kit of parts comprising at least two complementary parts, said at least two complementary parts being a first complementary part and a second complementary part and optionally one or more further complementary parts, wherein said at least two complementary parts are configured to be mixed so as to formulate the composition (C) according to any one of claims 1 to 14, and wherein the constituent components of the composition (C) are divided over said at least two complementary parts.
